# EUROPEAN PATENT APPLICATION

(11) **EP 4 760 499 A1**
(43) Date of publication of application: **17.06.2026**
(21) Application number: 24937805.0
(22) Date of filing: 24.12.2024
(51) Int. Cl.: G06F 9/451

(54) **INTERFACE DISPLAY METHOD AND ELECTRONIC DEVICE**

(30) Priority: 29.04.2024 CN 202410536670; 14.11.2024 CN 202411630840
(71) Applicant: HUAWEI TECHNOLOGIES CO., LTD., Shenzhen 518129 (CN)
(72) Inventor: FAN, Xinxin, Shenzhen, Guangdong 518129 (CN); WANG, Yilun, Shenzhen, Guangdong 518129 (CN); ZHANG, Chao, Shenzhen, Guangdong 518129 (CN); BIAN, Sucheng, Shenzhen, Guangdong 518129 (CN); SHI, Weizhi, Shenzhen, Guangdong 518129 (CN); ZHANG, Li, Shenzhen, Guangdong 518129 (CN); LI, Dongliang, Shenzhen, Guangdong 518129 (CN)
(74) Representative: Pfenning, Meinig & Partner mbB
(86) International application number: PCT/CN2024/141857
(87) International publication number: WO 2025/227779

(57) **Abstract**

An interface display method and an electronic device are provided. In the method, in a scenario where the electronic device displays a plurality of window interfaces, a screen of the electronic device may be divided into a primary display region and a secondary display region through a user operation. In response to the user operation, a window interface currently of interest or being processed may be displayed in the primary display region, and all or a part of remaining window interfaces are displayed in the secondary display region in a spatial window form. In this way, displaying the window interface in the primary display region helps enhance users' attention to content in the primary display region, and displaying all or a part of the remaining window interfaces in the secondary display region in the spatial window form helps retain user' residual attention on the secondary display region and increase more content of the window interface displayed in the secondary display region. This can improve efficiency and continuity of multi-task processing.

## Description

### CROSS-REFERENCE TO RELATED APPLICATIONS

This application claims priorities to Chinese Patent Application No. 202410536670.9, filed with the China National Intellectual Property Administration on April 29, 2024 and entitled "INTERFACE DISPLAY METHOD AND ELECTRONIC DEVICE", and to Chinese Patent Application No. 202411630840.6, filed with the China National Intellectual Property Administration on November 14, 2024 and entitled "INTERFACE DISPLAY METHOD AND ELECTRONIC DEVICE", both of which are incorporated herein by reference in their entireties.

### TECHNICAL FIELD

Embodiments of this application relate to the field of electronic device technologies, and in particular, to an interface display method and an electronic device.

### BACKGROUND

With the development and progress of technologies, functions of electronic devices has gradually improved and diversified, with an increasing quantity of applications and a growing prevalence of multi-task processing scenarios. Currently, methods for enhancing users' multi-task processing on electronic devices include split-screen collaboration, cross-application drag-and-drop, multi-application switching, multi-instance processing on a single application, and the like.

However, due to limitations of screen display sizes of the electronic devices, how to improve interface display effect in the multi-task processing scenarios is worth considering.

### SUMMARY

Embodiments of this application provide an interface display method and an electronic device, to provide a new split-screen interface interaction manner, thereby improving efficiency and use experience of multi-task processing performed by a user.

According to a first aspect, an embodiment of this application provides an interface display method, and the method may be applied to an electronic device. In the method, a first operation on a first interface is detected, where the first interface includes M window interfaces, and M is a positive integer greater than 1; and a second interface is displayed in response to the first operation, where the second interface includes a first primary display region and a first secondary display region, a size of the first primary display region is greater than a size of the first secondary display region, the first primary display region is used to display a first window interface, and the first secondary display region is used to display a window interface other than the first window interface in the M window interfaces. In the first secondary display region, the window interface other than the first window interface is displayed in a spatial window form, where the spatial window form is a form of flipping a window interface toward an inner side of a screen of the electronic device.

Optionally, the M window interfaces may belong to a same application, for example, may be window interfaces of different instances of the same application, or may be window interfaces of different atomic services belonging to a same application; or may belong to different applications. In a scenario of three or more window interfaces, the M window interfaces may be a combination of at least two window interfaces belonging to a first application and at least one window interface belonging to a second application. In addition, the first interface may be a split-screen interface obtained based on the M window interfaces.

In the method, sizes of different display regions are set to be different on the screen, and a primary display region with a large display size is displayed, so that more attention can be paid to display content in the primary display region. In addition, another window interface is displayed in a secondary display region with a small size in the spatial window form, so that more content of the window interface can be displayed in the secondary display region, and residual attention of the user on the secondary display region can be retained, thereby improving efficiency and continuity of multi-task processing, and improving user interaction experience.

Optionally, each window interface is used to process a task of the window interface. For example, an editing interface of a memo is displayed in the primary display region, and is used to perform an editing task of the memo; and a window interface of an album is displayed in the secondary display region, and is used to display a display task of a photo. A plurality of window interfaces are displayed on the screen in a form of the primary display region and the secondary display region, so that not only it is convenient to drag a photo from the album to the memo, but also it is convenient to perform editing processing because an editing region of the editing interface of the memo displayed in the primary display region is large.

In a possible design, the method further includes: detecting a first selection operation on a second window interface in the first secondary display region, where the second window interface is one of other window interfaces; and displaying a third interface in response to the first selection operation, where the third interface includes a second primary display region and a second secondary display region, a size of the second primary display region is greater than a size of the second secondary display region, the second primary display region is used to display the second window interface, and the second secondary display region is used to display a window interface other than the second window interface in the M window interfaces. In the second secondary display region, the window interface other than the second window interface is displayed in the spatial window form. Optionally, the first selection operation may be a tap operation on the second window interface, or may be a drag operation on an associated control of the second window interface, or may be a sliding operation on the second window interface. An operation form that indicates the first selection operation is not limited in this application.

In this design, the primary display region and the secondary display region with different sizes are set on the screen, and a window interface displayed in the primary display region may be switched by performing a selection operation on a window interface of the secondary display region, so that requirements in more task processing scenarios can be met, and efficiency of window interface switching can be improved.

In a possible design, a display location of the second primary display region is the same as a display location of the first primary display region; or a display location of the second primary display region is different from a display location of the first primary display region.

In this design, when different window interfaces are switched and displayed in the primary display region, different window interfaces may be switched in the fixed primary display region, or a display location of the primary display region may correspond to a relative location of a corresponding window interface based on information such as a user operation and/or a relative location relationship between a plurality of window interfaces. In this way, editing requirements in a plurality of scenarios can be met, and interaction diversity can be improved.

In the foregoing design, the display location of the primary display region may be determined in a plurality of manners, and the manners may include but are not limited to one of the following manners:
Manner A: The display location of the first primary display region is preset. For example, the display location of the first primary display region may be a preset fixed location, for example, may be fixed at a location on a left side of the screen, a location on a right side of the screen, or a location in the middle of the screen.
Manner B: The display location of the first primary display region is determined based on the first operation.

Optionally, the display location of the first primary display region varies with a specific operation direction of the first operation. For a specific implementation, refer to detailed descriptions in the following content. Details are not described herein.

Optionally, the first operation may alternatively be an operation in combination with a control. For example, there are two controls, one control is used to indicate that the display location of the first primary display region is on the left and a display location of the first secondary display region is on the right, and the other control is used to indicate that the display location of the first primary display region is on the right and the display location of the first secondary display region is on the left. In this way, the display location of the first primary display region varies with the first operation performed on different controls. It may be understood that there may be a correspondence between a display location of a display region and a relative location of a window interface. For example, when the display location of the first primary display region is on the left, the first window interface displayed in the first primary display region may be located on a left side of another window interface. For another example, when the display location of the first primary display region is on the right, the first window interface displayed in the first primary display region may be located on a right side of another window interface.

It may be further understood that the user may perform a corresponding first operation in a specific operation direction or tap a corresponding control based on a window interface that the user expects to display in the first primary display region.

In this design, the display location of the primary display region is designed, so that requirements of a plurality of service scenarios can be met, and use habits of different users can also be met. It may be understood that different manners may provide a selection for the user in an entry such as a setting interface, so that the user can select, based on a use habit, a manner of determining the display location of the primary display region, thereby improving diversity of interface display.

Based on the foregoing Manner B, in a possible design, there may be one or a combination of the following scenarios based on different specific operation directions of the first operation.

Scenario A1: When the first operation is a rightward sliding operation, the display location of the first primary display region is located on a left side of the second interface, and the display location of the first secondary display region is located on a right side of the second interface.

For example, the first interface may be an interface including a plurality of window interfaces, and an adjustment control may be included in the middle of two window interfaces. A rightward sliding operation on the adjustment control may be considered that the user expects that a display region on the left side of the screen is larger in size. Therefore, the display region on the left side of the screen may be understood as the primary display region. Correspondingly, a display region on the right side of the screen is adaptively understood as the secondary display region. In this way, an editing operation performed by the user on a window interface and an adjustment operation performed by the user on a window interface can be distinguished by adjusting the control, thereby improving accuracy of interface interaction.

In another example, in the first interface, the electronic device may also detect a rightward sliding operation of the user in a specified region, so that the electronic device may determine that the user expects to adjust a size of a display region of an interface. In this way, accuracy of interface interaction can also be ensured by predefining a function of the first operation.

Scenario A2: When the first operation is a leftward sliding operation, the display location of the first primary display region is located on the right side of the second interface, and the display location of the first secondary display region is located on the left side of the second interface.

For beneficial effect of the scenario A2, refer to the beneficial effect of the scenario A1. Details are not described herein again.

Optionally, the sliding operation may be a sliding operation on an associated control of a window interface, or may be a sliding operation on the window interface. This is not limited in this application.

It may be understood that, when the first interface includes two window interfaces, one window interface is displayed in the primary display region, and the other window interface is displayed in the secondary display region; or when the first interface includes three or more window interfaces, one window interface is displayed in the primary display region, and at least two remaining window interfaces are automatically displayed in the secondary display region.

In this design, the screen is divided into one primary display region and one secondary display region based on a specific operation direction of the first operation, so that primary/secondary display effect of the electronic device on a plurality of window interfaces can be improved.

Based on the foregoing Manner B, in a scenario in which the M window interfaces are at least three window interfaces, in another possible design, the following scenarios may further exist based on different specific operation directions of the first operation.

For example, the first interface generally includes a first display region and a second display region, the first display region is used to display a third window interface, and the second display region is used to display, in a stacked form, window interfaces other than the third window interface in the M window interfaces. Optionally, the first display region and the second display region that are included in the first interface may have a same size, that is, may be understood as a common dual split-screen interface.

Scenario B1: When the first operation is a rightward sliding operation, and the first display region is displayed on the left side, the display location of the first primary display region is on the left side of the second interface, and the display location of the first secondary display region is on the right side of the second interface. In this scenario, the first window interface is the third window interface.

It may be understood that the rightward sliding operation may be considered as that the user expects a display region on the left side of the screen to have a larger size, and when the left display region includes one window interface, that is, the third window interface, the display region on the left side of the screen may be understood as the primary display region. Correspondingly, a display region on the right side of the screen is adaptively understood as the secondary display region. In this case, a plurality of remaining window interfaces are automatically displayed in the secondary display region.

Scenario B2: When the first operation is a rightward sliding operation, and the second display region is displayed on the left side, the display location of the first primary display region is in the middle of the second interface, the second interface includes two first secondary display regions, and display locations of the two first secondary display regions are respectively on the left side and the right side of the second interface. In this scenario, the first window interface is a window interface displayed at the top in the second display region. It may be understood that the third window interface displayed in the first display region on the right side is automatically displayed in a right first secondary display region, and one or more window interfaces stacked at the bottom in the second display region are automatically displayed in a left first secondary display region.

It may be understood that the rightward sliding operation may be considered that the user expects the display region on the left side of the screen to have a larger size, and when the left display region includes a plurality of window interfaces, the display location of the primary display region may be determined to be in a middle location, and the primary display region is used to display a window interface located at the top of the plurality of window interfaces. Correspondingly, a secondary display region is included on the left side of the screen, and the secondary display region is used to display a remaining window interface stacked at the bottom of the plurality of window interfaces. In addition, a secondary display region is further included on the right side of the screen, and the secondary display region is used to display a window interface included in the right display region.

Scenario B3: When the first operation is a leftward sliding operation, and the first display region is displayed on the right side, the display location of the first primary display region is on the right side of the second interface, and the display location of the first secondary display region is on the left side of the second interface. In this scenario, the first window interface is the third window interface.

Scenario B4: When the first operation is a leftward sliding operation, and the second display region is displayed on the right side, the display location of the first primary display region is in the middle of the second interface, the second interface includes two first secondary display regions, and display locations of the two first secondary display regions are respectively on the left side and the right side of the second interface. In this scenario, the first window interface is a window interface displayed at the top in the second display region. It may be understood that the third window interface displayed in the first display region on the left side is automatically displayed in a left first secondary display region, and one or more window interfaces stacked at the bottom in the second display region are automatically displayed in a right first secondary display region.

For beneficial effect of the scenario B3 and the scenario B4, refer to the beneficial effect described in the scenario B1 and the scenario B2. Details are not described herein again.

In this design, in a scenario in which the first interface includes a large quantity of window interfaces, the screen is divided into one primary display region and one secondary display region based on a specific operation direction of the first operation, or the screen is divided into one primary display region and two secondary display regions. This can improve primary/secondary display effect of the electronic device on the plurality of window interfaces, and maintain a relative location relationship between the plurality of window interfaces, so that the user can quickly adapt to a changed interface.

In a possible design, the method further includes: performing a second operation in the second display region, to update the window interfaces in the second display region from being displayed in the stacked form to being displayed in the spatial window form.

In this design, switching between the stacked form and the spatial window form is provided, so that more task processing scenarios of the user can be easily met. In addition, the spatial window form can further improve efficiency and accuracy of window interface switching performed by the user, thereby improving user experience.

In a possible design, when the second display region is displayed on the left side, the second operation is the rightward sliding operation; or when the second display region is displayed on the right side, the second operation is the leftward sliding operation.

In this design, a correspondence between specific operation directions of the second operation and display locations of the plurality of window interfaces are designed, so that a use habit of the user can be better matched, and interaction experience of the user can be improved.

In a possible design, the method further includes: performing a third operation in the second display region, to update the window interfaces in the second display region from being displayed in a first stacking order to being displayed in a second stacking order, where the first stacking order is that a fourth window interface is stacked and displayed on the top, and the second stacking order is that a fifth window interface is stacked and displayed on the top.

In this design, a stacking order of a plurality of stacked window interfaces is switched through a user operation, so that efficiency of switching between the plurality of window interfaces by the user can be improved, and efficiency and continuity of multi-task processing performed by the user can be improved.

In a possible design, the third operation is a tap operation on the fifth window interface.

In a possible design, the method further includes: detecting a fourth operation on the second interface, where the fourth operation is used to add a sixth window interface; and displaying a fourth interface in response to the fourth operation, where the fourth interface includes the M window interfaces and the sixth window interface.

In this design, in a scenario in which the screen displays the primary display region and the secondary display region, a window interface may be further added, and the electronic device displays the plurality of original window interfaces and the newly added window interface together on the screen.

In a possible design, the fourth interface includes a third primary display region and a third secondary display region, a size of the third primary display region is greater than a size of the third secondary display region, the third primary display region is used to display the sixth window interface, and the third secondary display region is used to display the M window interfaces in the spatial window form.

In this design, in a scenario in which the screen displays the primary display region and the secondary display region, a window interface may be further added, and the electronic device may display the newly added window interface in the primary display region on the screen, and automatically display a plurality of original window interfaces in the secondary display region. This can match a processing requirement of the user in real time.

In a possible design, before detecting the first operation on the first interface, the method further includes: detecting a fifth operation on a fifth interface, and displaying a sixth interface in response to the fifth operation on the fifth interface, where the sixth interface includes a fourth primary display region and a fourth secondary display region, a size of the fourth primary display region is greater than a size of the fourth secondary display region, the fourth primary display region is used to display a thumbnail of an alternative window interface and/or an alternative application icon, and the fourth secondary display region is used to display, in the spatial window form, at least one window interface included in the fifth interface; and detecting a second selection operation in the fourth primary display region, and displaying the first interface in response to the second selection operation in the fourth primary display region, where the M window interfaces included in the first interface include the at least one window interface included in the fifth interface and a seventh window interface, and the seventh window interface is a window interface corresponding to a thumbnail of an alternative window interface selected by using the second selection operation, or the seventh window interface is a window interface of an application corresponding to an alternative application icon selected by using the second selection operation.

In this design, a design of displaying a plurality of window interfaces by using display regions of different sizes may be further applicable to a scenario in which a window interface is added. It may be understood that, on a basis of separately displaying one window interface or displaying a plurality of window interfaces in a split-screen form, the electronic device may trigger, through a preset operation, display of a task center. The task center may be used to add a window interface. In addition, because an attention focus in this scenario is the task center, the task center may be displayed in the primary display region, and one or more originally displayed windows are displayed in the secondary display region. In this way, interaction smoothness in a scenario involving a plurality of window interfaces can be improved, thereby improving efficiency and use experience of multi-task processing performed by the user.

In a possible design, the fifth operation and the second selection operation may be various predefined operation manners, for example, may be but are not limited to at least one of the following operation combination forms:
(1) The fifth operation is a bottom two-finger pinch operation, and the second selection operation is a tap operation on the thumbnail or the alternative application icon corresponding to the seventh window interface.
(2) The fifth operation is a drag operation on first display content in an eighth window interface in the fifth interface, and the drag operation is used to drag the first display content and trigger gradual switching from the fifth interface to the sixth interface; and the second selection operation is an operation of dragging the first display content to the thumbnail or the alternative application icon corresponding to the seventh window interface.

In this design, operation efficiency of adding a window interface can be improved through a predefined user operation, and user experience can be improved.

In a possible design, the at least one window interface included in the fifth interface corresponds to at least one application; an application corresponding to the thumbnail of the alternative window interface is associated with the at least one application; and an application corresponding to the alternative application icon is associated with the at least one application.

In this design, the task center is displayed based on an association relationship between applications, so that efficiency of searching for an added window interface can be improved, and a window interface of a related application can be found more quickly, thereby improving continuity and efficiency of multi-task processing. For example, an application related to a camera may include an album application.

In a possible design, the application corresponding to the thumbnail of the alternative window interface is an application running in a background.

In this design, the application running in the background is displayed in the task center in a thumbnail form, so that the thumbnail of the application running in the background can be more intuitively displayed to the user, and the user can easily view a part of display content included in a window interface, thereby improving efficiency of adding a window interface.

In a possible design, before detecting the first operation on the first interface, the method further includes: detecting a fifth operation on a fifth interface, and displaying a sixth interface in response to the fifth operation on the fifth interface, where the sixth interface includes a fourth primary display region and a fourth secondary display region, a size of the fourth primary display region is greater than a size of the fourth secondary display region, the fourth primary display region is used to display a thumbnail of an alternative window interface and/or an alternative application icon, the fourth secondary display region is used to display, in the spatial window form, a plurality of window interfaces included in the fifth interface, and the plurality of window interfaces included in the fifth interface include an eighth window interface; and detecting a replacement operation in the fourth primary display region, and displaying the first interface in response to the replacement operation in the fourth primary display region, where the M window interfaces included in the first interface include a seventh window interface but do not include the eighth window interface, and the seventh window interface is a window interface corresponding to a thumbnail of an alternative window interface selected by using the replacement operation, or the seventh window interface is a window interface of an application corresponding to an alternative application icon selected by using the second selection operation.

In this design, a design of displaying a plurality of window interfaces by using display regions of different sizes may be further applicable to a scenario in which a window interface is switched. It may be understood that, on a basis of separately displaying one window interface or displaying a plurality of window interfaces in the split-screen form, the electronic device may trigger, through a preset operation, display of the task center. The task center may be used to select a new window interface to replace an originally displayed window interface. In addition, because an attention focus in this scenario is the task center, the task center may be displayed in the primary display region, and one or more originally displayed windows are displayed in the secondary display region. In this way, interaction smoothness in a scenario involving a plurality of window interfaces can be improved, thereby improving efficiency and use experience of multi-task processing performed by the user.

In a possible design, the first interface is a split-screen interface obtained based on the M window interfaces. Based on this design, before detecting the first operation on the first interface, the method further includes: originally displaying, by the electronic device, the M window interfaces including a ninth window interface, performing a sixth operation on the ninth window interface, and displaying, in the spatial window form, N window interfaces that belong to a same application as the ninth window interface, where N is a positive integer; and detecting a third selection operation on a tenth window interface included in the N window interfaces, and displaying the first interface in response to the third selection operation on the tenth window interface included in the N window interfaces, where the first interface includes the tenth window interface but does not include the ninth window interface.

In this design, when at least two window interfaces are displayed on the screen of the electronic device in the split-screen form, a preset operation may be performed on one of the window interfaces, to switch the window interface. During switching, at least one window interface that belongs to a same application may be used as an alternative window interface, to improve efficiency of window interface switching, and provide a split-screen result obtained by combining a plurality of window interfaces.

According to a second aspect, an embodiment of this application provides an interface display method. The method may be applied to an electronic device. In the method, a fifth operation on a fifth interface is detected, and a sixth interface is displayed in response to the fifth operation on the fifth interface, where the sixth interface includes a fourth primary display region and a fourth secondary display region, a size of the fourth primary display region is greater than a size of the fourth secondary display region, the fourth primary display region is used to display a thumbnail of an alternative window interface and/or an alternative application icon, and the fourth secondary display region is used to display, in a spatial window form, at least one window interface included in the fifth interface; and a second selection operation in the fourth primary display region is detected, and a first interface is displayed in response to the second selection operation in the fourth primary display region. M window interfaces included in the first interface include the at least one window interface included in the fifth interface and a seventh window interface. The seventh window interface is a window interface corresponding to a thumbnail of an alternative window interface selected by using the second selection operation, or the seventh window interface is a window interface of an application corresponding to an alternative application icon selected by using the second selection operation.

In the method, in a scenario in which the electronic device displays at least one window interface, when a window interface needs to be added, a task center may be displayed in a primary display region, and at least one originally displayed window interface may be displayed in a secondary display region. In this way, the secondary display region displays the at least one originally displayed window interface, and the primary display region displays the task center, so that not only residual attention to the originally displayed window interfaces can be retained, but also attention to the task center can be improved, thereby improving efficiency and continuity of multi-task processing.

In a possible design, the fifth operation and the second selection operation may be various predefined operation manners, for example, may be but are not limited to at least one of the following operation combination forms:
(1) The fifth operation is a bottom two-finger pinch operation, and the second selection operation is a tap operation on the thumbnail or the alternative application icon corresponding to the seventh window interface.
(2) The fifth operation is a drag operation on first display content in the eighth window interface in the fifth interface, and the drag operation is used to drag the first display content and trigger gradual switching from the fifth interface to the sixth interface; and the second selection operation is an operation of dragging the first display content to the thumbnail or the alternative application icon corresponding to the seventh window interface.

In a possible design, the at least one window interface included in the fifth interface corresponds to at least one application; an application corresponding to the thumbnail of the alternative window interface is associated with the at least one application; and an application corresponding to the alternative application icon is associated with the at least one application.

In a possible design, the application corresponding to the thumbnail of the alternative window interface and the application corresponding to the alternative application icon are applications running in a background.

According to a third aspect, an embodiment of this application provides an interface display method. The method may be applied to an electronic device. In the method, a fifth operation on a fifth interface is detected, and a sixth interface is displayed in response to the fifth operation on the fifth interface, where the sixth interface includes a fourth primary display region and a fourth secondary display region, a size of the fourth primary display region is greater than a size of the fourth secondary display region, the fourth primary display region is used to display a thumbnail of an alternative window interface and/or an alternative application icon, and the fourth secondary display region is used to display, in a spatial window form, a plurality of window interfaces included in the fifth interface, where the plurality of window interfaces included in the fifth interface include an eighth window interface; and a replacement operation in the fourth primary display region is detected, and a first interface is displayed in response to the replacement operation in the fourth primary display region, where M window interfaces included in the first interface include a seventh window interface but do not include the eighth window interface, and the seventh window interface is a window interface corresponding to a thumbnail of an alternative window interface selected by using the replacement operation, or the seventh window interface is a window interface of an application corresponding to an alternative application icon selected by using a second selection operation.

According to a fourth aspect, an embodiment of this application provides an interface display method. The method may be applied to an electronic device. In the method, the electronic device originally displays M window interfaces including a ninth window interface, and performs a sixth operation on the ninth window interface, to display, in a spatial window form, N window interfaces that belong to a same application as the ninth window interface, where N is a positive integer; and detects a third selection operation on a tenth window interface included in the N window interfaces, and displays a first interface in response to the third selection operation, where the first interface is a split-screen interface obtained based on the M window interfaces, and the first interface includes the tenth window interface but does not include the ninth window interface.

According to a fifth aspect, an embodiment of this application further provides an interface display method. The method may be applied to an electronic device. In the method, a first operation on a first interface is detected, where the first interface includes M window interfaces, and M is a positive integer greater than 1; and a second interface is displayed in response to the first operation, where the second interface includes a first primary display region and a first secondary display region, a size of the first primary display region is greater than a size of the first secondary display region, the first primary display region is used to display N1 window interfaces in the M window interfaces in a tiled form, the first secondary display region is used to display all or a part of window interfaces in the M window interfaces other than the N1 window interfaces, and N1 is less than M. In the first secondary display region, all or a part of the window interfaces other than the N1 window interfaces are displayed in a spatial window form, where the spatial window form is a form of flipping a window interface toward an inner side of a screen of the electronic device.

When a window interface is displayed in the tiled form, the window interface is on a same plane as the screen on which the window interface is displayed in terms of visual effect. For example, tiled display may be specifically full-screen display, split-screen display, or the like.

In the method, sizes of different display regions are set to be different on the screen, and a primary display region with a large size is displayed, so that more attention can be paid to one or more window interfaces in the primary display region. In addition, all or a part of other window interfaces are displayed in a secondary display region with a small display size in the spatial window form, so that more content of a window interface can be displayed in the secondary display region with the small display size, and residual attention of a user on the secondary display region can be further retained, thereby improving efficiency and continuity of multi-task processing, and improving user interaction experience. In addition, a quantity of other window interfaces displayed in the secondary display region is limited, so that a display area of the primary display region can be ensured, and when there are a large quantity of other window interfaces, the primary display region is less occupied.

In a possible design, N1 is 1.

In another possible design, N1 is greater than 1, and the N1 window interfaces are displayed in the first primary display region in a split-screen form.

In a possible design, the second interface includes L first secondary display regions, L is 1 or 2, a quantity of other window interfaces is greater than L, and one of the other window interfaces is displayed in each first secondary display region.

In a possible design, the first interface has the following possibilities:
(1) The M window interfaces in the first interface are displayed in the split-screen form.
(2) Alternatively, the first interface includes a second primary display region and a second secondary display region, where a size of the second primary display region is greater than a size of the second secondary display region, the second primary display region is used to display N2 window interfaces in the M window interfaces in the tiled form, the second secondary display region is used to display, in the spatial window form, all or a part of window interfaces in the M window interfaces other than the N2 window interfaces, N2 is less than M, and the N2 window interfaces are not completely the same as the N1 window interfaces.

In this design, a split-screen interface may be switched to an interface displayed in a manner of a primary/secondary relationship, or an interface 1 displayed in the manner of the primary/secondary relationship may be switched to an interface 2 displayed in the manner of the primary/secondary relationship. A window interface displayed in a primary display region of the interface 1 and a window interface displayed in a primary display region of the interface 2 may not be completely the same. In this way, a plurality of interaction manners for performing multi-task processing are provided, to meet requirements of a plurality of possible user scenarios.

In a possible design, the first operation is a drag operation on a first control, the first control is a control associated with a first window interface and a second window interface, and the first window interface and the second window interface are adjacent window interfaces. Displaying the second interface in response to the first operation includes:
1. The first window interface in the first interface is adjusted in one of the following manners:
   In scenario (A), a tiled display size of the first window interface in the first interface is adjusted. This may also be understood as maintaining a tiled display form and adjusting a size of the first window interface.

The first window interface is a window interface of an application that supports screen splitting. For example, the tiled display size of the first window interface in the first interface is less than or greater than a tiled display size of the first window interface in the second interface.

In scenario (B), a tiled display area of the first window interface on the screen is adjusted. This may also be understood as maintaining a tiled display form and a size of the first window interface, and adjusting a display area of the first window interface on the screen.

The first window interface is a window interface of an application that does not support screen splitting. For example, a tiled display area of the first window interface in the first interface is less than or greater than a tiled display area of the first window interface in the second interface. It may be understood that the first window interface may be fully or partially displayed on the screen.

In scenario (C), the first window interface is switched from being displayed in the spatial window form to being displayed in the tiled form.

Based on the foregoing descriptions of the scenario (A) to the scenario (C), it may be understood that the first window interface is one of the N1 window interfaces in the second interface.

2. The second window interface in the first interface is adjusted in one of the following manners:
(1) The second window interface is switched from being displayed in the tiled form to being displayed in the spatial window form.
(2) The second window interface is switched from being displayed in the spatial window form to being displayed in the tiled form.
(3) A display location or a display area of the second window interface on the screen changes, for example, the location is translated. This may also be understood as maintaining a tiled display form and a display size of the second window interface, and adjusting the display area of the second window interface on the screen. It may be understood that the second window interface may be fully or partially displayed on the screen.

In some possible examples, the first control is located between the first window interface and the second window interface; or the first control is located, on one of the first window interface and the second window interface, at a location near the other window interface.

For example, when both the first window interface and the second window interface are displayed in the tiled form, the first control is located between the first window interface and the second window interface. For example, there may be a gap between the first window interface and the second window interface, and the first control may be located in the middle of the gap.

For another example, one of the first window interface and the second window interface is displayed in the tiled form, and the other is displayed in the spatial window form. In this case, the first control is located, on one of the first window interface and the second window interface, at a location near the other window interface. Optionally, the first control is located on a window interface displayed in the spatial window form, and is close to a window interface displayed in the tiled form. For example, the first control may be displayed on the other window interface displayed in the spatial window form. Alternatively, the first control may be displayed at a location adjacent to a window interface displayed in the tiled form. It may also be understood as that the first control is displayed on an edge that is of the window interface displayed in the tiled form and that is adjacent to the window interface displayed in the spatial window form.

In this design, based on the control associated with the window interface, display of the window interface may be adjusted by performing a drag operation on the associated control, to meet user requirements in a plurality of scenarios.

In a possible design, a screen region of the electronic device includes X hotspot regions, X is greater than 2, and the X hotspot regions include a left hotspot region, one or more middle hotspot regions, and a right hotspot region. It may be understood that all hotspot regions located between the left hotspot region and the right hotspot region may be referred to as middle hotspot regions, and a quantity of middle hotspot regions is not limited. Based on this, the possible several possible scenarios may include but are not limited to the following:
Scenario (1): The first window interface is located on a left side of the second window interface, and when the first control is dragged to the right hotspot region, the second window interface is switched from being displayed in the tiled form to being displayed in the spatial window form, and the second window interface is displayed in a right first secondary display region.
Scenario (2): The first window interface is located on a right side of the second window interface, and when the first control is dragged to the left hotspot region, the second window interface is switched from being displayed in the tiled form to being displayed in the spatial window form, and the second window interface is displayed in a left first secondary display region.
Scenario (3): The second window interface is displayed in the first interface in the spatial window form, and when the first control is dragged to the middle hotspot region, the second window interface and the first window interface are displayed in the split-screen form.

In this scenario, a rule for adjusting a window interface may be defined by setting a hotspot region on the screen, so that the user can quickly learn various interface switching manners in a multi-task processing scenario. Therefore, user requirements in a plurality of scenarios can be met.

In a possible design, a maximum quantity of split screens supported by the electronic device is Y, and X is equal to Y plus 1.

In a possible design, in response to a close operation on a third window interface in the N1 window interfaces, switching at least one window interface in the first secondary display region from being displayed in the spatial window form to being displayed in the tiled form may also be understood as performing "display padding". It should be noted that a window interface displayed in the spatial window form is not limited to be displayed on the screen (that is, displayed in the secondary display region), or may not be displayed on the screen, for example, when display padding is performed by using two window interfaces displayed in the spatial window form in one secondary display region, one of the two window interfaces displayed in the spatial window form may be displayed on the screen, and the other window interface is not displayed on the screen.

Based on the foregoing design, when the third window interface is a window interface displayed in the primary display region in a full-screen form, a window interface for display padding is as follows: one window interface displayed in the full-screen form, or two window interfaces displayed in the split-screen form, or one window interface displayed in the split-screen form and one window interface displayed in the full-screen form. When the third window interface is the window interface displayed in the primary display region in the split-screen form, the window interface for display padding is a window interface displayed in the split-screen form or a window interface displayed in the full-screen form. It may be understood that the window interface displayed in the full-screen form may display only a part of content.

In this design, in a scenario in which the window interface in the primary display region is closed, display padding may be performed based on different display forms of a window interface displayed in the spatial window form, until an original display location occupied by the closed window interface can be completely padded by the window interface for display padding, so that an interface display result in the multi-task processing scenario can be updated in time.

In a possible design, the method further includes: detecting a first selection operation on a fourth window interface in the first secondary display region, where the fourth window interface is one of the other window interfaces; and displaying a third interface in response to the first selection operation, where the third interface includes a third primary display region and a third secondary display region, a size of the third primary display region is greater than a size of the third secondary display region, the third primary display region is used to display N3 window interfaces in the M window interfaces in the tiled form, the N3 window interfaces include the fourth window interface, N3 is a positive integer, the third secondary display region is used to display all or a part of window interfaces in the M window interfaces other than the N3 window interfaces, and N3 is less than M. In the third secondary display region, all or a part of the window interfaces other than the N3 window interfaces are displayed in the spatial window form.

Optionally, the first selection operation may be a tap operation on the fourth window interface, or may be a drag operation on an associated control of the fourth window interface, or may be a sliding operation on the fourth window interface. An operation form that indicates the first selection operation is not limited in this application.

In a possible design, N3 is 1.

In a possible design, the fourth window interface is displayed in the split-screen form before being displayed in the first secondary display region in the spatial window form, and after the first selection operation, the fourth window interface is displayed in the third primary display region in the split-screen form, where N3 is greater than 1; or the fourth window interface is displayed in the full-screen form before being displayed in the first secondary display region in the spatial window form, and after the first selection operation is performed, the fourth window interface is displayed in the third primary display region in the full-screen form, where N3 is 1.

In a possible design, N3 is greater than 1, and the first secondary display region is located on a first side of the screen; the N3 window interfaces displayed in the third primary display region are obtained in the following manner: translating, by using the fourth window interface as a start window interface, a window interface that is located on a second side and that is adjacent to the fourth window interface toward a direction of the second side; and the first side and the second side are two opposite sides of the screen.

In a possible design, a display location of the third primary display region is the same as a display location of the first primary display region; or a display location of the third primary display region is different from a display location of the first primary display region.

In a possible design, the display location of the first primary display region is preset; or the display location of the first primary display region is determined based on the first operation.

In a possible design, if the display location of the first primary display region is determined based on the first operation:
(1) when the first operation is a rightward sliding operation, the display location of the first primary display region is located on a left side of the second interface, and the display location of the first secondary display region is located on a right side of the second interface; or
(2) when the first operation is a leftward sliding operation, the display location of the first primary display region is located on a right side of the second interface, and the display location of the first secondary display region is located on a left side of the second interface.

For example, the sliding operation may be a sliding operation on a window interface, or may be a dragging operation on a control associated with the window interface.

Based on the foregoing design, when M is 2, the first interface is a split-screen interface of a fifth window interface and a sixth window interface, and the fifth window interface is on a left side of the sixth window interface; and when the first operation is the rightward sliding operation, the fifth window interface is displayed in the first primary display region, and the sixth window interface is displayed in the first secondary display region; or when the first operation is the leftward sliding operation, the sixth window interface is displayed in the first primary display region, and the fifth window interface is displayed in the first secondary display region.

In a possible design, the M window interfaces are at least three window interfaces, the first interface includes a first display region and a second display region, the first display region is used to display a seventh window interface, and the second display region is used to display, in a stacked form, window interfaces in the M window interfaces other than the seventh window interface. If the display location of the first primary display region is determined based on the first operation:
(1) when the first operation is a rightward sliding operation, and the first display region is displayed on a left side, the display location of the first primary display region is located on a left side of the second interface, the display location of the first secondary display region is located on a right side of the second interface, and the N1 window interfaces are seventh window interfaces; and/or
(2) when the first operation is the rightward sliding operation, and the second display region is displayed on the left side, the display location of the first primary display region is in the middle of the second interface, the second interface includes two first secondary display regions, display locations of the two first secondary display regions are respectively located on the left side and the right side of the second interface, and the N1 window interfaces are window interfaces displayed at a top in the second display region; and/or
(3) when the first operation is a leftward sliding operation, and the first display region is displayed on a right side, the display location of the first primary display region is located on the right side of the second interface, the display location of the first secondary display region is located on the left side of the second interface, and the N1 window interfaces are the seventh window interfaces; and/or
(4) when the first operation is the leftward sliding operation, and the second display region is displayed on the right side, the display location of the first primary display region is in the middle of the second interface, the second interface includes two first secondary display regions, the display locations of the two first secondary display regions are respectively located on the left side and the right side of the second interface, and the N1 window interfaces are the window interfaces displayed at the top in the second display region.

Optionally, the sliding operation may be a sliding operation on an associated control of a window interface, or may be a sliding operation on the window interface. This is not limited in this application.

In a possible design, a second operation is performed in the second display region, to update the window interfaces in the second display region from being displayed in the stacked form to being displayed in the spatial window form.

In a possible design, when the second display region is displayed on the left side, the second operation is the rightward sliding operation; or when the second display region is displayed on the right side, the second operation is the leftward sliding operation.

In a possible design, the method further includes: performing a third operation in the second display region, to update the window interfaces in the second display region from being displayed in a first stacking order to being displayed in a second stacking order, where the first stacking order is that an eighth window interface is stacked and displayed on the top, and the second stacking order is that a ninth window interface is stacked and displayed on the top.

In a possible design, the third operation is a tap operation on the ninth window interface.

In a possible design, the method further includes: detecting a fourth operation on the second interface, where the fourth operation is used to add a tenth window interface; and displaying a fourth interface in response to the fourth operation, where the fourth interface includes the M window interfaces and the tenth window interface.

In a possible design, the fourth interface includes a fourth primary display region and a fourth secondary display region, a size of the fourth primary display region is greater than a size of the fourth secondary display region, the fourth primary display region is used to display the tenth window interface in the tiled form, and the fourth secondary display region is used to display all or a part of the M window interfaces in the spatial window form.

In a possible design, before detecting the first operation on the first interface, the method further includes: detecting a fifth operation on a fifth interface, and displaying a sixth interface in response to the fifth operation on the fifth interface, where the sixth interface includes a fifth primary display region and a fifth secondary display region, a size of the fifth primary display region is greater than a size of the fifth secondary display region, the fifth primary display region is used to display, in the tiled form, a thumbnail of an alternative window interface and/or an alternative application icon, and the fifth secondary display region is used to display, in the spatial window form, at least one window interface included in the fifth interface; and detecting a second selection operation in the fifth primary display region, and displaying the first interface in response to the second selection operation in the fifth primary display region, where the M window interfaces included in the first interface include the at least one window interface included in the fifth interface and an eleventh window interface, and the eleventh window interface is a window interface corresponding to a thumbnail of an alternative window interface selected by using the second selection operation, or the eleventh window interface is a window interface of an application corresponding to an alternative application icon selected by using the second selection operation.

In a possible design, the fifth operation is a bottom two-finger pinch operation, and the second selection operation is a tap operation on a thumbnail or an alternative application icon corresponding to the eleventh window interface; and/or the fifth operation is a drag operation on first display content in a twelfth window interface in the fifth interface, and the drag operation is used to drag the first display content and trigger gradual switching from the fifth interface to the sixth interface; and the second selection operation is an operation of dragging the first display content to the thumbnail or the alternative application icon corresponding to the eleventh window interface.

In a possible design, the at least one window interface included in the fifth interface corresponds to at least one application; an application corresponding to the thumbnail of the alternative window interface is associated with the at least one application; and an application corresponding to the alternative application icon is associated with the at least one application.

In a possible design, the application corresponding to the thumbnail of the alternative window interface is an application running in a background.

In a possible design, before detecting the first operation on the first interface, the method further includes: detecting a fifth operation on a fifth interface, and displaying a sixth interface in response to the fifth operation on the fifth interface, where the sixth interface includes a fifth primary display region and a fifth secondary display region, a size of the fifth primary display region is greater than a size of the fifth secondary display region, the fifth primary display region is used to display, in the tiled form, a thumbnail of an alternative window interface and/or an alternative application icon, the fifth secondary display region is used to display, in the spatial window form, all or a part of a plurality of window interfaces included in the fifth interface, and the plurality of window interfaces included in the fifth interface include a twelfth window interface; and detecting a replacement operation in the fifth primary display region, and displaying the first interface in response to the replacement operation in the fifth primary display region, where the M window interfaces included in the first interface include an eleventh window interface but do not include the twelfth window interface, and the eleventh window interface is a window interface corresponding to a thumbnail of an alternative window interface selected by using the replacement operation, or the eleventh window interface is a window interface of an application corresponding to an alternative application icon selected by using the second selection operation.

In a possible design, the first interface is a first split-screen interface obtained based on the M window interfaces.

In a possible design, an eighth interface is displayed in response to a sixth operation on the first split-screen interface, where the sixth operation is used to add a thirteenth window interface. The eighth interface includes a sixth primary display region and a sixth secondary display region, a size of the sixth primary display region is greater than a size of the sixth secondary display region, the sixth primary display region is used to display, in the tiled form, a second split-screen interface including the thirteenth window interface, and the sixth secondary display region is used to display all or a part of window interfaces that are in the M window interfaces and that do not belong to the second split-screen interface. In the sixth secondary display region, all or a part of the window interfaces that are in the first split-screen interface and that do not belong to the second split-screen interface are displayed in the spatial window form.

In addition, in a possible design, in response to an operation of dragging a fourteenth window interface in the N1 window interfaces to the first secondary display region, the fourteenth window interface is displayed in the first secondary display region in the spatial window form, and a fifteenth window interface in the first secondary display region is displayed at an original display location of the fourteenth window interface. This may also be understood as that a location of a window interface displayed in the tiled form and a location of a window interface displayed in the spatial window form may be interchanged by performing a drag operation on the window interface.

Alternatively, the second interface includes a left first secondary display region and a right first secondary display region. In response to an operation of dragging a sixteenth window interface in the left first secondary display region to the right first secondary display region, the sixteenth window interface is displayed in the right first secondary display region in the spatial window form, and a seventeenth window interface in the first secondary display region is displayed in the left secondary display region in the spatial window form. It may also be understood that locations of two window interfaces displayed in the secondary display region in the spatial window form may be interchanged by performing a drag operation on the window interface.

In this design, an interaction manner of interchanging locations of window interfaces is provided, so that a requirement of the user for arranging a plurality of window interfaces in a multi-task processing scenario can be met, thereby improving variety of the multi-task processing scenario.

In addition, in a possible design, an eighteenth window interface is set to a fixed window interface in response to a Z^{th} operation, where the eighteenth window interface is in the split-screen form. The fixed window interface indicates that a display location and a display size of the eighteenth window interface do not change with an operation on another window interface.

In this design, the fixed window interface is set, so that a requirement of the user for a multi-task processing scenario in which the fixed window interface remains unchanged, and the another window interface is switched can be met, thereby improving variety of the multi-task processing scenario.

According to a sixth aspect, this application provides an electronic device. The electronic device includes a plurality of functional modules, and the plurality of functional modules interact with each other to implement the method performed by the electronic device in any one of the foregoing aspects and the implementations of the foregoing aspects. The plurality of functional modules may be implemented based on software, hardware, or a combination of software and hardware, and the plurality of functional modules may be randomly combined or divided based on a specific implementation.

According to a seventh aspect, this application provides an electronic device, including at least one processor and at least one memory. The at least one memory stores computer program instructions, and when the electronic device runs, the at least one processor performs the method performed by the electronic device in any one of the foregoing aspects and the implementations of the foregoing aspects.

According to an eighth aspect, this application further provides a computer-readable storage medium, where the computer-readable storage medium stores a computer program, and when the computer program is executed by a computer, the computer is enabled to perform the method performed by the electronic device in any one of the foregoing aspects and the possible designs of the foregoing aspects.

According to a ninth aspect, this application provides a computer program product. The computer program product includes a computer program (which may also be referred to as code or instructions), and when the computer program is run, a computer is enabled to perform the method performed by the electronic device in any one of the foregoing aspects and the possible designs of the foregoing aspects.

According to a tenth aspect, an embodiment of this application further provides a graphical user interface on an electronic device. The electronic device has a display, one or more memories, and one or more processors, the one or more processors are configured to execute one or more computer programs stored in the one or more memories, and the graphical user interface includes a graphical user interface displayed when the electronic device performs the method in any one of the foregoing aspects and the possible designs of the foregoing aspects.

According to an eleventh aspect, this application further provides a chip. The chip is configured to read a computer program stored in a memory, to perform the method performed by an electronic device in any one of the foregoing aspects and the possible designs of the foregoing aspects.

According to a twelfth aspect, this application further provides a chip system. The chip system includes a processor, configured to support a computer apparatus in implementing the method performed by an electronic device in any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete component.

For beneficial effect of any one of the second aspect to the twelfth aspect and the possible designs of the second aspect to the twelfth aspect, refer to beneficial effect of the possible designs of the first aspect. Details are not described herein again.

### BRIEF DESCRIPTION OF DRAWINGS

FIG. 1 is a diagram of an interface in a multi-task processing scenario;
FIG. 2 is a diagram of a possible hardware structure of an electronic device according to an embodiment of this application;
FIG. 3 is a block diagram of a software architecture of an electronic device according to an embodiment of this application;
FIG. 4A is a diagram 1 of an interface for triggering window interface switching according to an embodiment of this application;
FIG. 4B is a diagram 2 of an interface for triggering window interface switching according to an embodiment of this application;
FIG. 4C is a diagram of a spatial window according to an embodiment of this application;
FIG. 5A-1, FIG. 5A-2, and FIG. 5A-3 are a diagram 3 of an interface for triggering window interface switching according to an embodiment of this application;
FIG. 5B-1, FIG. 5B-2, FIG. 5B-3, FIG. 5B-4, and FIG. 5B-5 are a diagram 4 of an interface for triggering window interface switching according to an embodiment of this application;
FIG. 5C-1, FIG. 5C-2, FIG. 5C-3, FIG. 5C-4, and FIG. 5C-5 are a diagram 5 of an interface for triggering window interface switching according to an embodiment of this application;
FIG. 5D-1, FIG. 5D-2, FIG. 5D-3, and FIG. 5D-4 are a diagram 1 of a scenario in which a window interface is added according to an embodiment of this application;
FIG. 5E-1, FIG. 5E-2, and FIG. 5E-3 are a diagram 2 of a scenario in which a window interface is added according to an embodiment of this application;
FIG. 5F-1, FIG. 5F-2, and FIG. 5F-3 are a diagram 3 of a scenario in which a window interface is added according to an embodiment of this application;
FIG. 5G-1, FIG. 5G-2, and FIG. 5G-3 are a diagram 4 of a scenario in which a window interface is added according to an embodiment of this application;
FIG. 5H-1, FIG. 5H-2, FIG. 5H-3, and FIG. 5H-4 are a diagram 5 of a scenario in which a window interface is added according to an embodiment of this application;
FIG. 6A-1, FIG. 6A-2, and FIG. 6A-3 are a diagram 6 of an interface for triggering window interface switching according to an embodiment of this application;
FIG. 6B-1, FIG. 6B-2, and FIG. 6B-3 are a diagram 7 of an interface for triggering window interface switching according to an embodiment of this application;

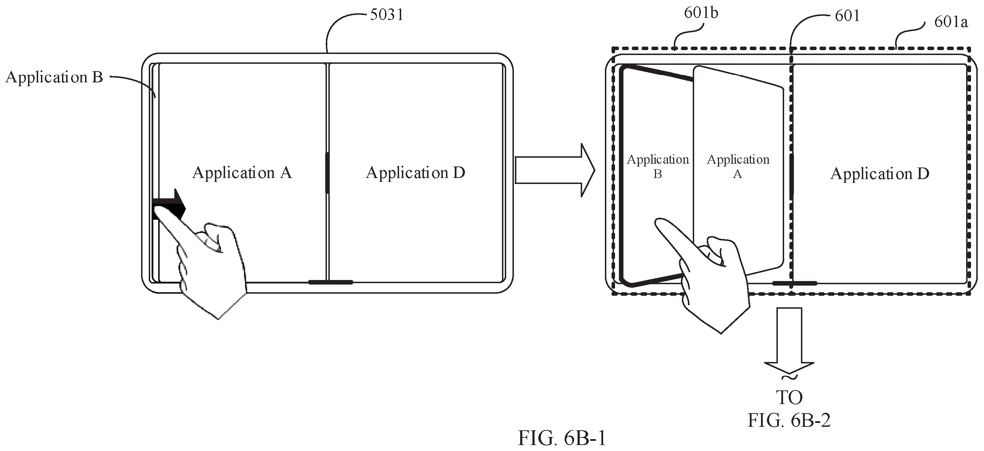

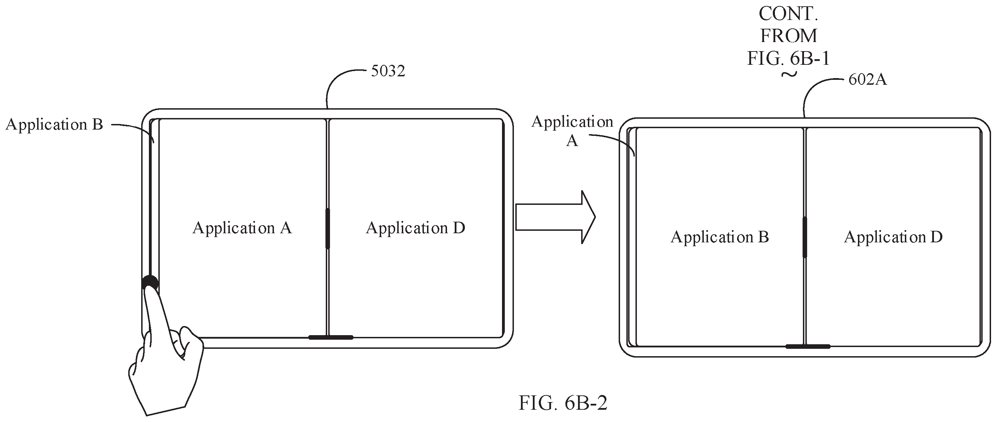

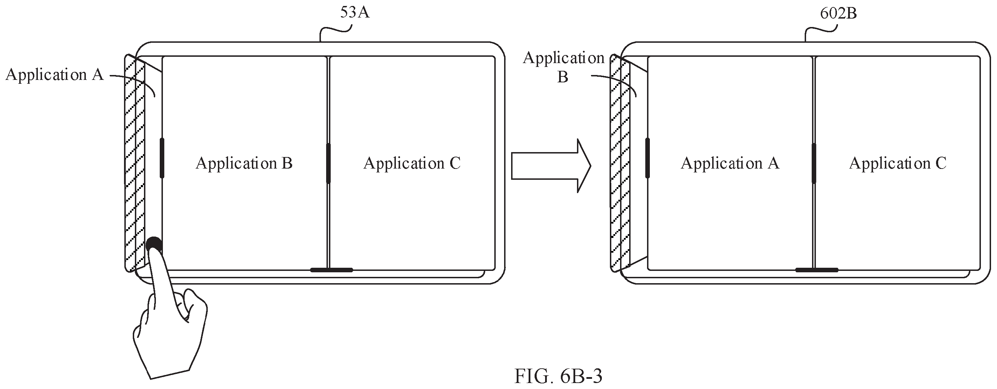

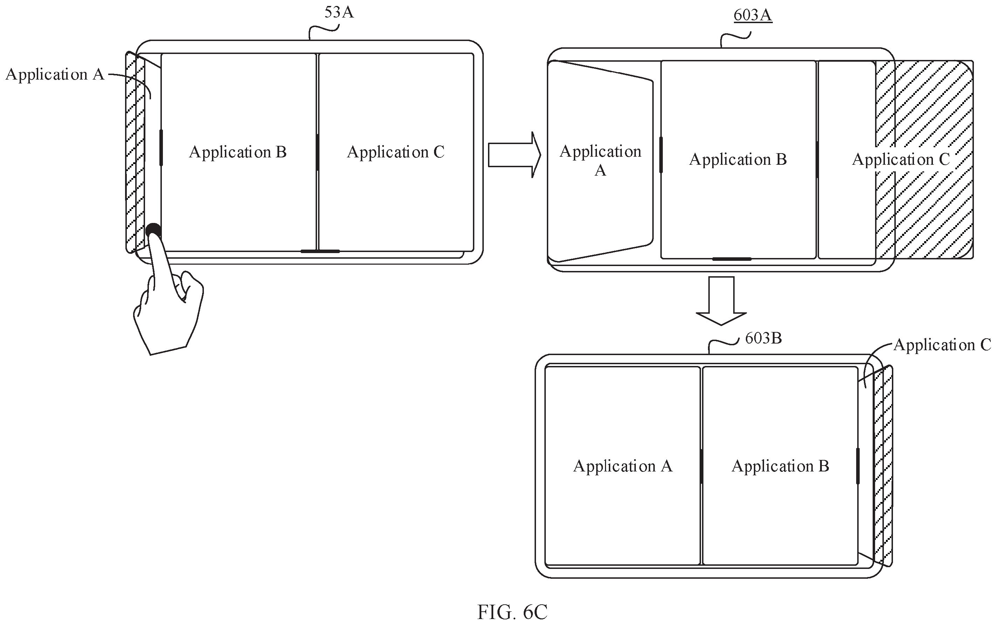

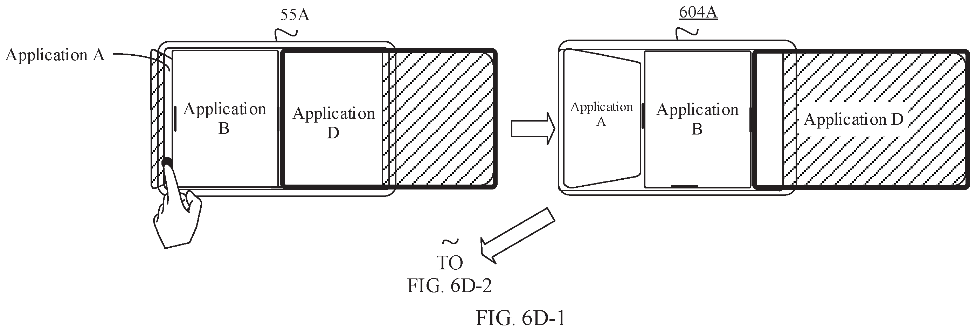

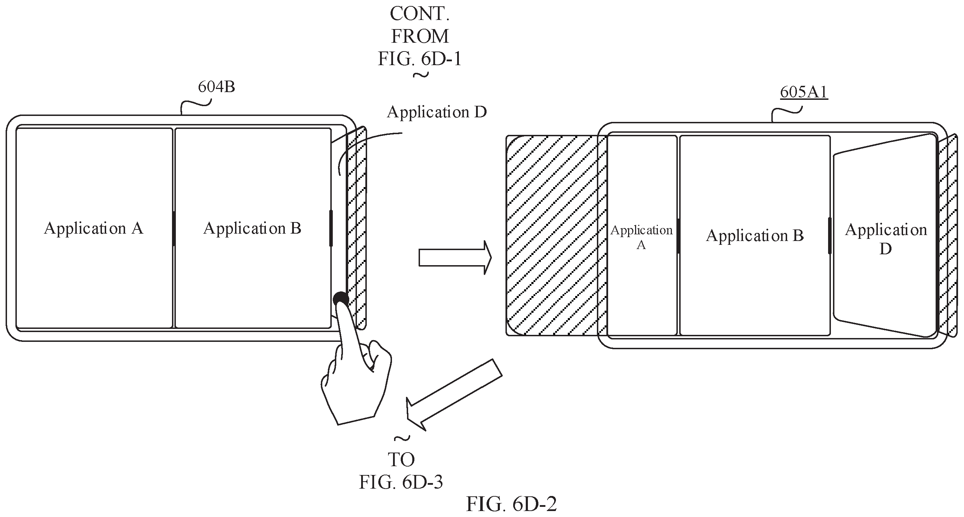

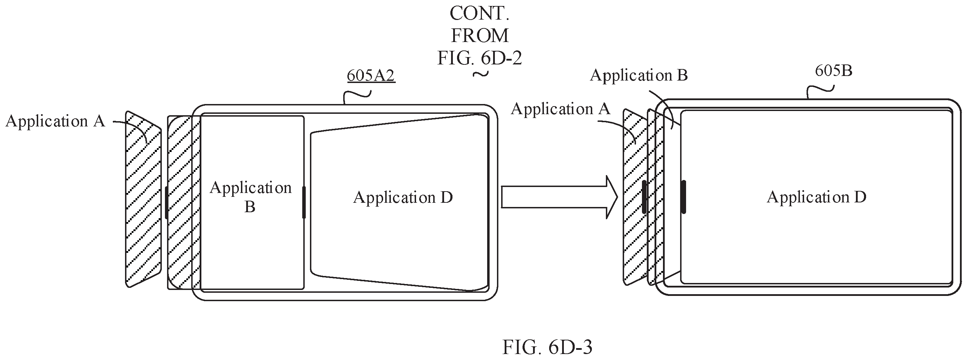

FIG. 6C is a diagram 8 of an interface for triggering window interface switching according to an embodiment of this application;
FIG. 6D-1, FIG. 6D-2, and FIG. 6D-3 are a diagram 9 of an interface for triggering window interface switching according to an embodiment of this application;

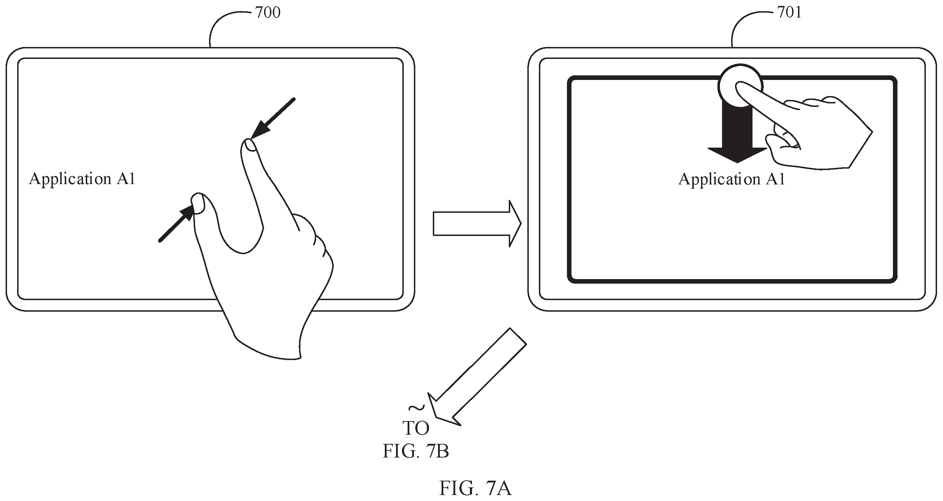

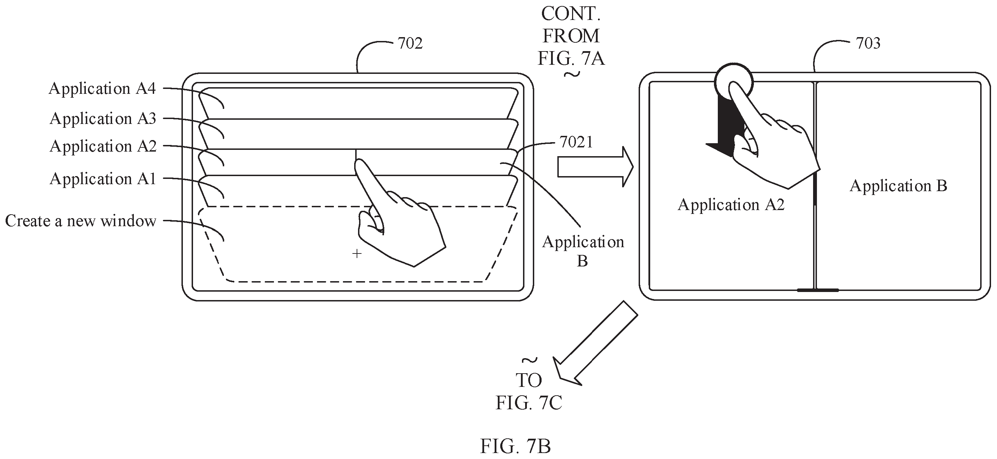

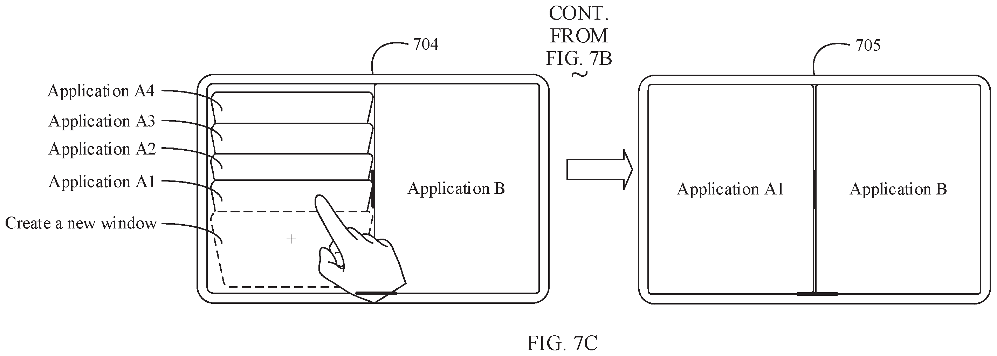

FIG. 7A, FIG. 7B, and FIG. 7C are a diagram 10 of an interface for triggering window interface switching according to an embodiment of this application;

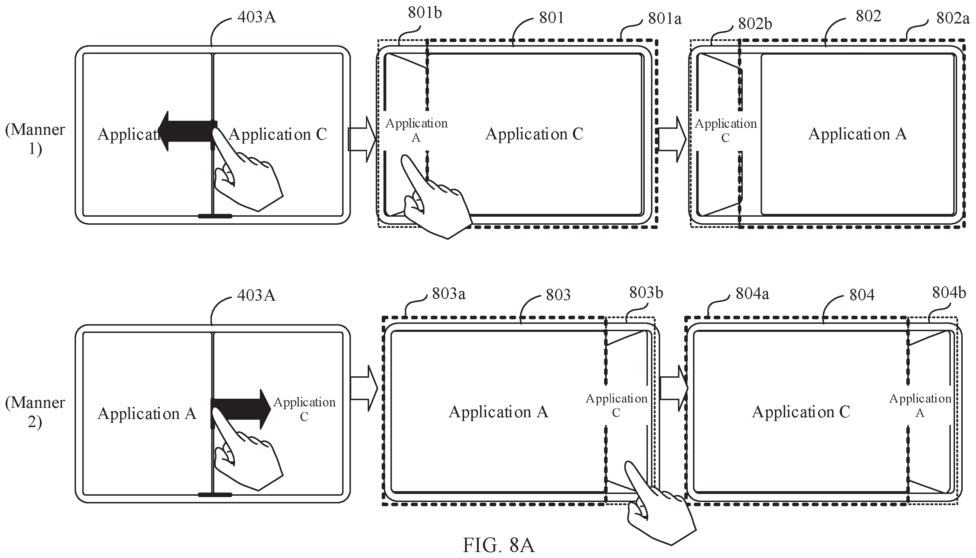

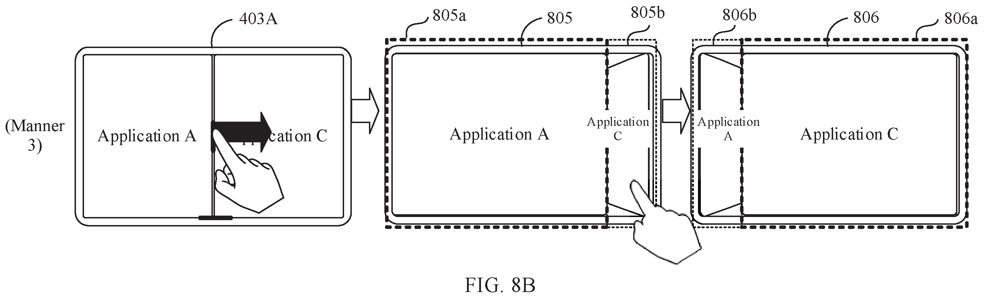

FIG. 8A and FIG. 8B are a diagram 1 of an interface for adjusting a window size according to an embodiment of this application;

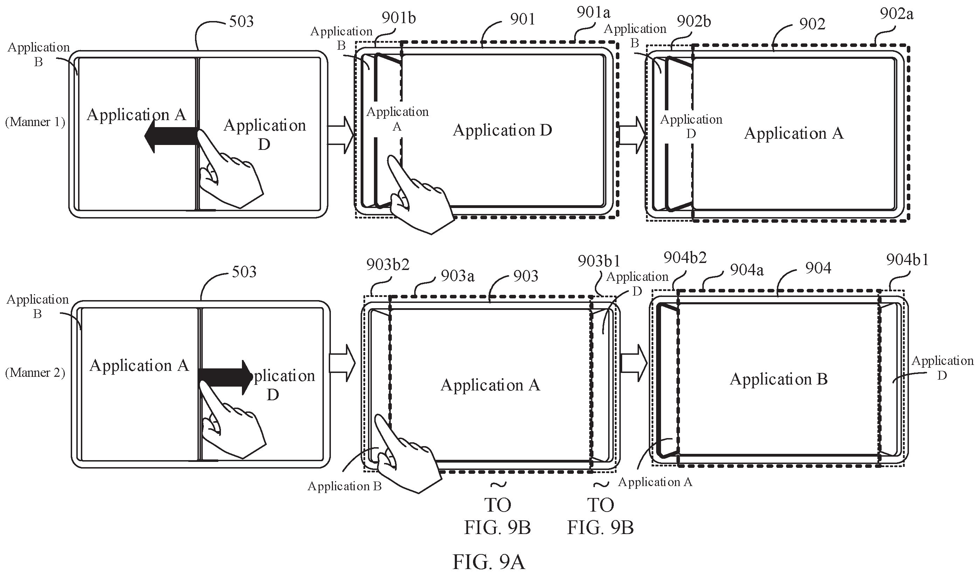

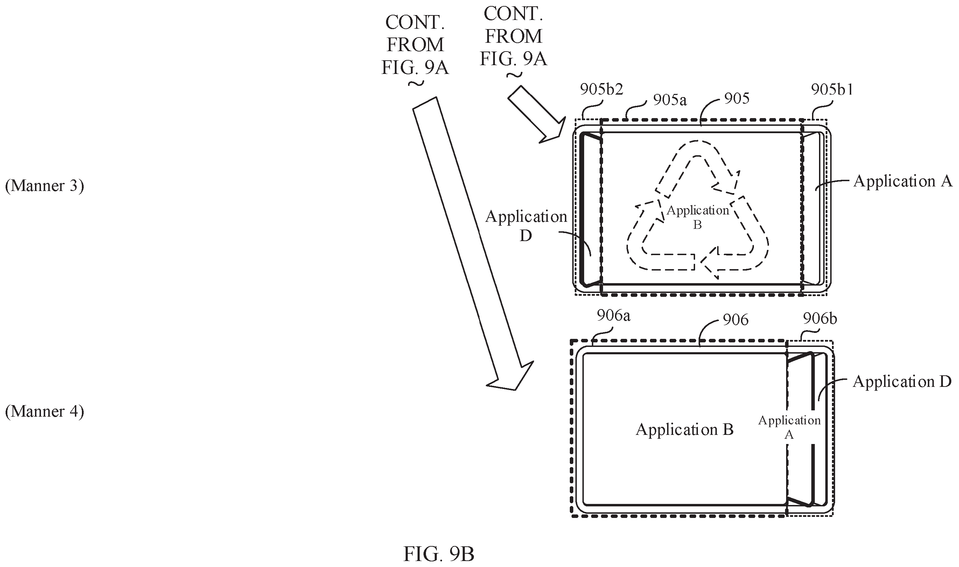

FIG. 9A and FIG. 9B are a diagram 2 of an interface for adjusting a window size according to an embodiment of this application;

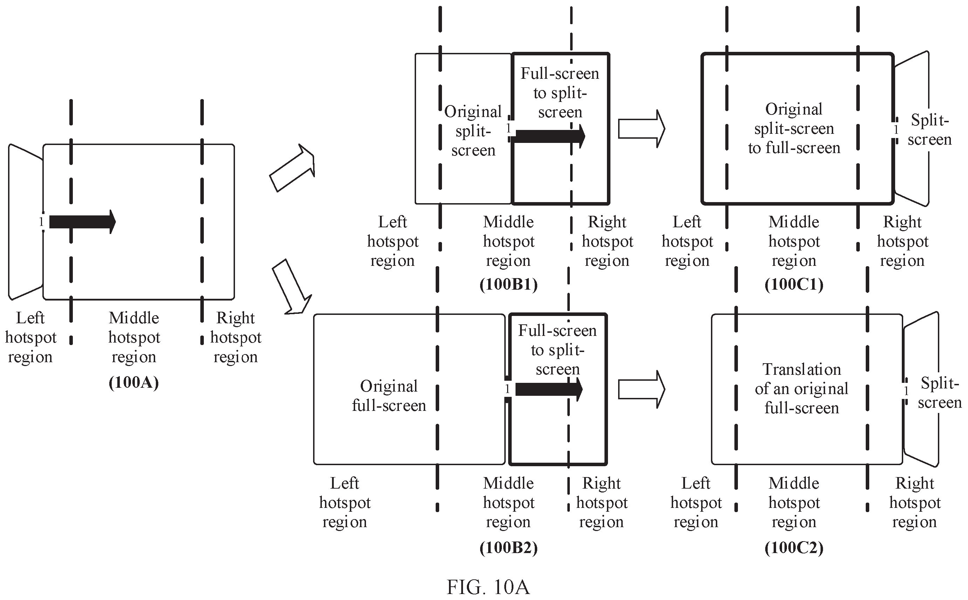

FIG. 10A is a diagram of a principle of an interface display method according to an embodiment of this application;
FIG. 10B-1 and FIG. 10B-2 are a diagram of another principle of an interface display method according to an embodiment of this application;

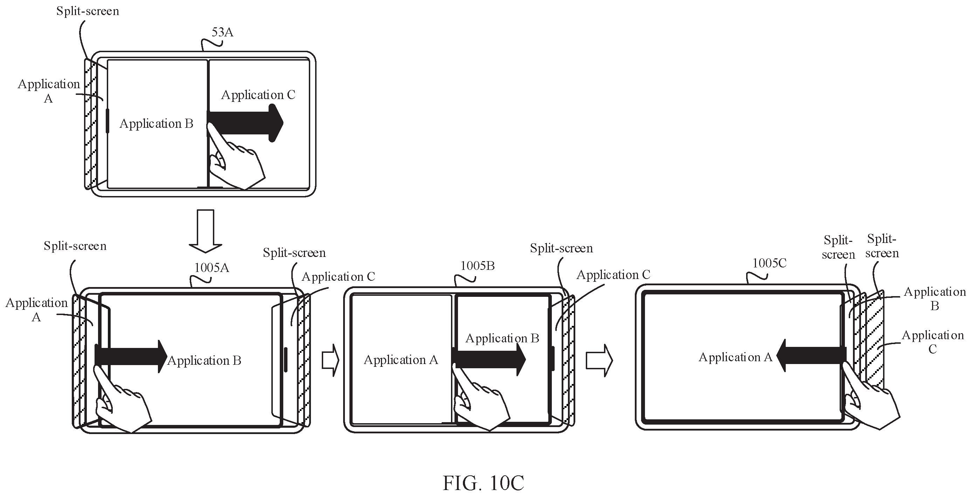

FIG. 10C is a diagram 3 of an interface for adjusting a window size according to an embodiment of this application;

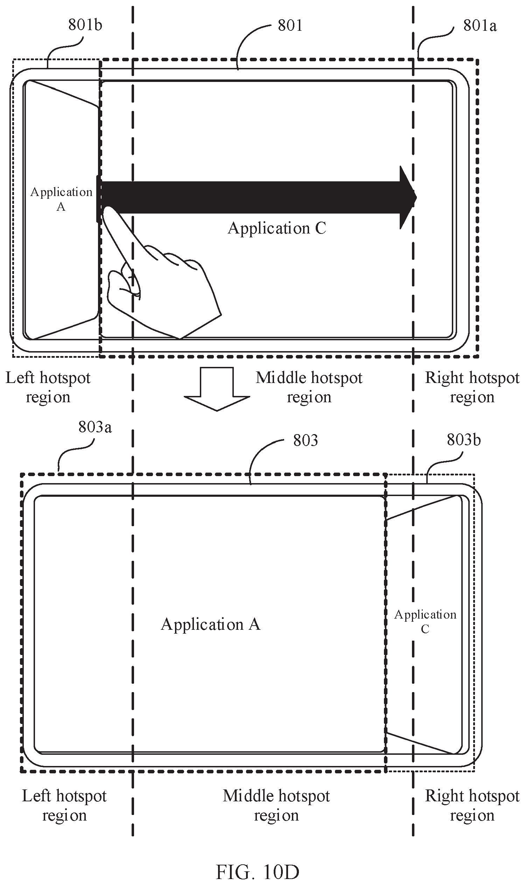

FIG. 10D is a diagram 4 of an interface for adjusting a window size according to an embodiment of this application;

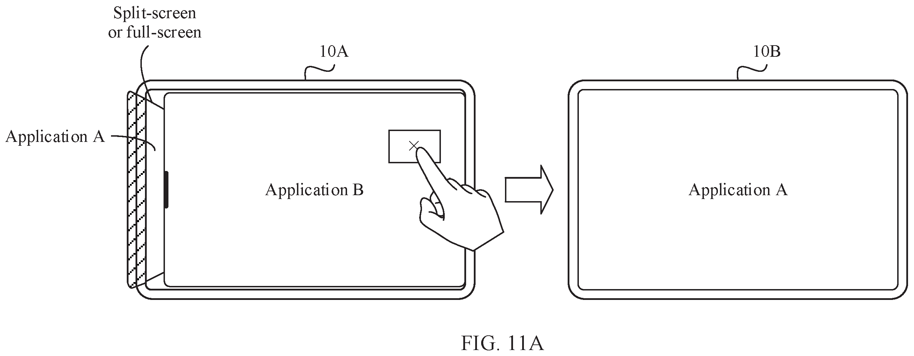

FIG. 11A is a diagram 1 of a scenario in which a window interface is closed according to an embodiment of this application;

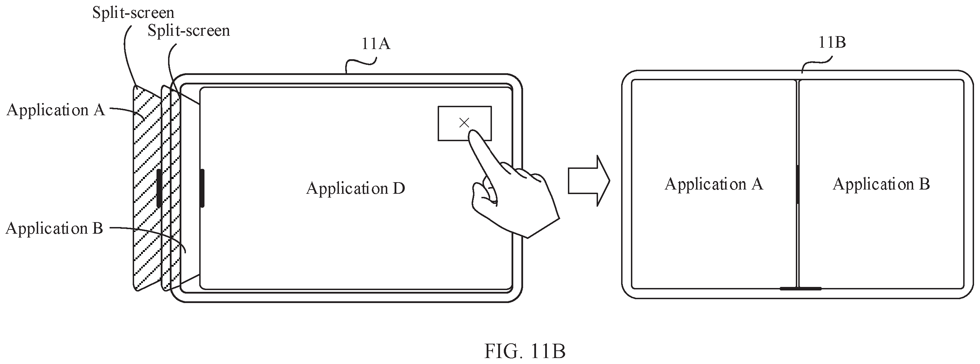

FIG. 11B is a diagram 2 of a scenario in which a window interface is closed according to an embodiment of this application;

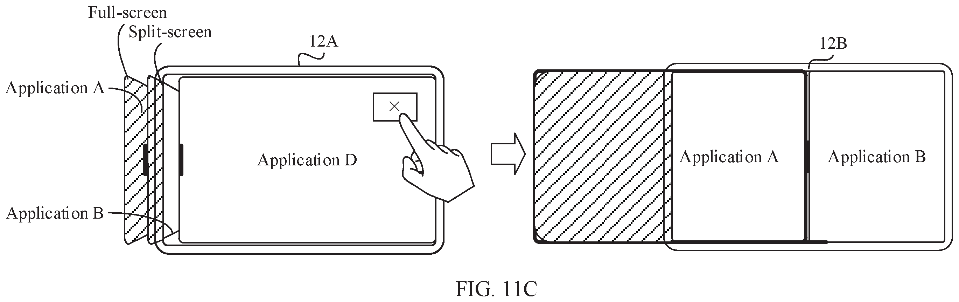

FIG. 11C is a diagram 3 of a scenario in which a window interface is closed according to an embodiment of this application;

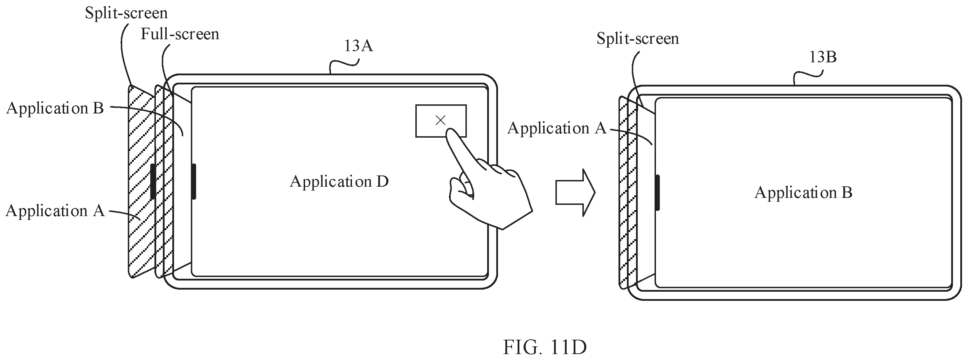

FIG. 11D is a diagram 4 of a scenario in which a window interface is closed according to an embodiment of this application;

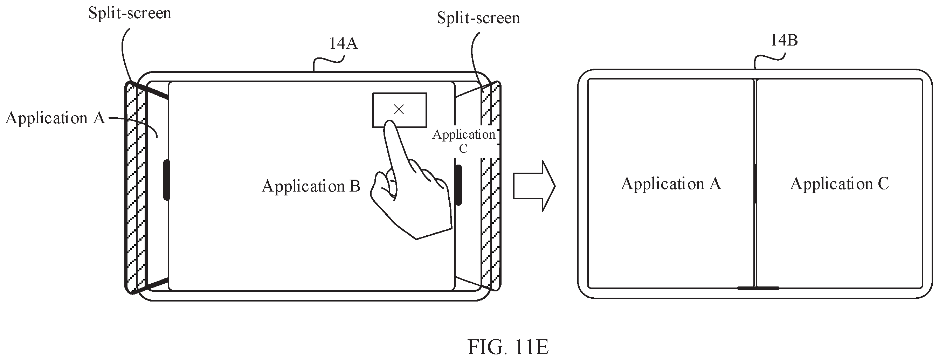

FIG. 11E is a diagram 5 of a scenario in which a window interface is closed according to an embodiment of this application;

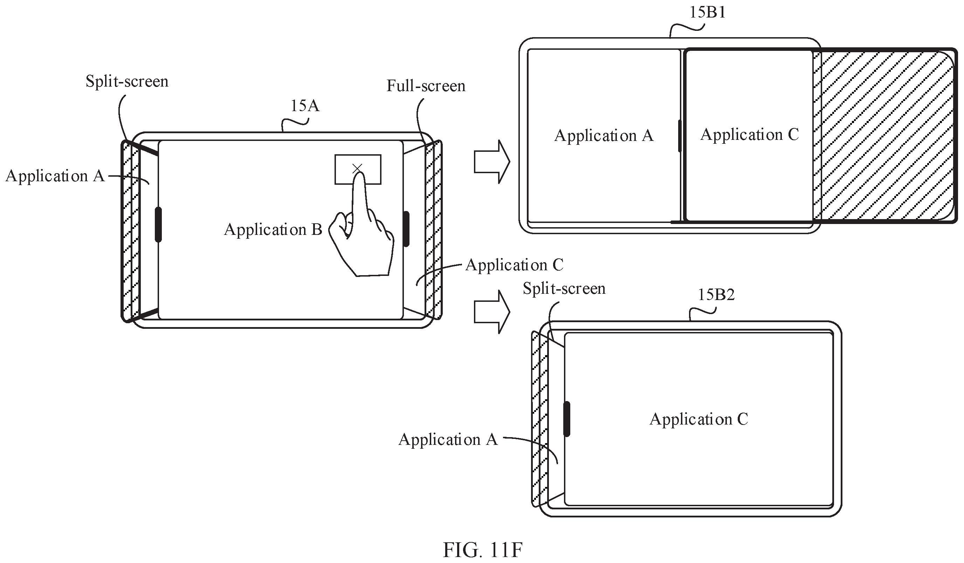

FIG. 11F is a diagram 6 of a scenario in which a window interface is closed according to an embodiment of this application;

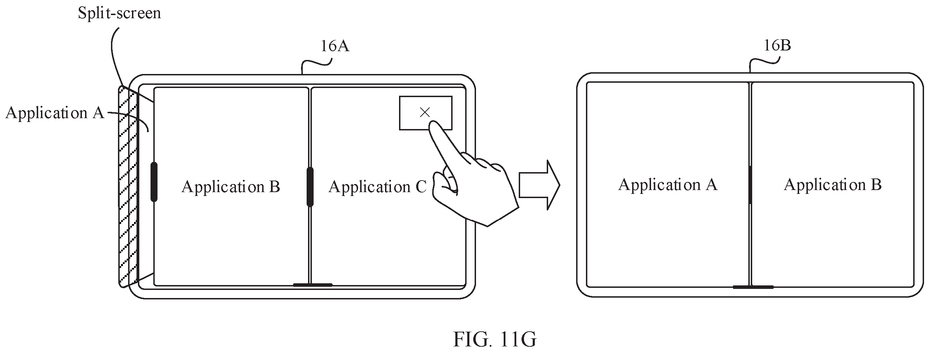

FIG. 11G is a diagram 7 of a scenario in which a window interface is closed according to an embodiment of this application;

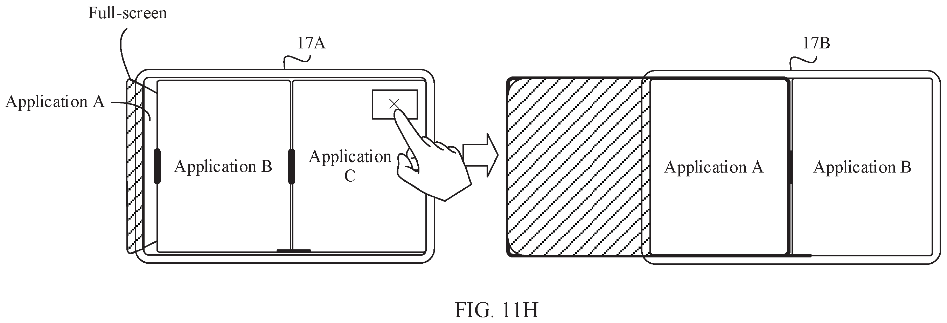

FIG. 11H is a diagram 8 of a scenario in which a window interface is closed according to an embodiment of this application;

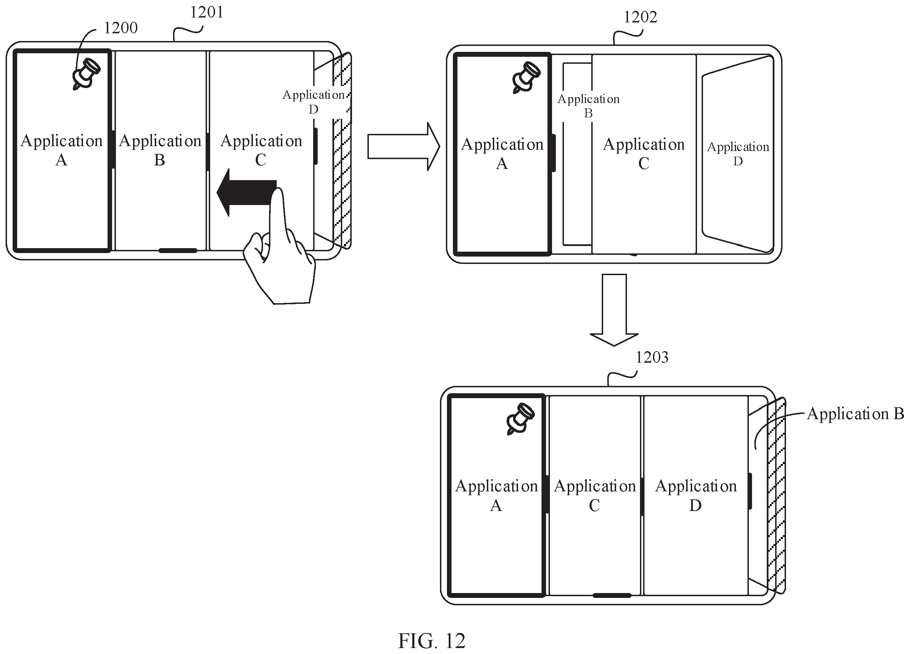

FIG. 12 is a diagram of a scenario in which a window interface is fixed according to an embodiment of this application; and

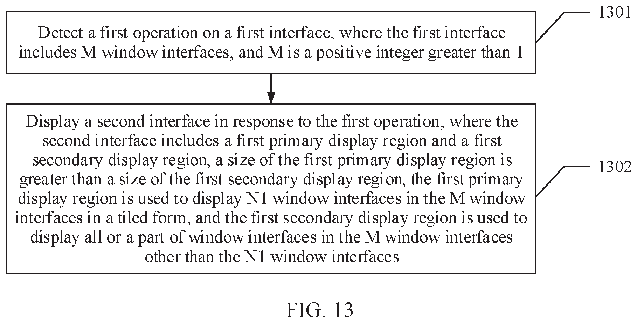

FIG. 13 is a schematic flowchart of an interface display method according to an embodiment of this application.

### DESCRIPTION OF EMBODIMENTS

The following describes in detail embodiments of this application with reference to the accompanying drawings.

Embodiments of this application may be applied to the field of electronic device technologies, and may be specifically applied to multi-task processing scenarios. The multi-task processing scenarios may include, for example, but are not limited to:
(1) Multi-instance processing scenario or multi-atomic service processing scenario in a single application. For example, window interfaces of a plurality of different web pages of a browser application (application, APP) are started at the same time, or window interfaces of a plurality of different notes of a memo APP are started at the same time. For another example, different atomic services belonging to a same application correspond to different window interfaces.
(2) Multi-application processing scenario. For example, a window interface of an application A and a window interface of an application B are started at the same time.
(3) Combination scenario of multi-application and multi-instance, combination scenario of multi-application and multi-atomic services, and the like. For example, a web page 1 of a browser APP, a web page 2 of the browser APP, and a window interface of a memo APP are started at the same time. For another example, a window interface 1 and a window interface 2 that correspond to an atomic service 1 of an APP and a window interface 3 of another APP are started at the same time.

Each window interface is used to process a task of the window interface. In addition, the multi-task processing scenario usually requires switching between a plurality of different window interfaces.

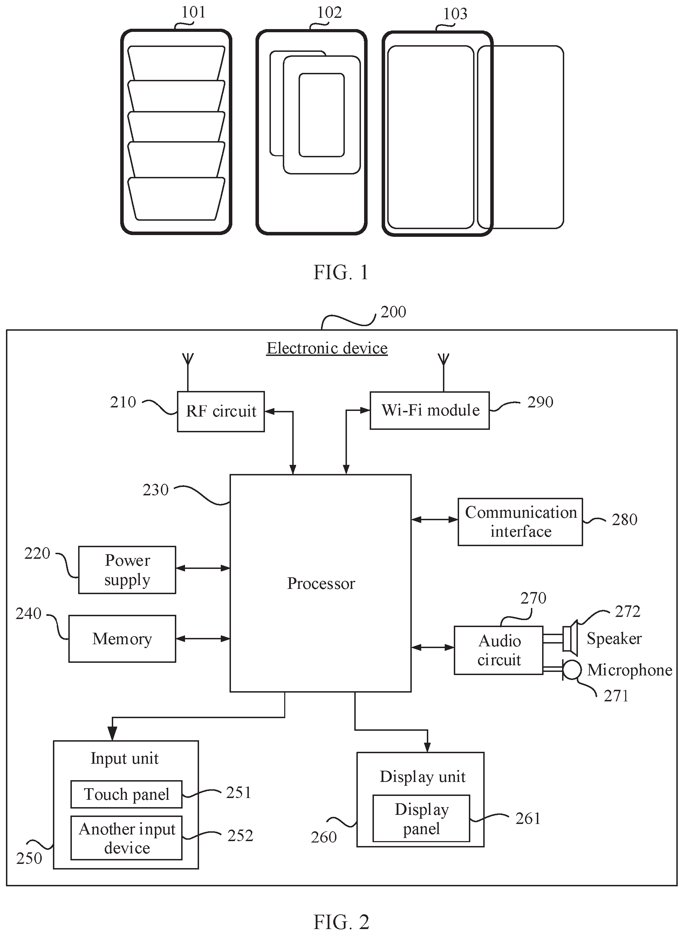

For example, FIG. 1 is a diagram of an interface in a multi-task processing scenario. In an interface 101 shown in FIG. 1, a plurality of window interfaces may be stacked and displayed on a screen of an electronic device in a vertical axis direction. In an interface 102 shown in FIG. 1, a plurality of window interfaces are randomly stacked and displayed on the screen of the electronic device. In the stacked display manners shown in the interface 101 and the interface 102, when there are a large quantity of windows, efficiency of multi-task processing is low, and there is no effective management, which imposes a high cognitive load.

In an interface 103 shown in FIG. 1, a plurality of window interfaces are arranged in a large window form, the plurality of arranged window interfaces are displayed by using a canvas container, and a size of the canvas container is greater than a size of the screen of the electronic device. Therefore, the canvas may exceed a physical boundary of the screen of the electronic device. In the arrangement and display manner shown in the interface 103, effective information is not displayed, and a user cannot view more window interfaces at the same time. As a result, when the user switches between different window interfaces, it is inconvenient to operate, and due to a limitation of the size of the screen of the electronic device, overall display efficiency of the multi-window interface is low.

In view of this, embodiments of this application provide an interface display method. In the method, a multi-window interface interaction manner based on a multi-task scenario is provided. A display screen of an electronic device is divided into a primary display region and a secondary display region, to distinguish a primary/secondary relationship in a display interface. In addition, a spatial window display form is introduced into the secondary display region, so that more content of another window interface displayed in the secondary display region can be displayed. Therefore, embodiments of this application provide interface display manners in various multi-task scenarios, so that efficiency and continuity of multi-task processing can be improved, thereby improving use experience of multi-task processing performed by a user.

In an optional implementation, the spatial window display form may be understood as a form in which a window interface is perpendicular to a screen direction, and the other side of the window interface is flipped toward a back of the screen by using one side of the window interface as a central axis. It may also be understood that the window interface is flipped toward an inner side of a screen of a tablet computer. Optionally, the central axis may be determined based on a location of a display region of a window interface that needs to be displayed in a spatial window form. For example, when the display region is on a left side, a left side of the window interface may be used as the central axis. For another example, when the display region is on a right side, a right side of the window interface may be used as the central axis.

Optionally, the spatial window display form may be alternatively understood as a form in which a window interface is perpendicular to a screen direction, and the other side that is of the window interface and that is far away from a target vertical line is flipped toward a back of the screen by using the target vertical line of the window interface as a central axis. It may also be understood that the window interface is flipped toward the inner side of the screen of the tablet computer. Optionally, how to select the target vertical line may be determined based on a location of a display region of a window interface that needs to be displayed in the spatial window form. For example, when the display region is on a left side, the target vertical line may be a vertical line in a left half region of the window interface, for example, may be a vertical line at a distance of 1/3 of the screen from a left edge. For another example, when the display region is on a right side, the target vertical line may be a vertical line in a right half region of the window interface, for example, may be a vertical line at a distance of 1/4 of the screen from a right edge.

It should be noted that, in embodiments of this application, a specific implementation of the spatial window form is not limited. For example, the spatial window may alternatively be implemented through flipping and translation, to obtain various display interfaces described below.

The technical solutions in embodiments of this application may be applied to an electronic device, and the electronic device may be any device that can display an interface. For example, the electronic device may be an electronic device that can display an interface, for example, a mobile phone (for example, a foldable mobile phone), a tablet computer, a wearable device (for example, a watch or a band), a vehicle-mounted device (for example, a vehicle-mounted large screen or a central control screen), an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television). It may be understood that a specific type of the electronic device is not limited in embodiments of this application.

An example embodiment of an electronic device to which embodiments of this application may be applied may include but is not limited to an electronic device using HarmonyOS^{®}, iOS^{®}, Android^{®}, Microsoft^{®}, or another operating system. The electronic device may be, for example, the electronic device described in the foregoing embodiments.

FIG. 2 is a diagram of a possible hardware structure of an electronic device. An electronic device 200 includes components such as a radio frequency (radio frequency, RF) circuit 210, a power supply 220, a processor 230, a memory 240, an input unit 250, a display unit 260, an audio circuit 270, a communication interface 280, and a Wi-Fi module 290. A person skilled in the art may understand that the hardware structure of the electronic device 200 shown in FIG. 2 does not constitute a limitation on the electronic device 200. The electronic device 200 provided in embodiments of this application may include more or fewer components than those shown in the figure, may combine two or more components, or may have a different component configuration. Various components shown in FIG. 2 may be implemented in hardware, software, or a combination of hardware and software that includes one or more signal processing and/or application-specific integrated circuits.

The following specifically describes each component of the electronic device 200 with reference to FIG. 2.

The RF circuit 210 may be configured to: receive/send data in a communication or call process. Specifically, after receiving downlink data from a base station, the RF circuit 210 sends the downlink data to the processor 230 for processing. In addition, the RF circuit 210 sends to-be-sent uplink data to the base station. Generally, the RF circuit 210 includes but is not limited to an antenna, at least one amplifier, a transceiver, a coupler, a low noise amplifier (low noise amplifier, LNA), and a duplexer.

In addition, the RF circuit 210 may communicate with another device over a wireless communication network. The foregoing wireless communication may use any communication standard or protocol, including but not limited to a global system for mobile communication (global system of mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like.

A Wi-Fi technology belongs to a short-range wireless transmission technology. The electronic device 200 may be connected to an access point (access point, AP) via the Wi-Fi module 290, to access a data network. The Wi-Fi module 290 may be configured to receive/send data in a communication process.

The electronic device 200 may be physically connected to another device through the communication interface 280. Optionally, the communication interface 280 is connected to a communication interface of the another device through a cable, to implement data transmission between the electronic device 200 and the another device.

The electronic device 200 can further implement a communication service and interact with another electronic device. Therefore, the electronic device 200 needs to have a data transmission function, that is, the electronic device 200 needs to include a communication module. Although FIG. 2 shows communication modules such as the RF circuit 210, the Wi-Fi module 290, and the communication interface 280, it may be understood that the electronic device 200 includes at least one of the foregoing components or another communication module (for example, a Bluetooth module) configured to implement communication, to transmit data.

For example, when the electronic device 200 is a mobile phone, the electronic device 200 may include the RF circuit 210, and may further include the Wi-Fi module 290, or may include a Bluetooth module (not shown in FIG. 2). When the electronic device 200 is a tablet computer, the electronic device 200 may include the Wi-Fi module, or may include a Bluetooth module (not shown in FIG. 2). When the electronic device 200 is a smart home device, the electronic device 200 may include the Wi-Fi module 290, or may include a Bluetooth module (not shown in FIG. 2).

The memory 240 may be configured to store a software program and a module. The processor 230 runs the software program and the module stored in the memory 240, to perform various function applications of the electronic device 200 and data processing. Optionally, the memory 240 may mainly include a program storage region and a data storage region. The program storage region may store an operating system (mainly including software programs or modules respectively corresponding to a kernel layer, a system layer, an application framework layer, an application layer, and the like).

In addition, the memory 240 may include a high-speed random access memory, and may further include a non-volatile memory, for example, at least one magnetic disk storage device, a flash storage device, or another volatile solid-state storage device.

The input unit 250 may be configured to: receive edit operations of a plurality of different types of data objects such as digit or character information input by a user, and generate button signal input related to a user setting and function control of the electronic device 200. Optionally, the input unit 250 may include a touch panel 251 and another input device 252.

The touch panel 251, also referred to as a touchscreen, may capture a touch operation performed by the user on or near the touch panel (for example, an operation performed by the user on the touch panel 251 or near the touch panel 251 via any proper object or accessory such as a finger or a stylus), and drive a corresponding connection apparatus based on a preset program. In embodiments of this application, the touch panel 251 may capture a user operation performed by the user on or near the touch panel 251. For example, when the electronic device 200 is a mobile phone, the user operation may be an adjustment operation on a plurality of display regions on a screen, an editing operation on content in a window interface, or the like, or may be a preset gesture operation on a display interface, to trigger window interface switching, adding of a window interface, or the like.

Optionally, the another input device 252 may include but is not limited to one or more of a physical keyboard, a function button (for example, a volume control button or a power button), a tracking ball, a mouse, a joystick, and the like.

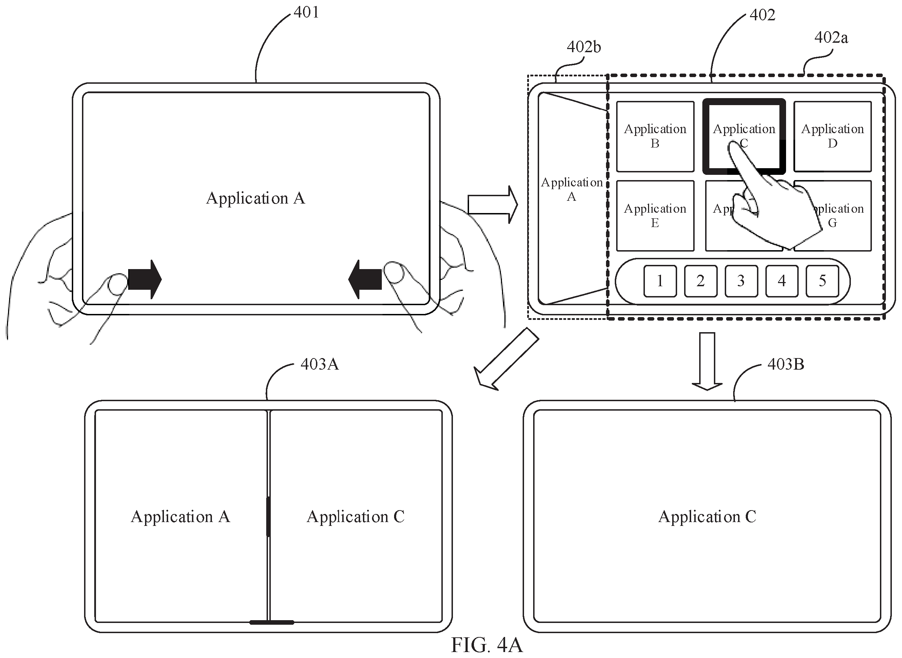

The display unit 260 may be configured to display information input by the user, information provided for the user, and various menus of the electronic device 200. The display unit 260 is a display system of the electronic device 200, and is configured to present an interface to implement human-computer interaction. The display unit 260 may include a display panel 261. Optionally, the display panel 261 may be configured in a form such as a liquid crystal display (liquid crystal display, LCD) or an organic light-emitting diode (organic light-emitting diode, OLED). In embodiments of this application, the display unit 260 may be configured to display a user interface, for example, may display various possible interaction interfaces that are based on a multi-task processing scenario and that are provided based on the method provided in embodiments of this application, for example, display interfaces in FIG. 4A to FIG. 12 in subsequent content.

The processor 230 is a control center of the electronic device 200, connects the components through various interfaces and lines, and executes various functions of the electronic device 200 and processes data by running or executing the software program and/or the module stored in the memory 240 and invoking data stored in the memory 240, to perform a plurality of services based on the electronic device 200. In embodiments of this application, the processor 230 may be configured to implement the interface display method provided in embodiments of this application.

The electronic device 200 further includes the power supply 220 (such as a battery) configured to supply power to the components. Optionally, the power supply 220 may be logically connected to the processor 230 via a power management system, to implement functions such as charge management, discharge management, and power consumption management via the power management system.

As shown in FIG. 2, the electronic device 200 further includes the audio circuit 270, a microphone 271, and a speaker 272, and may provide an audio interface between the user and the electronic device 200. The audio circuit 270 may be configured to: convert audio data into a signal that can be identified by the speaker 272, and transmit the signal to the speaker 272. The speaker 272 converts the signal into a sound signal for output. The microphone 271 is configured to: capture an external sound signal (for example, a sound of person speaking, or another sound), convert the captured external sound signal into a signal that can be identified by the audio circuit 270, and send the signal to the audio circuit 270. The audio circuit 270 may be further configured to: convert the signal sent by the microphone 271 into audio data, and then output the audio data to the RF circuit 210 for sending to, for example, another electronic device, or output the audio data to the memory 240 for subsequent processing.

Although not shown in FIG. 2, the electronic device 200 may further include a camera, at least one sensor, and the like. Details are not described herein. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in this embodiment of this application is the most basic system software running on the electronic device 200. A software system of the electronic device 200 may use a layered architecture, an event-driven architecture, a microkernel architecture, a micro service architecture, or a cloud architecture. In this embodiment of this application, an operating system using the layered architecture is used as an example to describe a software architecture of the electronic device 200.

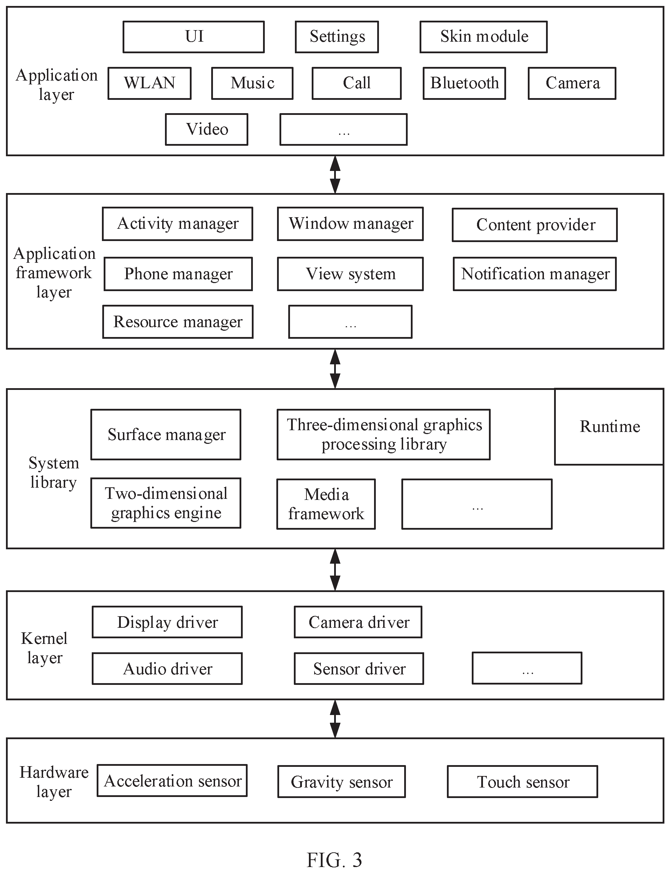

FIG. 3 is a block diagram of a software architecture of an electronic device according to an embodiment of this application. As shown in FIG. 3, the software architecture of the electronic device may be a layered architecture. For example, the software may be divided into several layers, and each layer has a clear role and task. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 3, the application layer may include a user interface (user interface, UI), a camera, settings, a skin module, a third-party application, and the like. The third-party application may include, for example, a wireless local area network (wireless local area network, WLAN), music, a call, Bluetooth, a video, and the like.

In a possible implementation, an application may be developed by using a Java language by invoking an application programming interface (application programming interface, API) provided by the application framework layer. A developer may interact with a bottom layer (for example, the hardware layer or the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 3, the application framework layer may include a view system, an activity manager, a window manager, a content provider, a phone manager, a resource manager, a notification manager, and the like.

The activity manager is configured to: manage a life cycle of each application, provide a common navigation rollback function, and provide an interaction interface for windows of all applications.

The window manager is configured to manage a window program. The window manager may obtain a size of a display, determine whether there is a status bar, lock a screen, take a screenshot, and the like. The content provider is configured to: store and obtain data, and enable the data to be accessed by an application. The data may include a video, an image, audio, calls that are made and answered, a browsing history and bookmarks, an address book, and the like.

The view system includes a visual control and a non-visual control, for example, a control for text display and a control for picture display. The view system may be configured to construct an application. A display interface may include one or more views. For example, a display interface including an SMS message notification icon may include a text display view and a picture display view.

The phone manager is configured to provide a communication function of the electronic device, for example, call status management (including answering, hang-up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured for download completion notification, message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is given, the electronic device vibrates, or an indicator light blinks.

A runtime includes a core library and a virtual machine. The runtime schedules and manages an operating system.

The core library includes two parts: a function that needs to be invoked in a Java language and a core library of the operating system. The application layer and the application framework layer run on the virtual machine. The virtual machine executes java files of the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to: manage a display subsystem, and provide fusion of two-dimensional and 3D layers for a plurality of applications.

The media framework supports playback and recording of audio and videos in a plurality of commonly used formats, static image files, and the like. The media framework may support a plurality of audio and video coding formats such as MPEG-4, H.264, MP3, AAC, AMR, JPG, and PNG.

The three-dimensional graphics processing library is configured to implement three-dimensional graphics drawing, image rendering, compositing, layer processing, and the like.

The two-dimensional graphics engine is a drawing engine for two-dimensional drawing.

In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

Generally, the electronic device 200 may run a plurality of applications at the same time. In a simple case, one application may correspond to one process. In a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one item (piece) of a, b, or c may represent: a, b, c, a and b, a and c, b and c, or a, b and c, where a, b, and c may be singular or plural. "A plurality of" means two or more than two. The term "and/or" is used to describe an association relationship between associated objects and represents that three relationships may exist. For example, A and/or B may indicate the following cases: Only A exists, both A and B exist, and only B exists, where A and B may be singular or plural. The character "/" usually indicates an "or" relationship between associated objects.

In addition, it should be understood that, in descriptions of this application, terms such as "first" and "second" are merely used for distinguishing and description, but should not be understood as indicating or implying relative importance, or should not be understood as indicating or implying an order. For example, "a first operation" and "a second operation" in the following embodiments are merely used to distinguish and describe operations in different scenarios, and are not used to limit a specific operation manner or the like.

It should be understood that a hardware structure of the electronic device may be shown in FIG. 2, and a software system architecture may be shown in FIG. 3. A software program and/or a module corresponding to the software system architecture in the electronic device may be stored in the memory 240, and the processor 230 may run the software program and an application stored in the memory 240, to perform a procedure of the interface display method provided in embodiments of this application.

To facilitate understanding of the interface display method provided in this application, the following describes an implementation process of the method provided in this application with reference to content shown in FIG. 4A to FIG. 12. For ease of understanding, the following first describes several possible application scenarios in which the method provided in this application is used. It may be understood that various application scenarios described below are merely examples, and different scenarios may be further combined.

It should be noted that, in the following embodiments, an example in which an electronic device is a tablet computer or a foldable mobile phone in an unfolded state is used. For implementations of other types of electronic devices, refer to implementations of the tablet computer or the foldable mobile phone in the unfolded state. Details are not described again in this application.

### (1) Window interface switching scenario

The window interface switching scenario may include a scenario in which a window interface is added, and may further include a scenario of switching from displaying a window to displaying another window interface, and the like.

### Scenario A: Scenario in which a window interface is added.

FIG. 4A is a diagram of an interface for triggering window interface switching according to an embodiment of this application. As shown in an interface 401 in FIG. 4A, a window interface of an application A is displayed on a screen of a tablet computer or a foldable mobile phone in an unfolded state. In the interface 401, the tablet computer or the foldable mobile phone in the unfolded state detects a first operation and displays an interface 402 in response to the first operation. The first operation is used to trigger window interface switching or adding of a to-be-displayed window interface. For example, the first operation may be a two-hand single-finger bottom pinch gesture shown in the interface 401, or may be performed in another manner. A specific manner of the first operation is not limited in this application.

The interface 402 includes a primary display region 402a and a secondary display region 402b.

The primary display region 402a is used to display a task center, and the task center may include a thumbnail of a window interface and/or an application icon of an application associated with the application A. As shown in the interface 402, applications associated with the application A may include but are not limited to an application B, an application C, an application D, an application E, an application F, an application G, an application 1, an application 2, an application 3, an application 4, and an application 5. The application B to the application G are displayed in a form of thumbnails of window interfaces, and are usually window interfaces started in a background of the tablet computer or the foldable mobile phone in the unfolded state. The application 1 to the application 5 are displayed in a form of icons, and may be applications determined based on association degrees with the application A, or may be applications determined based on information such as use frequencies. A displayed associated application, an application order, and a quantity of applications are not limited in this application.

It should be noted that window interfaces of different applications are merely used as examples in the interface 402 and subsequent embodiments. The task center may further include window interfaces of different application instances or different atomic services that belong to a same application. Details are not described in this application.

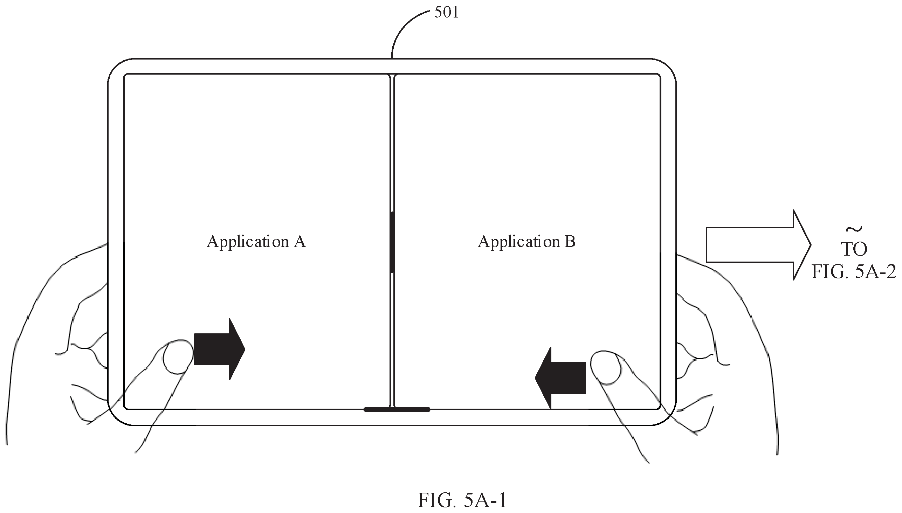

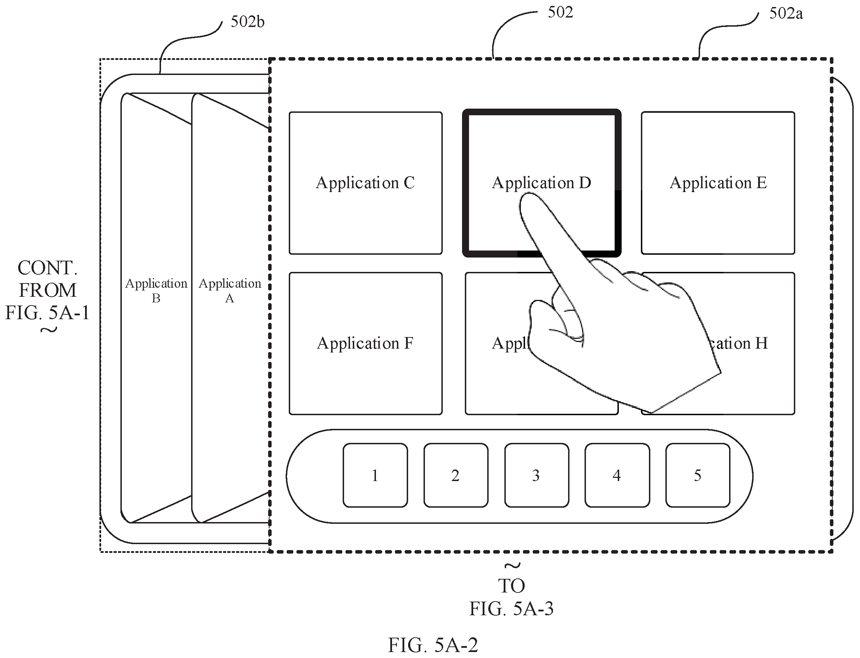

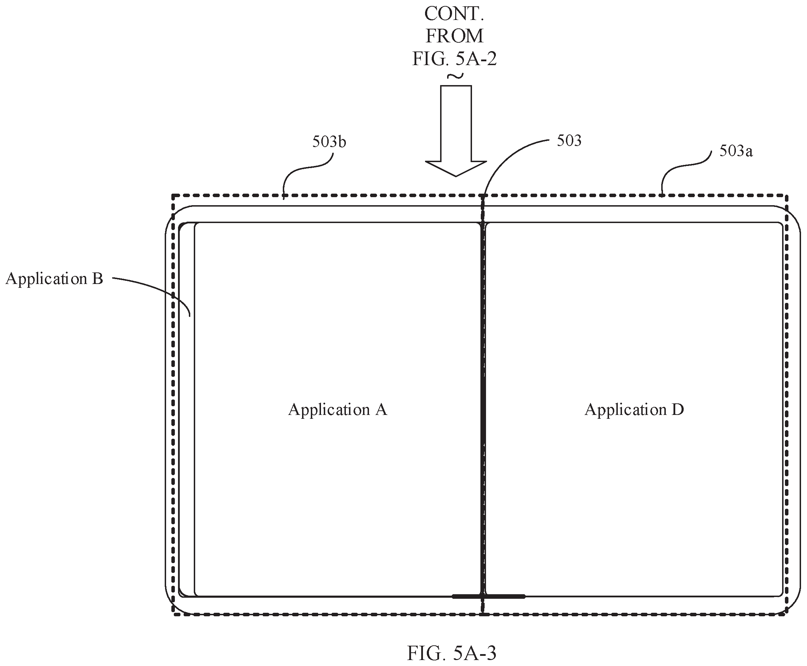

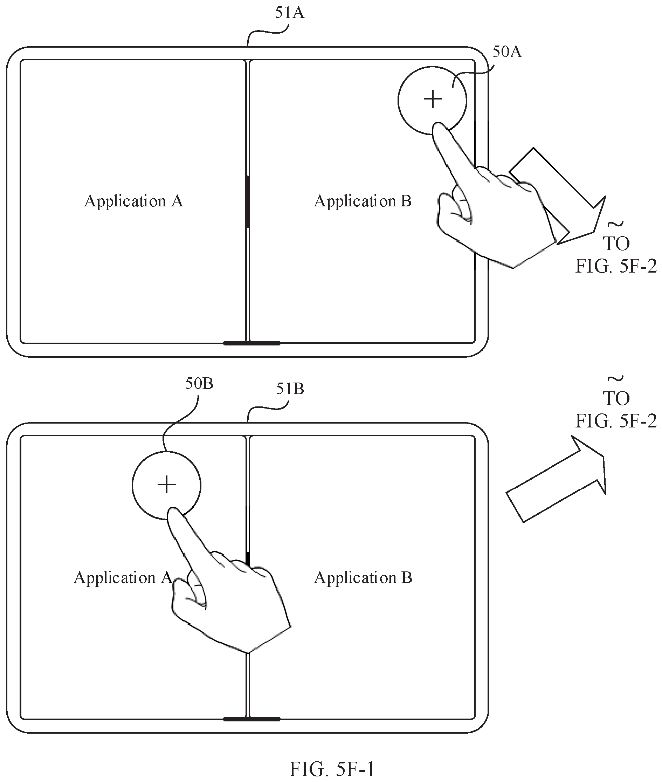

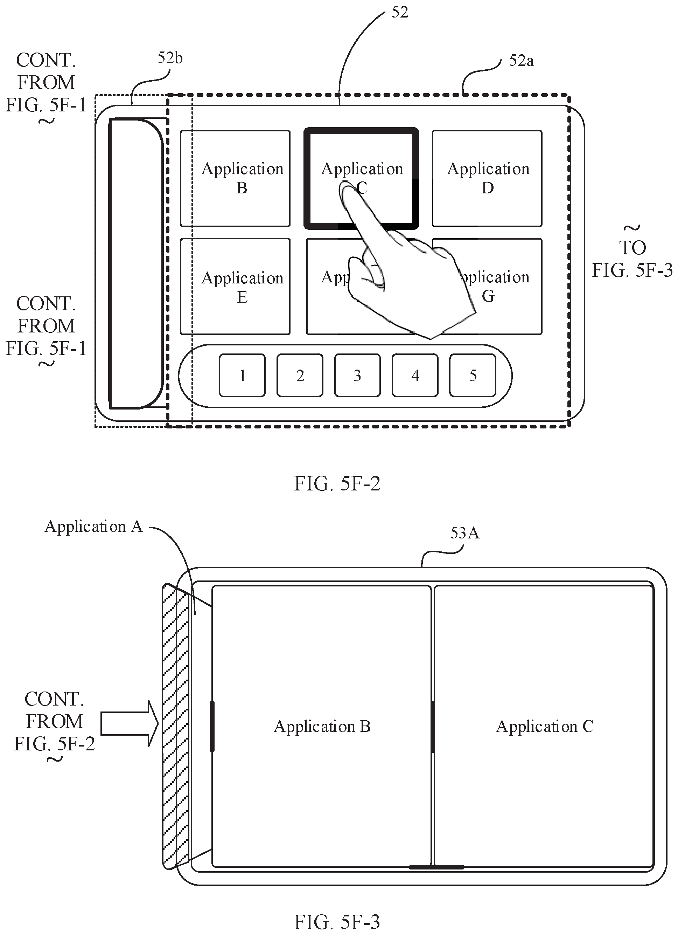

In addition, it should be further noted that, although not shown in the interface 402, the task center may further include a thumbnail of a split-screen interface determined based on a plurality of applications and/or application instances and/or atomic services, for example, a thumbnail of a split-screen interface determined based on the application H and the application I, a thumbnail of a split-screen interface determined based on an application H1 and an application H2, or a thumbnail of a split-screen interface determined based on the application H1 and the application I. The split-screen interface is usually a split-screen interface started in the background of the tablet computer or the foldable mobile phone in the unfolded state. Optionally, the split-screen interface may be usually a dual split-screen interface obtained based on two window interfaces. Optionally, the split-screen interface may alternatively be a split-screen interface obtained based on three or more window interfaces, for example, an interface 503 shown in FIG. 5A-3, or may be in another split-screen form. A specific form of the split-screen interface is not limited in this application.

The secondary display region 402b includes the window interface of the application A displayed in a spatial window form. With reference to the interface 401 and the interface 402, a spatial window may be understood as follows: the window interface of the application A displayed in the interface 401 is oriented to be perpendicular to a screen direction, and the other side of the window interface is flipped toward a back of the screen by using a left side of the window interface of the application A as a central axis. In other words, it may be understood that the window interface is flipped toward an inner side of the screen of the tablet computer or the foldable mobile phone in the unfolded state. In addition, in this embodiment of this application, the flipping direction of the spatial window is not limited to the direction shown in the interface 402. The spatial window may be flipped in a flipping direction shown in the interface 702 shown in FIG. 7B in the following embodiment, or may be flipped in a flipping direction shown in the interface 803 shown in FIG. 8A in the following embodiment.

It may be understood that, the window interface is displayed in the spatial window form, so that the window interface may be displayed in a side-facing orientation on one side of the screen of the tablet computer or the foldable mobile phone in the unfolded state. In this way, a three-dimensional sense of the window interface in space can be enhanced, and more content of the window interface can be displayed. In addition, residual attention on display content in the window interface of the application A can be further retained, thereby improving continuity of window interface switching. It may be further understood that, corresponding to a form in which a window interface is displayed in a side-facing orientation in the secondary display region, a form in which a window interface is displayed in the primary display region may be understood as tiled display, or may be understood as displaying the window interface in a two-dimensional plane form. It should be noted that tiled display is only used to describe a display form of a window interface, and is not used to limit a display location, a display size, and the like of the window interface. When the window interface is displayed in the tiled form, the window interface is on a same plane as a screen on which the window interface is displayed in terms of visual effect. For example, tiled display may be specifically full-screen display, split-screen display, or the like. For ease of understanding, in the following embodiments, display in a side-facing orientation may be used to describe a window interface displayed in the spatial window form, and tiled display may be used to describe a window interface displayed parallel to the screen.

In this embodiment of this application, for the primary display region 402a and the secondary display region 402b shown in the interface 402, a display size of the primary display region 402a is greater than a display size of the secondary display region 402b. In this way, the primary display region and the secondary display region are defined on the screen, so that the user can pay more attention to a window interface displayed in the larger primary display region, and a window interface is displayed in the smaller secondary display region in the spatial window form. In this way, residual attention on an original window interface before switching can be further retained, thereby improving efficiency and continuity of multi-task processing.

In the interface 402, the tablet computer or the foldable mobile phone in the unfolded state may detect a second operation and display an interface 403A or an interface 403B in response to the second operation. The second operation indicates to switch to a target window interface, and may be, for example, a tap operation. A specific manner of the second operation is not limited in this application.

For example, the interface 403A is a split-screen interface of the application A and the application C. In this example, when detecting the first operation and the second operation, the tablet computer or the foldable mobile phone in the unfolded state may automatically trigger, in response to the first operation and the second operation, switching from displaying the window interface of the application A shown in the interface 401 to displaying the split-screen interface of the application A and the application C shown in the interface 403A. In this way, convenient interaction with a newly added window interface in a multi-task processing scenario can be implemented, thereby improving efficiency and continuity of multi-task processing.

For another example, the interface 403B is a window interface of the application C. In this example, when detecting the first operation and the second operation, the tablet computer or the foldable mobile phone in the unfolded state may alternatively switch, in response to the first operation and the second operation, from displaying the window interface of the application A shown in the interface 401 to displaying the window interface of the application C shown in the interface 403B. In this way, convenient interaction for window interface switching in a multi-task processing scenario can be implemented by using the task center shown in the primary display region 402a, thereby improving efficiency and continuity of window interface switching.

It should be noted that locations of the primary display region and the secondary display region shown in the interface 402 are not limited in this embodiment of this application. For example, the primary display region may alternatively be displayed on a left side, and the secondary display region is displayed on a right side. Correspondingly, in this embodiment of this application, a side location at which the window interface of the application A shown in the interface 402 is displayed in a side-facing orientation is not limited, and may be determined based on an operation manner of the first operation or the like. For example, the window interface of the application A may be displayed in a side-facing orientation on a left side of the screen as shown in the interface 402, or may be displayed in a side-facing orientation on a right side of the screen.

It should be further noted that a manner of obtaining a display interface of the task center shown in the interface 402 is not limited in this embodiment of this application. For example, the manner may be determined based on an association degree with the application A, may be determined based on a use order, or may be determined based on use frequency. In addition, in this embodiment of this application, different window interfaces are not limited to come from different applications. For example, different window interfaces may alternatively come from different instances or different atomic services of a same application. For example, the task center shown in the interface 402 may further include a thumbnail of another instance interface of the application A, for example, a thumbnail of a window interface of an application A2 or a thumbnail of a window interface of an application A3. In addition, it should be further noted that the task center may alternatively be a desktop of an electronic device.

It should be further noted that a specific form of the task center shown in the interface 402 is not limited in this embodiment of this application. For example, when the task center needs to display a large quantity of thumbnails of window interfaces and/or application icons, the task center may display the thumbnails and/or the application icons in a form of a multi-page interface, a scrollable interface, or the like, or may display the thumbnails and/or the application icons by adaptively adjusting sizes of the thumbnails of the window interfaces and/or sizes of the application icons. A specific implementation is not limited in this application. In addition, the primary display region 402a shown in the interface 402 may be a part of a display region on the screen, or may be displayed in a form of a pop-up window. A display form of the primary display region is not limited in this embodiment of this application.

In addition, it should be further noted that a side-facing degree of a spatial window is not limited in this embodiment of this application. It may be understood that when the side-facing degree is large, a horizontal width occupied by the spatial window is smaller, or when the side-facing degree is small, a horizontal width occupied by the spatial window is larger. In addition, a display degree of the application A displayed in the spatial window form in the secondary display region 402b is not limited in this application, and may be determined, based on a side-facing degree of the spatial window and a horizontal width of the secondary display region 402b, to fully display or partially display the window interface of the application A.

In addition, in this embodiment of this application, preset display effect, for example, processing such as a shadow or lighting, may be further added to the window interface of the application A displayed in the spatial window form, to enhance a three-dimensional sense, a perspective sense, and the like of the spatial window.

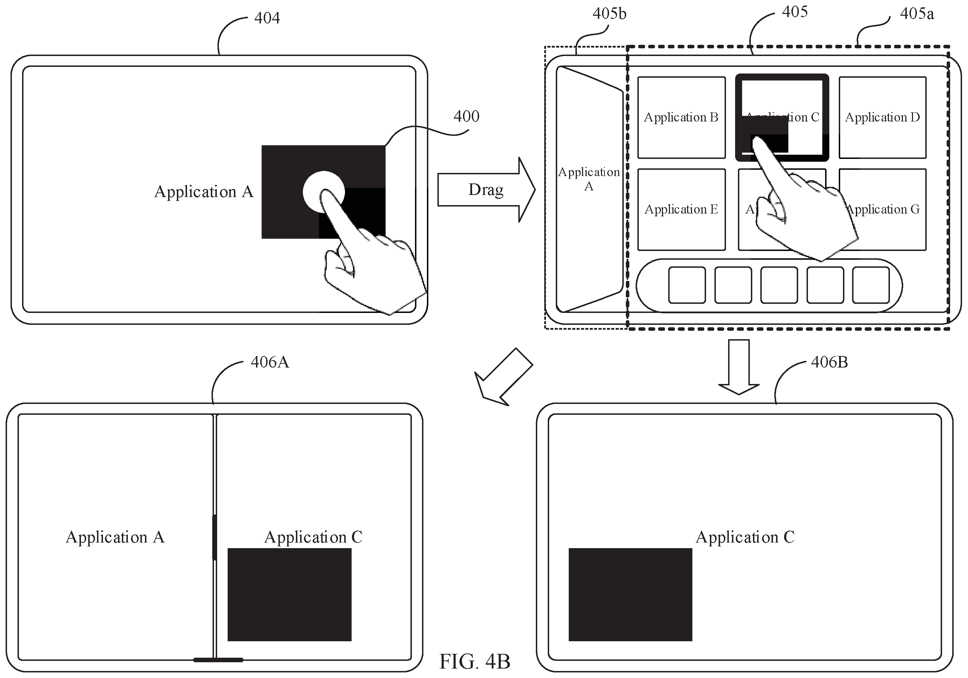

FIG. 4B is another diagram of an interface for triggering window interface switching according to an embodiment of this application. As shown in an interface 404 in FIG. 4B, the window interface of the application A is displayed on the screen of the tablet computer or the foldable mobile phone in the unfolded state. In the interface 404, the tablet computer or the foldable mobile phone in the unfolded state detects a third operation and displays an interface 405 in response to the third operation. The third operation is used to trigger a drag operation on first display content 400 in the window interface of the application A. For example, the third operation may be a touch and hold operation shown in the interface 404, or may be another manner. A specific manner of the third operation is not limited in this application. Similar to the interface 402 in FIG. 4A, the interface 405 includes a primary display region 405a and a secondary display region 405b.

Similar to the primary display region 402a in the interface 402, the primary display region 405a is used to display a task center. Similar to the secondary display region 402b in the interface 402, the secondary display region 405b includes the window interface of the application A displayed in the spatial window form. Details are not described herein again. In addition, for the primary display region 405a and the secondary display region 405b shown in the interface 405, a display size of the primary display region 405a is greater than a display size of the secondary display region 405b.

In the interface 405, the tablet computer or the foldable mobile phone in the unfolded state may detect a fourth operation and display an interface 406A or an interface 406B in response to the fourth operation. The fourth operation indicates an operation of dragging the dragged first display content 400 to the application C, for example, may be a drag operation. A specific manner of the fourth operation is not limited in this application.

For example, the interface 406A is a split-screen interface of the application A and the application C. In this example, when detecting the third operation and the fourth operation, the tablet computer or the foldable mobile phone in the unfolded state may automatically trigger, in response to the third operation and the fourth operation, switching from displaying the window interface of the application A shown in the interface 404 to displaying the split-screen interface of the application A and the application C shown in the interface 406A, and cut or copy the first display content 400 from the application A to a window interface of the application C. In this way, convenient interaction of content editing in a multi-task processing scenario can be implemented, thereby improving efficiency and continuity of multi-task processing.

For another example, the interface 406B is the window interface of the application C. In this example, when detecting the third operation and the fourth operation, the tablet computer or the foldable mobile phone in the unfolded state may alternatively switch, in response to the third operation and the fourth operation, from displaying the window interface of the application A shown in the interface 404 to displaying the window interface of the application C shown in the interface 406B. In this way, convenient interaction of content editing in a multi-task processing scenario can be implemented by using the task center shown in the primary display region 405a, thereby improving efficiency and continuity of content editing in different window interfaces.

It should be noted that the window interface that is of the application A and that is displayed in the secondary display region in the spatial window form may be fully displayed or partially displayed.

For example, the window interface that is of the application A and that is displayed in the spatial window form shown in FIG. 4A and FIG. 4B is fully displayed. In this way, display of the window interface of the application A can be improved by fully displaying the window interface of the application A, to facilitate continuity of multi-task processing performed by the user.

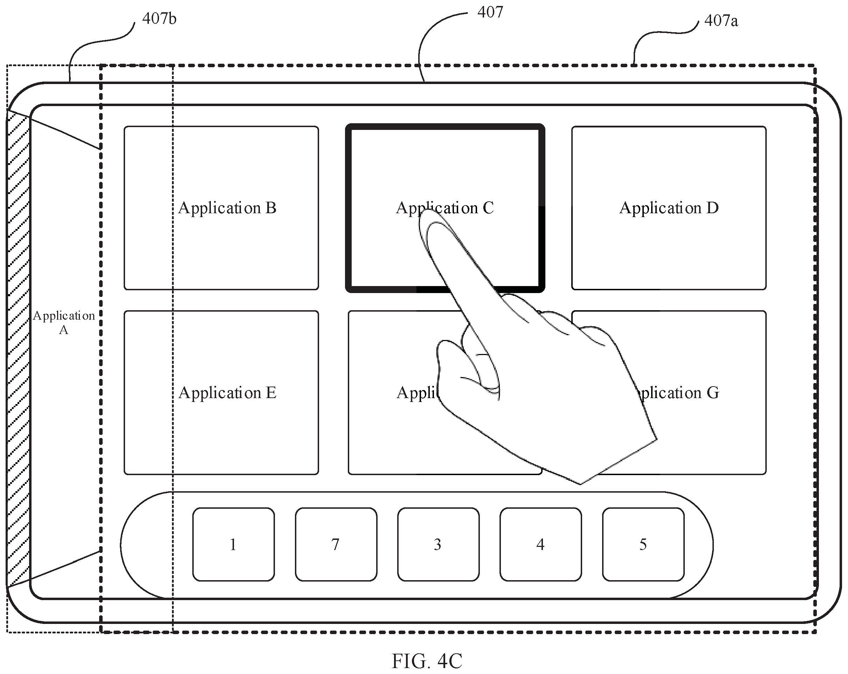

For another example, FIG. 4C is a diagram of a spatial window according to an embodiment of this application. An interface 407 shown in FIG. 4C may include a primary display region 407a and a secondary display region 407b. In the secondary display region 407b, the window interface that is of the application A and that is displayed in the spatial window form may alternatively be partially displayed. For example, in FIG. 4C, a region filled with slashes of the application A is not displayed on the screen. In this way, through partial display, a display area of the primary display region can be increased, more attention can be paid to the primary display region, and residual attention on continuous tasks can be retained, thereby improving continuity in a multi-task processing scenario.

Based on the scenarios described in FIG. 4A and FIG. 4B, displaying a single window interface on the screen of the tablet computer or the foldable mobile phone in the unfolded state may be switched to displaying a multi-window interface. This can facilitate multi-task processing performed by the user on two window interfaces. It may be understood that, when the multi-window interface is displayed on the screen of the tablet computer or the foldable mobile phone in the unfolded state, the multi-window interface may be switched to displaying of more window interfaces. For details, refer to the content described in FIG. 4A and FIG. 4B. For example, displaying of a split-screen interface including two window interfaces may be switched to displaying of a split-screen interface including three window interfaces. A specific implementation process is shown in FIG. 5A-1, FIG. 5A-2, and FIG. 5A-3 to FIG. 5C-1, FIG. 5C-2, FIG. 5C-3, FIG. 5C-4, and FIG. 5C-5 below.

FIG. 5A-1, FIG. 5A-2, and FIG. 5A-3 are still another diagram of an interface for triggering window interface switching according to an embodiment of this application. As shown in an interface 501 in FIG. 5A-1, a split-screen interface including the window interface of the application A and a window interface of the application B is displayed on the screen of the tablet computer or the foldable mobile phone in the unfolded state. In the interface 501, the tablet computer or the foldable mobile phone in the unfolded state detects a first operation and displays an interface 502 in response to the first operation. For the first operation, refer to FIG. 4A. Details are not described herein again.

The interface 502 includes a primary display region 502a and a secondary display region 502b. The primary display region 502a is used to display a task center, and the task center includes a thumbnail of a window interface and/or an application icon of an application associated with the application A and/or the application B. The secondary display region 502b is used to display the window interface of the application A and the window interface of the application B that are separately displayed in the spatial window form. It can be seen from the interface 502 that, when at least two window interfaces are displayed in the spatial window form, the window interface of the application B may be displayed in parallel behind the window interface of the application A, and a part of content of both the window interfaces may be displayed. In addition, it should be further noted that the task center may alternatively be a desktop of an electronic device.

In addition, the primary display region 502a shown in the interface 502 may be a part of a display region on the screen, or may be displayed in a form of a pop-up window. A display form of the primary display region is not limited in this embodiment of this application.

In the interface 502, the tablet computer or the foldable mobile phone in the unfolded state may detect a second operation and display an interface 503 in response to the second operation. As shown in the interface 503, the two window interfaces included in the original split-screen interface may be stacked and displayed in a display region 503b of the screen, that is, the window interface of the application A and the window interface of the application B are stacked and displayed. In addition, a selected window interface, that is, a window interface of the application D, may be displayed in a display region 503a of the screen. It can be seen from the interface 503 that when at least two window interfaces are stacked and displayed, the window interface of the application B is almost fully displayed below the window interface of the application A.

It should be noted that, in this embodiment of this application, display locations of the window interface of the application A and the window interface of the application B that are shown in the secondary display region 502b are not limited. For example, the display locations may be shown in the secondary display region 502b in the interface 502, that is, the window interface of the application A is on the right, and the window interface of the application B is on the left. Alternatively, the display locations may be that the window interface of the application A is on the left, and the window interface of the application B is on the right.

It should be noted that, in this embodiment of this application, a stacking order of the original displayed split-screen interfaces in the display region 503b is not limited. As shown in the interface 503, the stacking order of the original split-screen interfaces may be as shown in the interface 503: The window interface of the application A is on the top, and the window interface of the application B is on the bottom. Alternatively, the stacking order of the original split-screen interfaces may be as follows: The window interface of the application A is on the bottom, and the window interface of the application B is on the top.

It should be noted that a display manner of the interface 503 is not limited in this embodiment of this application. For example, the display manner may alternatively be as follows: The window interface of the application A is displayed in the display region 503b, and the window interface of the application D and the window interface of the application B are stacked and displayed in the display region 503a. In this way, a display location of an original split-screen interface may be unchanged, and a newly started window interface is stacked on any window interface in the original split-screen interface, so that a new window interface can be added.

In addition, the interface 503 shown in FIG. 5A-3 may alternatively be used to directly display only the window interface of the application D. A display manner of a window interface or a split-screen interface selected for switching in the interface 502 is not limited in this application.

With reference to the content described in FIG. 5A-1, FIG. 5A-2, FIG. 5A-3, and FIG. 4A, it can be learned that, according to the method provided in this embodiment of this application, when one or more window interfaces are displayed on the screen, more window interfaces may be triggered to be displayed, thereby improving continuity in a multi-task processing scenario, and improving efficiency of switching between a plurality of window interfaces by the user.

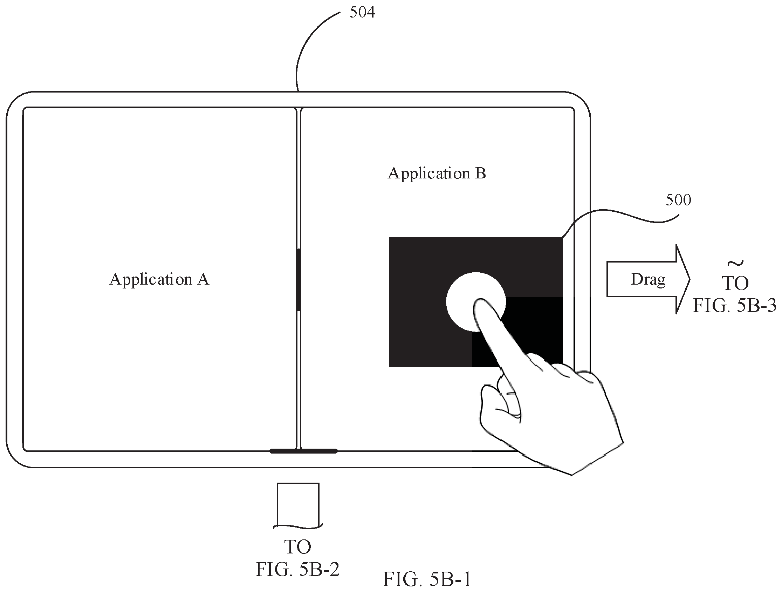

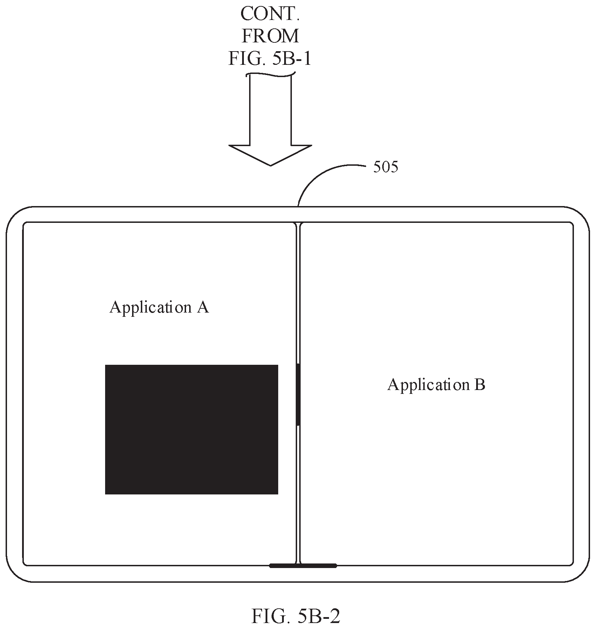

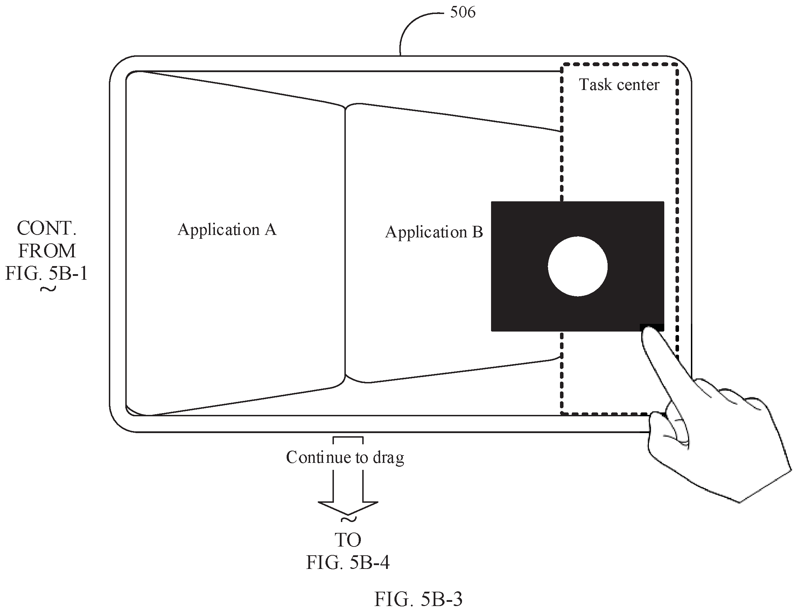

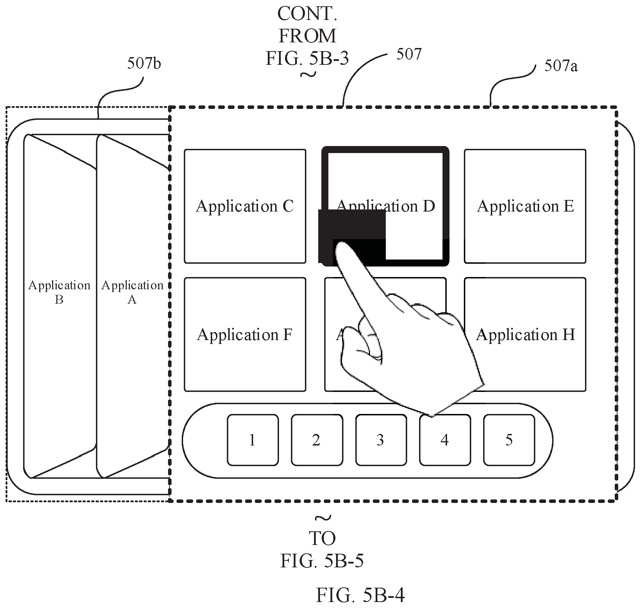

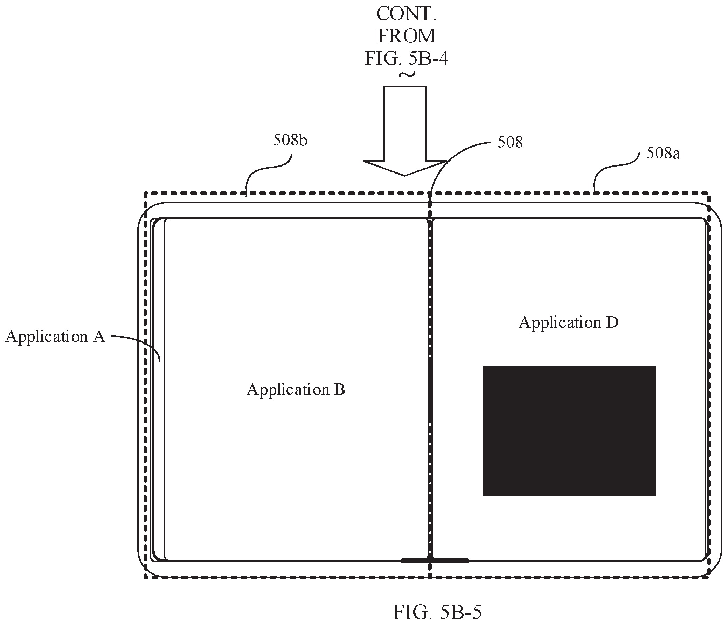

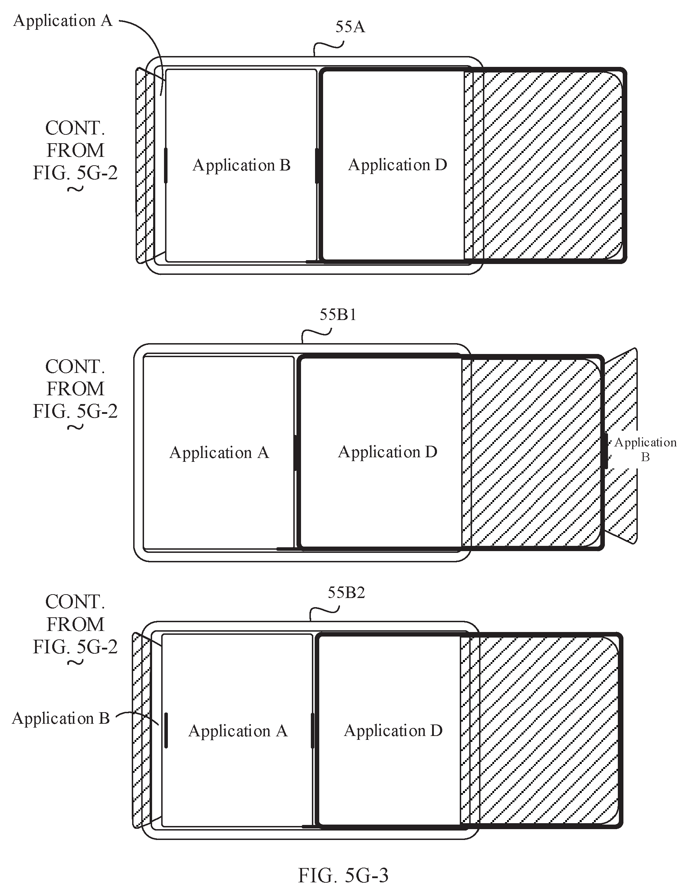

FIG. 5B-1, FIG. 5B-2, FIG. 5B-3, FIG. 5B-4, and FIG. 5B-5 are yet another diagram of an interface for triggering window interface switching according to an embodiment of this application. As shown in an interface 504 in FIG. 5B-1, a split-screen interface including the window interface of the application A and the window interface of the application B is displayed on the screen of the tablet computer or the foldable mobile phone in the unfolded state. In the interface 504, the tablet computer or the foldable mobile phone in the unfolded state detects a third operation and displays an interface 505 or an interface 506 in response to the third operation. In the interface 504, the third operation is used to trigger a drag operation on second display content 500 in the window interface of the application B. In addition, the third operation shown in FIG. 5B-1 may be further divided into two scenarios. When detecting that a user drags the second display content 500 to the left, the tablet computer or the foldable mobile phone in the unfolded state may display the interface 505; or when detecting that the user drags the second display content 500 to the right, the tablet computer or the foldable mobile phone in the unfolded state may display the interface 506.

For example, the interface 505 indicates that the tablet computer or the foldable mobile phone in the unfolded state detects that the user cuts or copies the second display content 500 in the window interface of the application B to the window interface of the application A.

For another example, the interface 506 indicates that the tablet computer or the foldable mobile phone in the unfolded state detects that the user cuts or copies the second display content 500 in the window interface of the application B to a thumbnail of an alternative window interface and/or an alternative application icon in the task center. In the interface 506, the tablet computer or the foldable mobile phone in the unfolded state may gradually transition, in response to the drag operation of the user, from displaying the split-screen interface shown in the interface 504 to displaying an interface that is shown in an interface 507 and that includes a primary display region 507a and a secondary display region 507b. The interface 506 is an intermediate transition interface. The primary display region 507a in the interface 507 is used to display a task center, and the task center includes a thumbnail of a window interface and/or an application icon of an application associated with the application A and/or the application B. The secondary display region 507b in the interface 507 is used to display the window interface of the application A and the window interface of the application B that are separately displayed in the spatial window form.

In the interface 507, the tablet computer or the foldable mobile phone in the unfolded state may detect a fourth operation and display an interface 508 in response to the fourth operation. As shown in the interface 508, two window interfaces included in the original split-screen interface may be stacked and displayed in a display region 508b of the screen, that is, the window interface of the application A and the window interface of the application B are stacked and displayed. In addition, a target window interface of the drag operation, that is, the window interface of the application D, may be displayed in a display region 508a of the screen. It may be understood that, based on that a drag source of the second display content 500 is the window interface of the application B, as shown in the interface 508, the window interface of the application B may be stacked above the window interface of the application A. In this way, efficiency and continuity of multi-task processing performed by the user can be improved.

With reference to the content described in FIG. 5B-1, FIG. 5B-2, FIG. 5B-3, FIG. 5B-4, FIG. 5B-5, and FIG. 4B, it can be learned that, according to the method provided in this embodiment of this application, when one or more window interfaces are displayed on the screen, display content from one window interface may be dragged to another window interface that has been displayed, or may be dragged to another window that has not been displayed. In addition, the task center and the original display interface are further displayed in a manner of a primary/secondary relationship. Therefore, efficiency of switching between a plurality of window interfaces by the user can be improved, and continuity in a multi-task processing scenario can be improved.

FIG. 5C-1, FIG. 5C-2, FIG. 5C-3, FIG. 5C-4, and FIG. 5C-5 are still yet another diagram of an interface for triggering window interface switching according to an embodiment of this application. Compared with FIG. 5B-1, FIG. 5B-2, FIG. 5B-3, FIG. 5B-4, and FIG. 5B-5, the second display content 500 may alternatively be content that belongs to the window interface of the application A, as shown in an interface 509. In the interface 509, the tablet computer or the foldable mobile phone in the unfolded state detects a third operation and displays an interface 510 in response to the third operation. As shown in the interface 510, the third operation is an operation of dragging the second display content 500 that belongs to the window interface of the application A to the window interface of the application B.

The tablet computer or the foldable mobile phone in the unfolded state may detect a drag operation that indicates to drag the second display content 500 to a specified region of the window interface of the application B. The specified region may be, for example, a region near a right edge of the window interface of the application B. In addition, a time threshold corresponding to the specified region may be further set, and the time threshold may be, for example, 1 second or 2 seconds.

The tablet computer or the foldable mobile phone in the unfolded state gradually displays an interface 511 and an interface 512 in response to the drag operation or in response to detecting that the time threshold is reached after the drag operation is performed. The interface 511 is similar to the interface 506 in FIG. 5B-3, and may be understood as an intermediate transition interface. Similar to the interface 507 in FIG. 5B-4, the interface 512 may include a primary display region 512a and a secondary display region 512b. The primary display region 512a is used to display a task center, and the secondary display region 512b is used to display the window interface of the application A and the window interface of the application B that are separately displayed in the spatial window form.

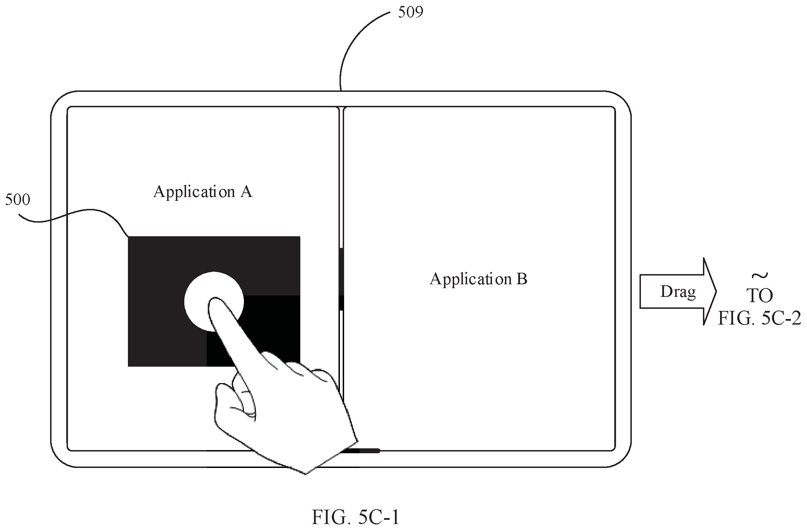

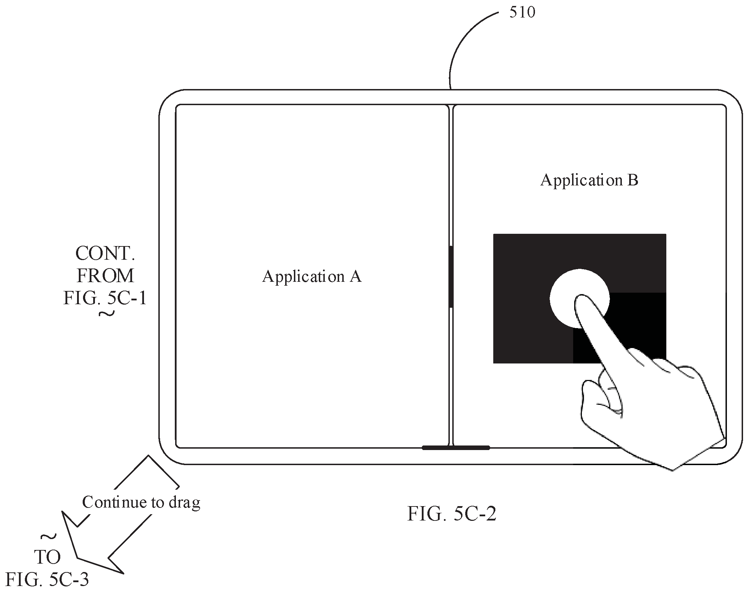

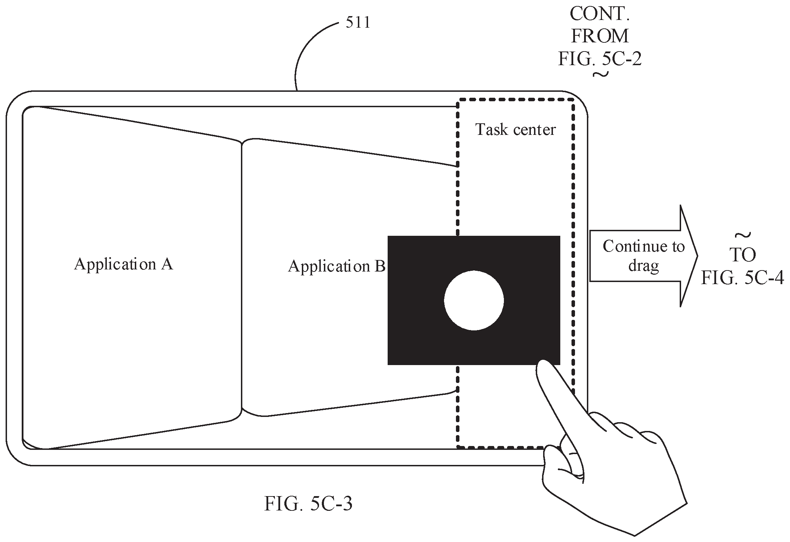

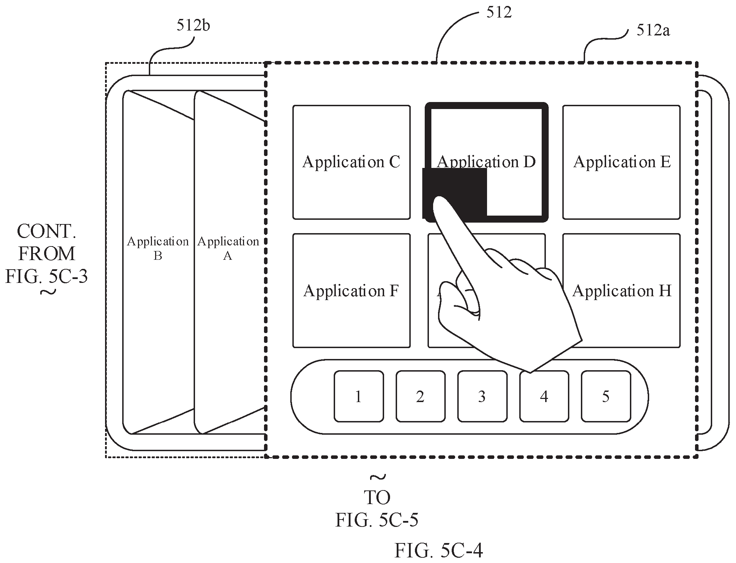

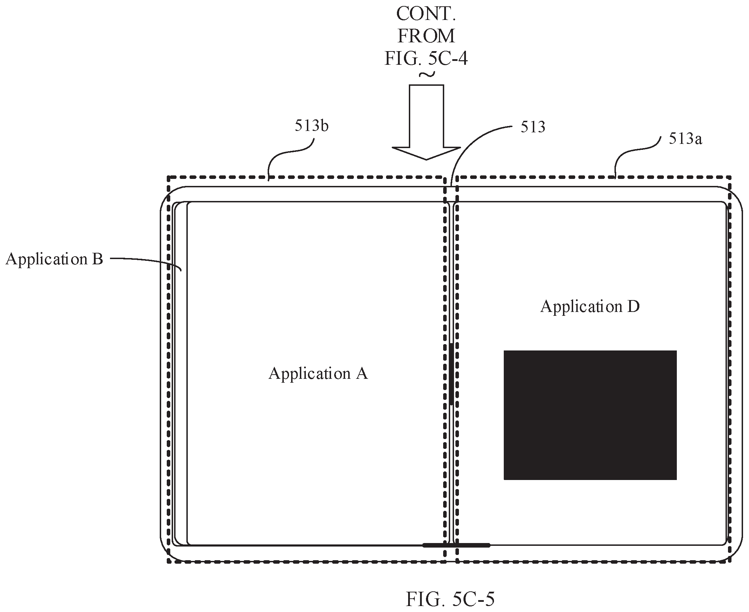

In the interface 512, the tablet computer or the foldable mobile phone in the unfolded state may detect a fourth operation and display an interface 513 in response to the fourth operation. As shown in the interface 513, two window interfaces included in the original split-screen interface may be stacked and displayed in a display region 513b on a left side of the screen, that is, the window interface of the application A and the window interface of the application B are stacked and displayed. In addition, a target window interface of the drag operation, that is, the window interface of the application D, may be displayed in a display region 513a on a right side of the screen. It may be understood that, based on that a drag source of the second display content 500 shown in FIG. 5C-1 being the window interface of the application A, as shown in the interface 513, the window interface of the application A may be located above the window interface of the application B. In this way, efficiency and continuity of multi-task processing performed by the user can be improved.

It should be noted that as shown in the interface 508 in FIG. 5B-5 and the interface 513 shown in FIG. 5C-5, in a scenario in which a window interface is triggered to be added by using a drag operation, a window interface that cannot be displayed may be stacked and displayed, or may be displayed in the spatial window form. This is not limited in this application. It may be understood that the content described in the scenarios in this application may be replaced with or combined with each other. During specific implementation, the scenarios described in embodiments of this application are not limited.

In a possible embodiment, a window interface may also be added based on a display interface in which a window size is adjusted. For example, one window interface may be further added based on a display interface shown in an interface 802, an interface 804, or an interface 806 shown in FIG. 8A and FIG. 8B, and an updated and displayed window interface is an interface 902, an interface 904, an interface 905, or an interface 906 shown in FIG. 9A and FIG. 9B.

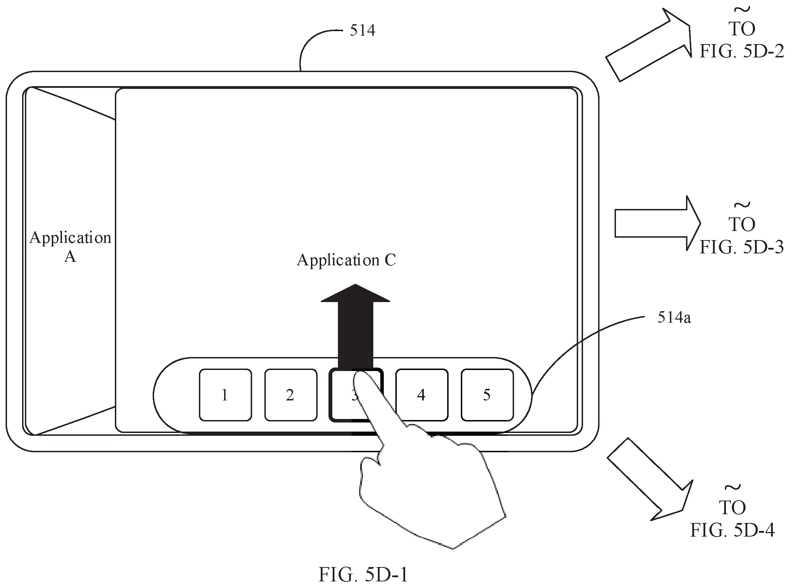

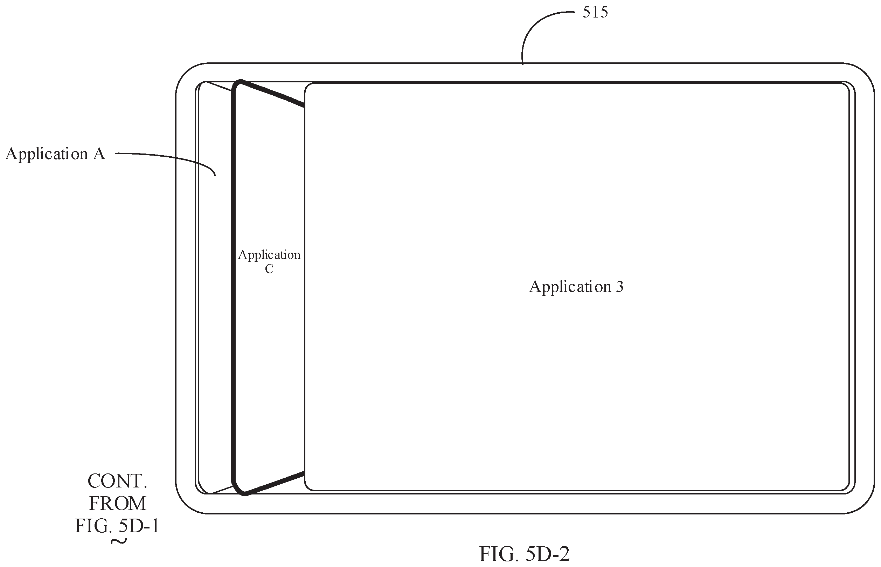

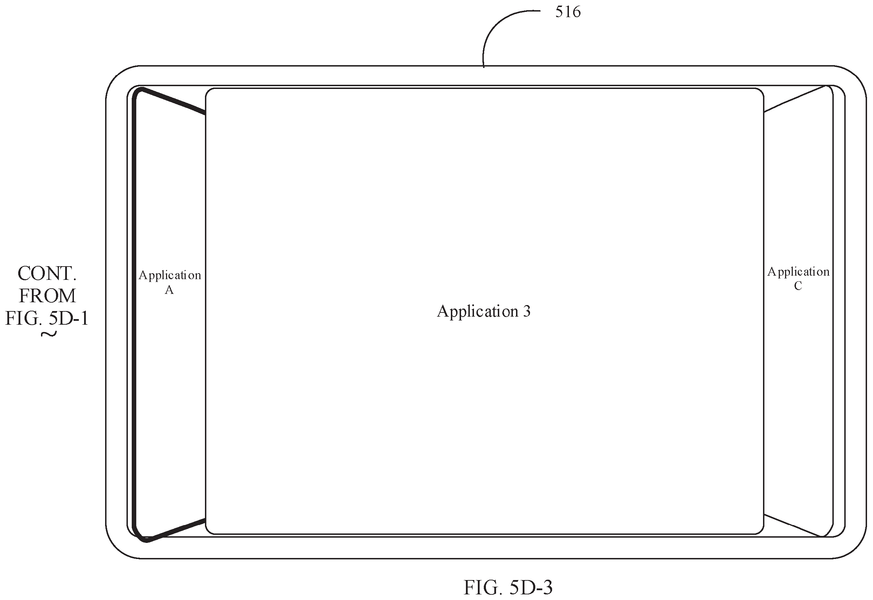

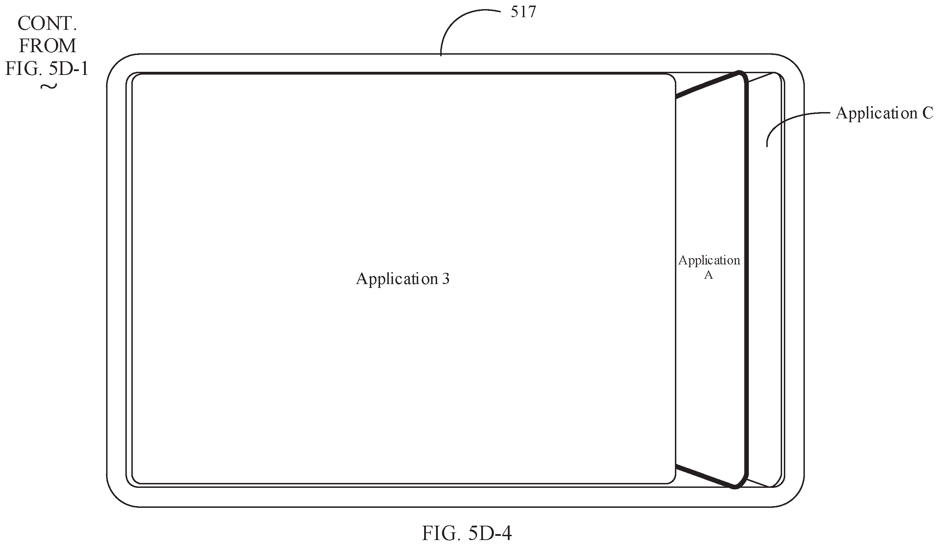

For example, FIG. 5D-1, FIG. 5D-2, FIG. 5D-3, and FIG. 5D-4 are another diagram of an interface for adjusting a window size according to an embodiment of this application. An interface 514 shown in FIG. 5D-1 is an interface in which a window size is adjusted. The tablet computer or the foldable mobile phone in the unfolded state may display a region 514a in response to an upward sliding operation from the bottom in the interface 514. The region 514a is used to display some application icons, or may be used to display thumbnails of window interfaces of some applications. A display manner, display content, and a quantity of applications displayed in the region 514a are not limited in this application. It should be noted that, in this embodiment of this application, display of the region 514a is not limited to be triggered by the upward sliding operation from the bottom, for example, may alternatively be triggered by a sliding operation from a side edge to the inner side of the screen, a downward sliding operation from the top, or a preset gesture operation. In addition, the application displayed in the region 514a may be an application associated with the application A and/or the application C.

In the region 514a, the tablet computer or the foldable mobile phone in the unfolded state displays an interface 515, an interface 516, or an interface 517 in response to a drag operation on the application 3. A similarity in the interface 515, the interface 516, or the interface 517 lies in that a window interface of the newly added application 3 is displayed in a primary display region. It may be understood that the interface 515, the interface 516, or the interface 517 displays, in different manners, an interface including three window interfaces. A specific display manner is not limited in this embodiment of this application, and may be determined based on a preset display manner.

According to the foregoing description of a scenario in which a size of an interface window is adjusted, in a split-screen scenario, sizes of a plurality of window interfaces included in an interface may be adjusted, so that one of the plurality of window interfaces can be selected as a currently mainly concerned display interface, and another window interface can be displayed in the spatial window form. In this way, residual attention on the another interface other than the currently mainly concerned display interface can be retained, thereby improving continuity and processing efficiency in a multi-task processing scenario. In addition, a window interface displayed in the primary display region may be quickly switched by using a user operation, so that requirements of more multi-task processing scenarios can be met.

In addition, based on the interface 515, the interface 516, or the interface 517, a new window interface may be further added with reference to the content described in FIG. 5D-1, FIG. 5D-2, FIG. 5D-3, and FIG. 5D-4. For specific content, refer to FIG. 5D-1, FIG. 5D-2, FIG. 5D-3, and FIG. 5D-4. Details are not described herein again.

It should be noted that, in this embodiment of this application, a window interface in a split-screen scenario is not limited to be added through a drag operation, for example, may be added through a tap operation or a preset gesture operation.

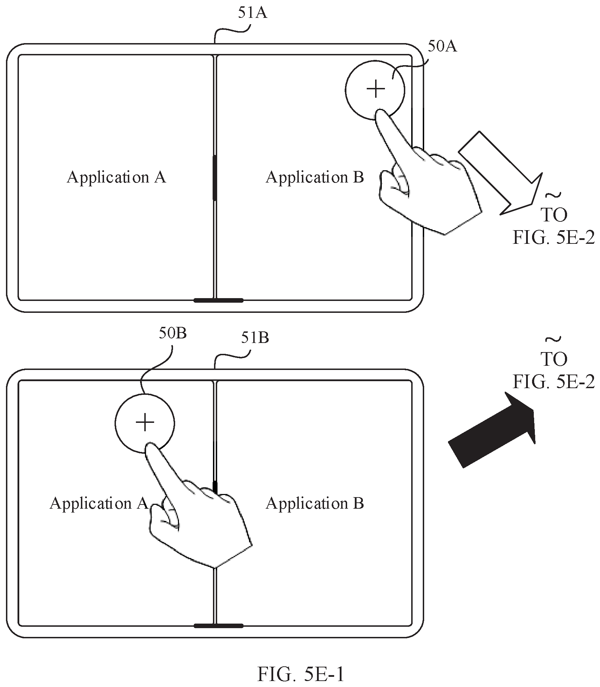

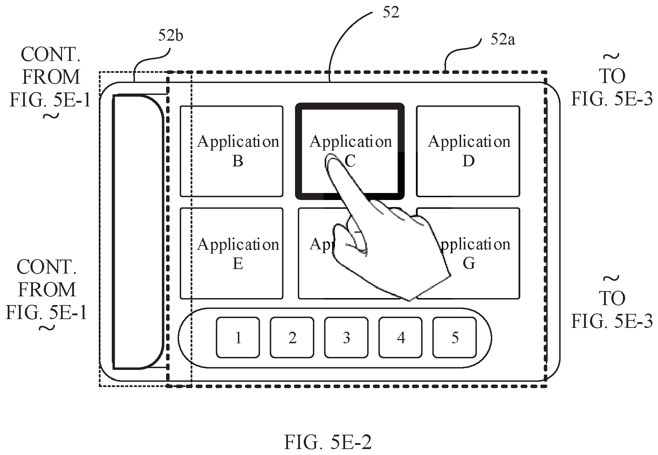

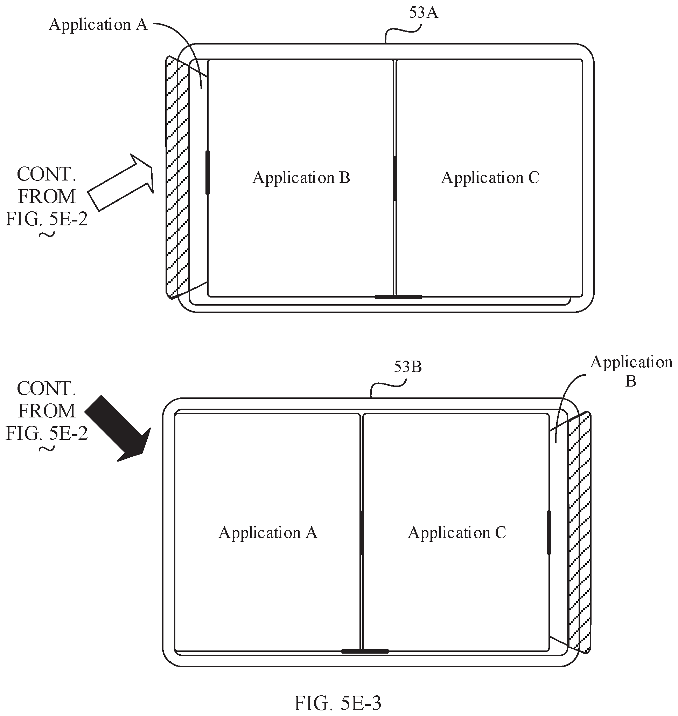

For example, in a split-screen interface of two window interfaces, a window interface may be further added by performing a tap operation on a preset control. For example, FIG.5E-1,

FIG. 5E-2, and FIG.5E-3 are a diagram of a scenario in which a window interface is added based on a split-screen scenario according to an embodiment of this application. The scenario may include two possible cases.
(1) An interface 51A in FIG. 5E-1 is a dual split-screen interface of the application A and the application B. The window interface of the application B may further include a control 50A, and the control 50A is used to add a new window interface. It should be noted that a form of the control used to add a new window interface is not limited in this embodiment of this application, that is, a form of the control 50A is not limited.

In the interface 51A, the tablet computer or the foldable mobile phone in the unfolded state displays an interface 52 in response to a tap operation on the control 50A. The interface 52 may include a primary display region 52a and a secondary display region 52b. The primary display region 52a may be used to display a task center, and the task center is used to select a newly added application window interface, for example, select the window interface of the newly added application C. In the secondary display region 52b, the window interface of the application A and the window interface of the application B that are displayed in the interface 51A are moved to one side of the screen for waiting. For example, only a part of content of the window interfaces may be displayed. It may be understood that a display process from the interface 51A to the interface 52 may be as follows: The dual split-screen interface of the application A and the application B is translated to one side of the screen until display effect shown in the interface 52 is displayed. It should be noted that, as described above, the secondary display region 52b may alternatively display the window interface of the application A and/or the window interface of the application B in the spatial window form, and a displayed window interface may not be fully displayed.

In the interface 52, the tablet computer or the foldable mobile phone in the unfolded state may display an interface 53A in response to a tap operation on an icon of the application C. The interface 53A may include a primary display region and a secondary display region. The primary display region is used to display a dual split-screen interface of the application B and the application C, and the secondary display region is used to display the window interface of the application A in the spatial window form. Optionally, the window interface that is of the application A and that is displayed in the spatial window form may be fully displayed or partially displayed. As shown in the interface 53A, the window interface that is of the application A and that is displayed in the spatial window form is partially displayed, and a region filled with slashes is not displayed on the screen.

(2) An interface 51B in FIG. 5E-1 is a dual split-screen interface of the application A and the application B. Alternatively, the window interface of the application A may include a control 50B, and the control 50B indicates to add a new window interface. It should be noted that a form of the control used to add a new window interface is not limited in this embodiment of this application, that is, a form of the control 50B is not limited.

In the interface 51B, the tablet computer or the foldable mobile phone in the unfolded state displays the interface 52 in response to a tap operation on the control 50B. For the interface 52, refer to the foregoing descriptions. Details are not described herein again.

In the interface 52, the tablet computer or the foldable mobile phone in the unfolded state may display an interface 53B in response to a tap operation on the icon of the application C. The interface 53B may include a primary display region and a secondary display region. Different from the interface 53A, the primary display region may be used to display a dual split-screen interface of the application A and the application C, and the secondary display region may be used to display the window interface of the application B in the spatial window form. Optionally, the window interface that is of the application B and that is displayed in the spatial window form may be fully displayed or partially displayed. As shown in the interface 53B, the window interface that is of the application B and that is displayed in the spatial window form is partially displayed, and a region filled with slashes is not displayed on the screen.

According to the scenario described in FIG. 5E-1, FIG. 5E-2, and FIG. 5E-3, in a scenario in which a window interface is added based on a split-screen scenario, a window interface used as a primary window interface (which may also be understood as a primary window interface) may be determined based on an operation of adding the window interface, to implement a new split-screen interface of the added window interface and the primary window interface. For example, in the interface 51A, the primary window interface is the window interface of the application B. Therefore, the interface 53A is a new split-screen interface of the window interface of the newly added application C and the window interface of the application B. For another example, in the interface 51B, the primary window interface is the window interface of the application A. Therefore, the interface 53B is a new split-screen interface of the window interface of the newly added application C and the window interface of the application A. In addition, after the window interface is added, because a window interface that does not belong to the primary window interface in the original split-screen interface cannot be displayed on the screen, the window interface that does not belong to the primary window interface is displayed in a side-facing orientation in the secondary display region. For example, in the interface 53A, the window interface of the application A is displayed in a side-facing orientation in the secondary display region. For another example, in the interface 53B, the window interface of the application B is displayed in a side-facing orientation in the secondary display region.

It should be noted that, as shown in the interface 53A in FIG. 5E-3, an example in which the window interface of the application A is displayed in a side-facing orientation on a left side of the screen is used. As shown in the interface 53B, an example in which the window interface of the application B is displayed in a side-facing orientation on a right side of the screen is used. During implementation of this application, a location at which a window interface is displayed in a side-facing orientation is not limited, and may be determined according to a preset rule or the like. For example, the preset rule may be an original display location, an original display order, a window interface priority, a window starting order, or the like.

For another example, in a split-screen interface of two window interfaces, a window interface may be further added by performing a tap operation on a preset control. For example, FIG. 5F-1, FIG. 5F-2, and FIG. 5F-3 are a diagram of another scenario in which a window interface is added based on a split-screen scenario according to an embodiment of this application. A difference from FIG. 5E-1, FIG. 5E-2, and FIG. 5E-3 lies in that, regardless of which window interface in the split-screen interface is added with a window interface, window interfaces may be displayed in order. As shown in an interface 53A, window interfaces may be sequentially added in a display order from left to right. For example, based on the split-screen interface of the application A and the application B that are displayed in the interface 51A, when the window interface of the application C is added, the window interfaces may be sequentially translated leftward. This may also be understood that the window interface of the application C is displayed at a display location on a right side, the window interface of the application B is translated to a display location on a left side, and the window interface of the application A is also translated leftward by one display location. The window interface of the application A may be displayed in a side-facing orientation because the window interface of the application A cannot be displayed on the screen in the tiled form.

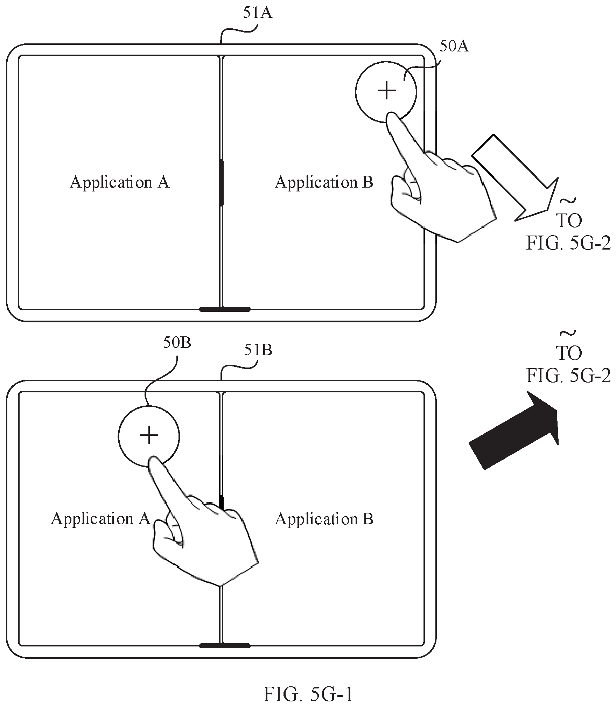

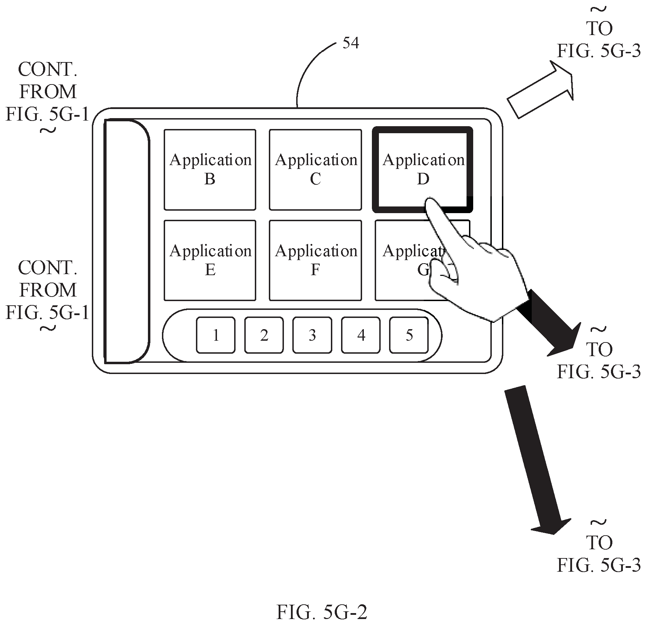

In another example, based on the scenario shown in FIG. 5E-1, FIG. 5E-2, and FIG. 5E-3, because some window interfaces do not support display in the split-screen form, a scenario in which a window interface is added may alternatively be shown in FIG. 5G-1, FIG. 5G-2, and FIG. 5G-3. A difference between FIG. 5G-1, FIG. 5G-2, and FIG. 5G-3 and FIG. 5E-1, FIG. 5E-2, and FIG. 5E-3 lies in that, as shown in an interface 54 shown in FIG. 5G-2, a newly added window interface is the window interface of the application D, and the application D is a window interface that does not support screen splitting. In this case, the tablet computer or the foldable mobile phone in the unfolded state may display an interface 55A, an interface 55B1, or an interface 55B2 in response to a tap operation on an icon of the application D in the interface 54.

In the interface 55A, a primary display region may include: the window interface that is of the application B and that is displayed in the split-screen form at a display location on a left side of the screen, and a part of the window interface that is of the application D and that is displayed in a full-screen form at a display location on a right side of the screen. It may be understood that, because a size of the display location on the right side of the screen is less than a size of the window interface that is of the application D and that is displayed in the full-screen form, the part of the window interface that is of the application D and that is displayed in the full-screen form may be displayed on the screen. However, a remaining part (for example, a region filled with slashes in the interface 55A) of the window interface that is of the application D and that is displayed in the full-screen form is not displayed on the screen. In the interface 55A, a secondary display region is used to display the window interface that is of the application A and that is displayed in a side-facing orientation.

In the interface 55B1, a primary display region may include: the window interface that is of the application A and that is displayed in the split-screen form at a display location on a left side of the screen, and a part of the window interface that is of the application D and that is displayed in the full-screen form at a display location on a right side of the screen. It may be understood that, because a size of the display location on the right side of the screen is less than the size of the window interface that is of the application D and that is displayed in the full-screen form, a part of the window interface that is of the application D and that is displayed in the full-screen form may be displayed on the screen. However, a remaining part (for example, a region filled with slashes in the interface 55B1) of the window interface that is of the application D and that is displayed in the full-screen form is not displayed on the screen. In the interface 55B1, because the window interface that is of the application A and that is displayed in the split-screen form and the window interface that is of the application D and that is displayed in the full-screen form occupy a left display location and a right display location of the screen, the window interface of the application B cannot continue to be displayed. The window interface of the application B is switched to be displayed in a side-facing orientation. Optionally, when the window interface that is of the application B and that is displayed in a side-facing orientation is displayed on a right side of the window interface of the application D, the window interface that is of the application B and that is displayed in a side-facing orientation is not displayed on the screen, and is displayed in a hidden form on the right side of the window interface of the application D, as shown in the interface 55B1. The window interface that is of the application B and that is displayed in a side-facing orientation is filled with slashes. Optionally, as shown in the interface 55B2, when the window interface that is of the application B and that is displayed in a side-facing orientation cannot be displayed on the screen, the window interface that is of the application B and that is displayed in a side-facing orientation may also be switched to be displayed in a secondary display region on the left side of the screen.

For still another example, some electronic devices may further support a triple split-screen or multiple split-screens, for example, a trifold mobile phone and a central control screen. FIG. 5H-1, FIG. 5H-2, FIG. 5H-3, and FIG. 5H-4 are a diagram of still another scenario of an interface display method according to an embodiment of this application. A difference from the interface 52 in FIG. 5E-2 lies in that, for example, a newly added window interface selected in an interface 56 is a window interface of the application E. It may be understood that screen splitting described above may be understood as a dual split-screen.

Based on the scenario in which a window interface is added in the interface 51A, the trifold mobile phone, the central control screen, or the like may display an interface 57A1 or an interface 57A2 in response to a tap operation on an icon of the application E in the interface 56.

Optionally, the application E may support a triple split-screen. In this case, the interface 57A1 may be displayed. As shown in the interface 57A1, based on that the trifold mobile phone, the central control screen, or the like supports a triple split-screen, a triple split-screen interface of the application A, the application B, and the application E may be displayed. In this scenario, the application A, the application B, and the application E all support a triple split-screen.

In another optional implementation, the application E does not support a triple split-screen. In this case, the interface 57A2 may be displayed. As shown in the interface 57A2, the interface 57A2 may include the window interface that is of the application A and that is displayed in a triple split-screen form, the window interface that is of the application B and that is displayed in the triple split-screen form, and the window interface that is of the application E and that is displayed in the full-screen form.

Based on the scenario in which a window interface is added in the interface 51B, the trifold mobile phone, the central control screen, or the like may display an interface 57B1 or an interface 57B2 in response to a tap operation on the icon of the application E in the interface 56.

Optionally, the application E may support a triple split-screen. In this case, the interface 57B1 may be displayed. As shown in the interface 57B1, based on that the trifold mobile phone, the central control screen, or the like supports a triple split-screen, a triple split-screen interface of the application A, the application E, and the application B may be displayed. A difference from the interface 57A1 lies in that the application E is located at a right display location of the application A.

Optionally, the application E does not support a triple split-screen. In this case, the interface 57B2 may be displayed. As shown in the interface 57B2, the interface 57B2 may include the window interface that is of the application A and that is displayed in the triple split-screen form and the window interface that is of the application E and that is displayed in the full-screen form. It may be understood that the window interface that is of the application A and that is displayed in the triple split-screen form and the window interface that is of the application E and that is displayed in the full-screen form already occupy all display locations of the screen. Therefore, the window interface of the application B included in the interface 51B is squeezed, and is displayed in a side-facing orientation. In addition, it may be understood that the window interface that is of the application A and that is displayed in the triple split-screen form is displayed at a left 1/3 display location, and a large part of content of the window interface that is of the application E and that is displayed in the full-screen form is displayed at a middle 1/3 display location and a right 1/3 display location. A region filled with slashes in the window interface that is of the application E and that is displayed in the full-screen form shown in the interface 57B2 is not displayed on the screen. It may be further understood that the window interface of the application B is displayed on a right side of the window interface of the application E. Therefore, the window interface of the application B is not displayed on the screen either. Refer to FIG. 5G-1, FIG. 5G-2, and FIG. 5G-3. Alternatively, the window interface that is of the application B and that is displayed in a side-facing orientation may be displayed in a secondary display region on a left side.

It should be noted that, for a scenario of multiple split-screens, refer to the content described above. Details are not described again in this application.

It should be further noted that a plurality of possible manners of adding a window interface are described in the foregoing scenarios. The foregoing operation manner or the foregoing trigger entry is not limited in this application. For example, the trigger entry may alternatively be a floating control or a notification bar. For example, in a scenario in which one or more window interfaces are displayed on a desktop, a new notification is received, and when an operation of enabling the new notification is detected, a window interface of an application to which the new notification belongs may be used as a newly added window interface.

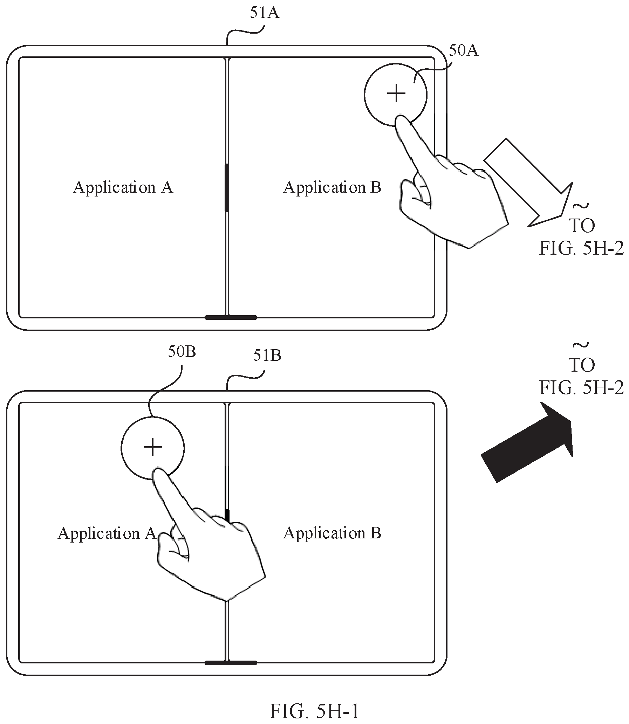

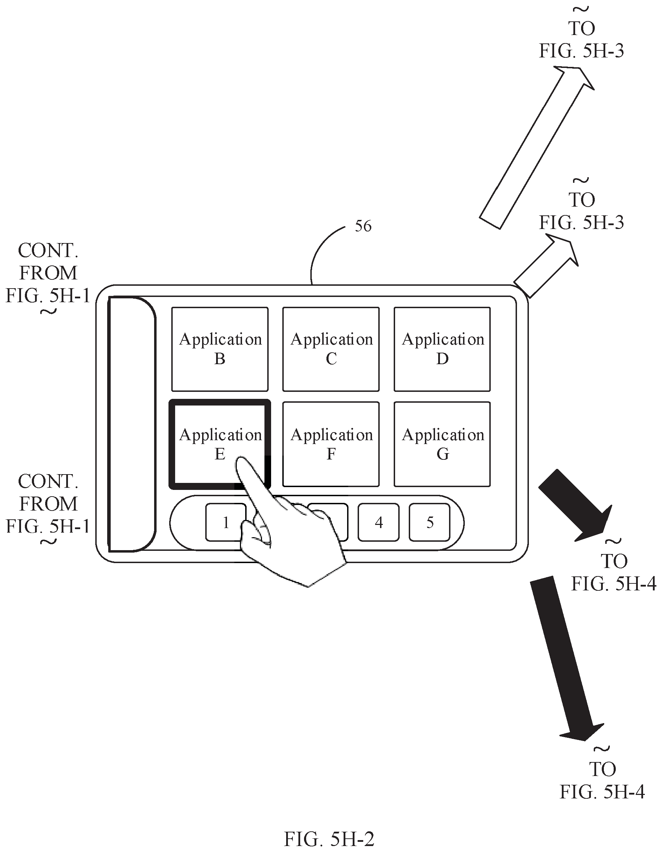

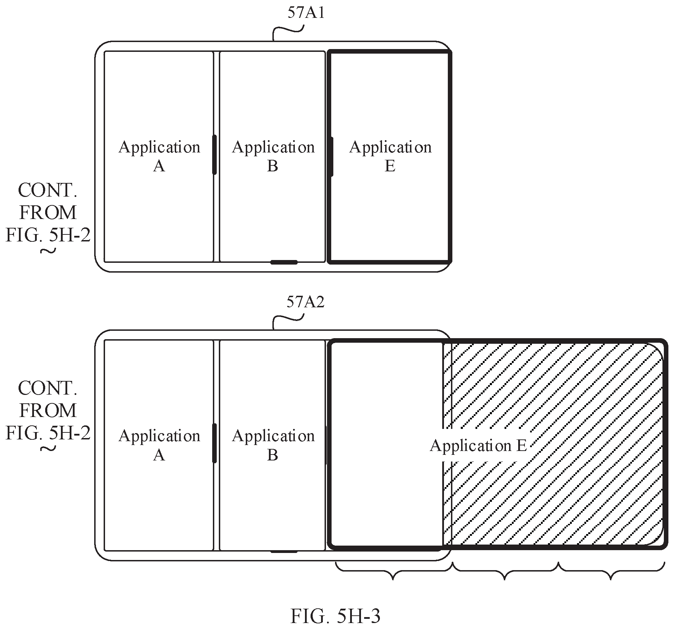

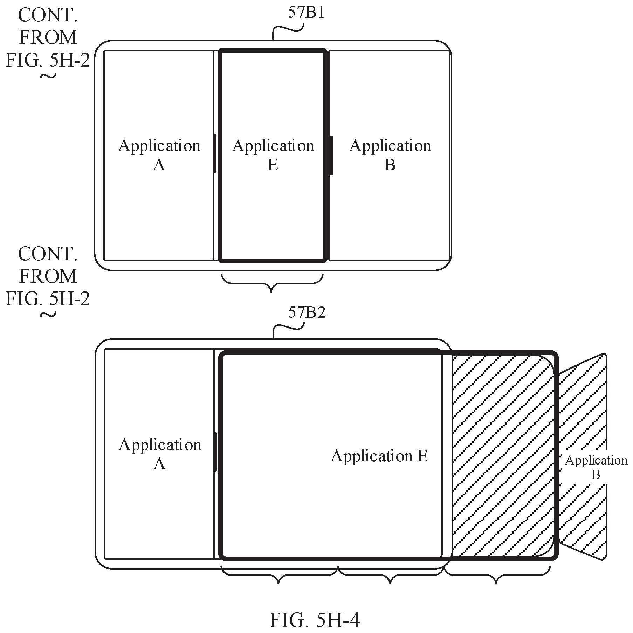

Based on the description content of the foregoing scenarios, one or a combination of the following processing manners may be included:
(1) When a window interface is added, if display locations on the screen are fully occupied, one or more window interfaces that cannot be displayed are squeezed and are displayed in a side-facing orientation, for example, the window interface of the application A shown in the interface 53A in FIG. 5E-3, or the window interface of the application B shown in the interface 53B in FIG. 5E-3.
(2) All or a part of content of a newly added window can be displayed. For example, all content of the window interface of the application E shown in the interface 57A1 in FIG. 5H-3 is displayed in the triple split-screen form. For another example, a part of content of the window interface of the application E shown in the interface 57A2 in FIG. 5H-3 is displayed in the full-screen form.

According to the foregoing description content, the method provided in this embodiment of this application can be used to create a plurality of possible multi-task processing scenarios, and can meet more requirements of the user for the multi-task processing scenarios. Therefore, the method can provide variety and diversity of multi-task processing.

### Scenario B: A scenario of switching from displaying a window to displaying another window interface.

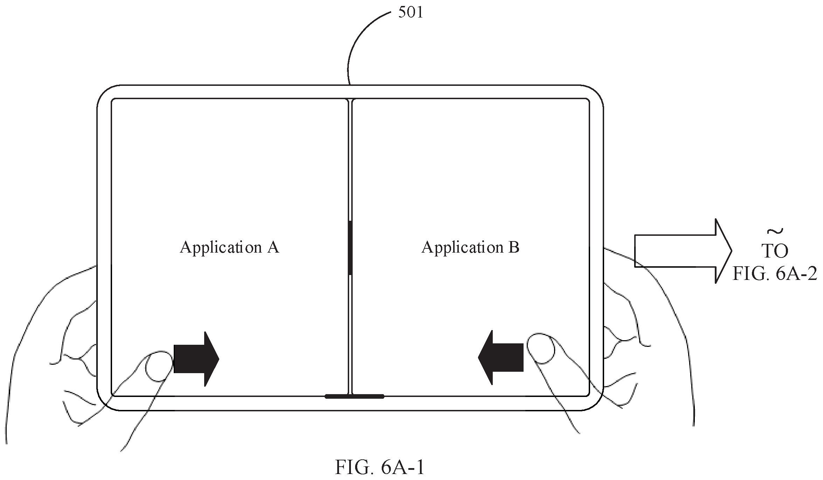

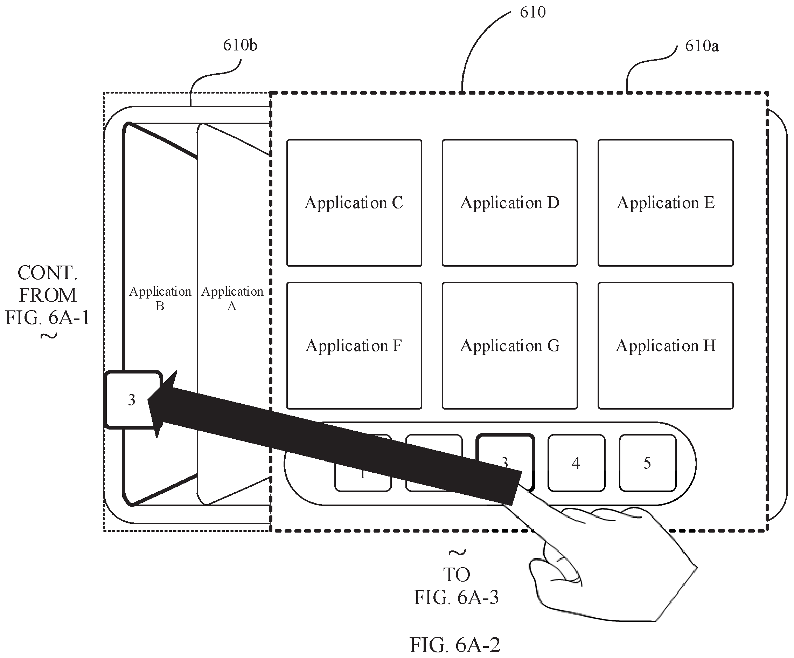

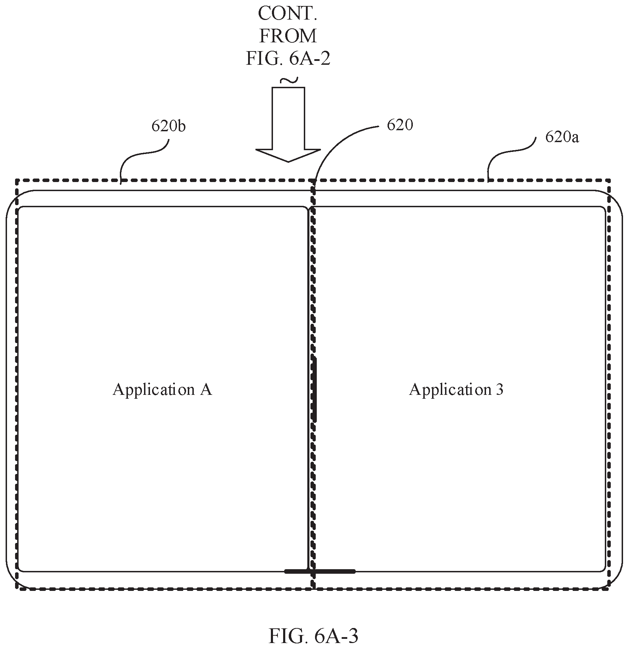

FIG. 6A-1, FIG.6A-2, and FIG. 6A-3 are a still further diagram of an interface for triggering window interface switching according to an embodiment of this application. For description content of an interface 501 shown in FIG. 6A-1, refer to the description content in FIG. 5A-1, FIG5A-2, and FIG. 5A-3. Details are not described herein again. Different from FIG. 5A-1, FIG. 5A-2, and FIG. 5A-3, the tablet computer or the foldable mobile phone in the unfolded state may further detect a first operation and display an interface 610 in response to the first operation. Display content of the interface 610 is the same as that of the interface 502, and the interface 610 includes a primary display region 610a and a secondary display region 610b. A difference lies in that the tablet computer or the foldable mobile phone in the unfolded state detects, in the interface 610, a fifth operation of dragging, by the user, an icon of the application 3 to a display location corresponding to the window interface of the application B displayed in the secondary display region 610b. The fifth operation may be, for example, a drag operation after a touch and hold operation on the icon 3, or may be directly a drag operation on the icon 3. A specific manner of the fifth operation is not limited in this application.

The tablet computer or the foldable mobile phone in the unfolded state displays an interface 620 in response to the fifth operation. It can be seen from the interface 620 that, compared with the interface 501, a region in which the window interface of the application B is displayed in the original split-screen interface may be replaced with a region in which the window interface of the application 3 is displayed. Therefore, a task center is displayed in a manner of a primary/secondary relationship, so that the user can replace and display different window interfaces, thereby improving efficiency and continuity of multi-task processing.

When displaying the interface 503 shown in FIG. 5A-3 or the interface 508 shown in FIG. 5B-5, the tablet computer or the foldable mobile phone in the unfolded state may further switch to display different window interfaces in response to a user operation. The interface 503 in FIG. 5A-3 is used as an example. FIG. 6B-1, FIG. 6B-2, and FIG. 6B-3 are a yet further diagram of an interface for triggering window interface switching according to an embodiment of this application. Based on different operation manners, the interface 503 is categorized into an interface 5031 and an interface 5032 in FIG. 6B-1 and FIG. 6B-2.

In a possible implementation, in the interface 5031, the tablet computer or the foldable mobile phone in the unfolded state detects a sliding operation performed by the user on a stacking region and displays an interface 601 in response to the sliding operation. As shown in the interface 601, the interface 601 includes a display region 601a and a display region 601b. The display region 601a still displays the window interface of the application D, and the display region 601b may be used to separately display a plurality of stacked window interfaces in the spatial window form, for example, the window interface of the application A and the window interface of the application B. In this way, in a scenario in which a plurality of (for example, three) window interfaces are stacked, the spatial window display form can help the user preview more information in the window interface of the application A and the window interface of the application B, thereby facilitating switching between window interfaces by the user, and improving accuracy of multi-task processing.

For example, in the interface 601, the tablet computer or the foldable mobile phone in the unfolded state may detect a tap operation on the window interface of the application B and display an interface 602A in response to the tap operation. Compared with the interface 5031, the interface 602A may be switched to display the window interface of the application B above the window interface of the application A.

In another possible implementation, in the interface 5032, the tablet computer or the foldable mobile phone in the unfolded state may detect a tap operation performed by the user on the window interface of the application B included in a stacking region and directly display the interface 602A in response to the tap operation. In this way, efficiency of window interface switching can be improved through the tap operation. It may be understood that, in a scenario in which two window interfaces are stacked, a switched window interface is directly displayed through the tap operation, so that operation efficiency of the user can be improved.

In another possible implementation, a display form of three window interfaces may alternatively be shown in the interface 53A described in FIG. 5E-3. In the interface 53A, the tablet computer or the foldable mobile phone in the unfolded state may detect a tap operation performed by the user on the window interface of the application A included in a stacking region and directly display the interface 602B in response to the tap operation. In this way, efficiency of window interface switching can be improved through the tap operation. It may be understood that, in a scenario in which two window interfaces are stacked, a switched window interface is directly displayed through the tap operation, so that operation efficiency of the user can be improved. It should be noted that, although switching between the window interface of the application A and the window interface of the application B is used as an example in the interface 602B, in actual implementation, the window interface of the application A may alternatively be switched with the window interface of the application C. A specific switching manner is not limited. For example, a specific switching manner may be switching with a closest window interface, a randomly determined window interface, a window interface of a previous operation, a window interface with latest starting time, or the like.

It may be understood that, based on the three different implementations provided in FIG. 6B-1, FIG. 6B-2, and FIG. 6B-3, the user can randomly select different implementations in different scenarios, so that different processing requirements of the user in different scenarios can be improved. For example, in a scenario in which three windows are stacked, the user may select the implementation shown in the interface 5031, so that the user can preview information about different window interfaces and then switch between the window interfaces, thereby improving accuracy of window interface switching. In a scenario in which two windows are stacked, the user may select the implementation shown in the interface 5032, so that efficiency of window interface switching can be improved.

It should be noted that, in this embodiment of this application, display effect of displaying a plurality of stacked interfaces in the spatial window form shown in the interface 601 is not limited. For example, the plurality of stacked interfaces displayed in the spatial window form may be fully displayed or partially displayed. For example, the display effect may be comprehensively determined based on factors such as a horizontal width of the display region 601b, a side-facing degree of a spatial window, and a quantity of spatial windows.

In a possible example, FIG. 6C is an example diagram of window interface switching according to an embodiment of this application. Based on the interface 53A described in FIG. 5E-3, in response to a tap operation on the window interface that is of the application A and that is displayed in a side-facing orientation, the tablet computer or the foldable mobile phone in the unfolded state may transition from the interface 53A to an interface 603A and finally display an interface 603B. It may be understood that the interface 603A is an intermediate transition interface.

It can be seen from the interface 53A, the interface 603A, and the interface 603B that, when determining that the user wants to display the window interface of the application A in the tiled form, the tablet computer or the foldable mobile phone in the unfolded state may gradually restore the window interface of the application A from being displayed in a side-facing orientation to being displayed in the tiled form. It may be understood that restoring from being displayed in a side-facing orientation to being displayed in the tiled form is a reverse process of the spatial window form.

In addition, in a process in which the window interface of the application A is gradually restored from being displayed in a side-facing orientation to being displayed in the tiled form, for example, a dual split-screen interface of the application B and the application C that are displayed in the interface 53A is translated rightward. This may also be understood that the dual split-screen interface is gradually squeezed and is occupied by the window interface of the application A.

In addition, with reference to the interface 5 1A in FIG. 5E-1, the window interface of the application A is displayed in the tiled form and the dual split-screen form before the window interface of the application A is switched to be displayed in a side-facing orientation. Therefore, when the window interface of the application A is restored to tiled display, the window interface of the application A is still displayed in the tiled form and the dual split-screen form.

It can be seen from the interface 603A and the interface 603B that, when the window interface of the application C is squeezed and cannot be displayed on the screen, the window interface of the application C is switched from being displayed in the tiled form to being displayed in a side-facing orientation in a secondary display region on a right side of the screen.

In this way, different window interfaces may be switched and displayed through a tap operation.

In another possible example, FIG. 6D-1, FIG. 6D-2, and FIG. 6D-3 are an example diagram of window interface switching according to an embodiment of this application. Based on the interface 55A described in FIG. 5G-3, in response to a tap operation on the window interface that is of the application A and that is displayed in a side-facing orientation, the tablet computer or the foldable mobile phone in the unfolded state may transition from the interface 55A to an interface 604A and finally display an interface 604B. It may be understood that the interface 604A is an intermediate transition interface.

It can be seen from the interface 55A, the interface 604A, and the interface 604B that, when determining that the user wants to display the window interface of the application A in the tiled form, the tablet computer or the foldable mobile phone in the unfolded state may gradually restore the window interface of the application A from being displayed in a side-facing orientation to being displayed in the tiled form. It may be understood that restoring from being displayed in a side-facing orientation to being displayed in the tiled form is a reverse process of the spatial window form.

In addition, in a process in which the window interface of the application A is gradually restored from being displayed in a side-facing orientation to being displayed in the tiled form, for example, a dual split-screen interface obtained by displaying the window interface of the application B in the full-screen form and displaying the window interface of the application D in the dual split-screen form in the interface 55A is translated rightward. This may also be understood as that the dual split-screen interface is gradually squeezed by the window interface of the application A.

In addition, with reference to the interface 51A in FIG. 5G-1, the window interface of the application A is displayed in the tiled form and the dual split-screen form before the window interface of the application A is switched to be displayed in a side-facing orientation. Therefore, when the window interface of the application A is restored to tiled display, the window interface of the application A is still displayed in the tiled form and the dual split-screen form.

It can be seen from the interface 604A and the interface 604B that, when the window interface of the application D is squeezed and cannot be displayed on the screen, the window interface of the application D is switched from being displayed in the tiled form to being displayed in a side-facing orientation in a secondary display region on a right side of the screen.

In this way, different window interfaces may be switched and displayed through a tap operation.

Based on an interface 605B, in response to a tap operation on the window interface that is of the application D and that is displayed in a side-facing orientation, the tablet computer or the foldable mobile phone in the unfolded state may transition from the interface 605B through an interface 605A1 and an interface 605A2 and finally display the interface 605B. It may be understood that the interface 605A1 and the interface 605A2 are intermediate transition interfaces.

It can be seen from the interface 605B, the interface 605A1 and the interface 605A2, and the interface 605B that, when determining that the user wants to display the window interface of the application D in the tiled form, the tablet computer or the foldable mobile phone in the unfolded state may gradually restore the window interface of the application D from being displayed in a side-facing orientation to being displayed in the tiled form. It may be understood that restoring from being displayed in a side-facing orientation to being displayed in the tiled form is a reverse process of the spatial window form.

In addition, in a process in which the window interface of the application D is gradually restored from being displayed in a side-facing orientation to being displayed in the tiled form, for example, a dual split-screen interface of the application A and the application B that are displayed in the interface 605B is translated leftward. This may also be understood as that the dual split-screen interface is gradually squeezed by the window interface of the application D.

In addition, with reference to the interface 55A, the window interface of the application D is displayed in the tiled form and the full-screen form before the window interface of the application D is switched to be displayed in a side-facing orientation. Therefore, when the window interface of the application D is restored to tiled display, the window interface of the application D is still displayed in the tiled form and the full-screen form.

It can be seen from the interface 605A1 and the interface 605A2 that, when the window interface of the application A is squeezed and cannot be displayed on the screen, the window interface of the application A is switched from being displayed in the tiled form to being displayed in a side-facing orientation in a secondary display region on a left side of the screen.

Then, it can be seen from the interface 605A2 and the interface 605B that, when the window interface of the application B is squeezed and cannot be displayed on the screen, the window interface of the application B is switched from being displayed in the tiled form to being displayed in a side-facing orientation in the secondary display region on the left side of the screen.

In addition, it can be seen from the interface 605B that a part of the window interface of the application B may be displayed in the secondary display region on the left side of the screen, but the window interface of the application A is not displayed on the screen. It may be understood that, to increase a display area of a primary display region, a quantity of window interfaces that are displayed in a side-facing orientation in a secondary display region may be limited, for example, may be limited to 1. However, a window interface that is displayed in a side-facing orientation and that is beyond the screen may be displayed in a hidden form. To be specific, although the window interface is not displayed on the screen, the window interface may be displayed again through window interface switching or the like. A specific implementation process is described below. It may be further understood that the secondary display region may be used to display all or a part (for example, in the interface 605B, one of two other window interfaces is finally displayed on the screen, that is, a part of window interfaces is displayed) of window interfaces (for example, in the interface 605B, a quantity of other window interfaces is 2) other than N (for example, in the interface 605B, N is 1) window interfaces that are displayed in the primary display region and that are in related M window interfaces (for example, in the interface 605B, M is 3). It should be noted that, in the interface 605B, an example in which a maximum of one window interface is displayed in a side-facing orientation in the secondary display region is used. A quantity of window interfaces that can be displayed in a side-facing orientation is not limited in this embodiment of this application.

In this way, different window interfaces may be conveniently switched and displayed through a tap operation.

In still another possible example, based on the foregoing description, there are totally two window interface display types: display in a side-facing orientation and tiled display. In the method provided in this embodiment of this application, a location of a window interface may be updated by performing a drag operation on the window interface. For example, the drag operation on the window interface may be, for example, a draggable state triggered by a touch and hold operation on the window interface, or may be, for another example, a draggable state triggered by a touch control operation on a menu control corresponding to the window interface. This is not limited in this application. In addition, a location update of the window interface may include:
(1) Locations of window interfaces of a same display type are interchanged.

For example, in the interface 516 in FIG. 5D-3, locations of the window interface that is of the application A and that is displayed in a side-facing orientation in a left secondary display region and the window interface that is of the application C and that is displayed in a side-facing orientation in a right secondary display region are interchanged. An updated display order is as follows: The window interface that is of the application C and that is displayed in a side-facing orientation is located in the left secondary display region, and the window interface that is of the application A and that is displayed in a side-facing orientation is located in the right secondary display region.

For another example, locations of a window interface displayed in the tiled form and another window interface displayed in the tiled form may be interchanged.

For another example, a location of a related window interface may be updated by performing a drag operation on the window interface based on a target location to which the window interface is dragged. For example, if the window interface of the application A in the interface 57A1 in FIG. 5H-3 is dragged to a right side of the window interface of the application E, the window interface of the application B and the window interface of the application E may be translated leftward, and an updated display order is as follows: the window interface of the application B, the window interface of the application E, and the window interface of the application A from left to right.

(2) Window interfaces of different display types can be dragged and interchanged.

For example, in the interface 53A in FIG. 5E-3, locations of the window interface that is of the application B and that is displayed in the primary display region in the tiled form and the window interface that is of the application A and that is displayed in a side-facing orientation in the secondary display region are interchanged. An updated display order is as follows: The window interface of the application B is updated to be displayed in a side-facing orientation, and is displayed in the left secondary display region; and the window interface that is of the application A and that is displayed in a side-facing orientation is updated to be displayed in the tiled form, and a dual split-screen interface of the window interface of the application A and the window interface of the application C may be displayed in the primary display region.

For another example, in the interface 53A in FIG. 5E-3, locations of the window interface that is of the application A and that is displayed in a side-facing orientation in the secondary display region and the window interface that is of the application C and that is displayed in the tiled form in the primary display region are interchanged. An updated display order is as follows: The window interface of the application C is updated to be displayed in a side-facing orientation, and is displayed in the left secondary display region; and the window interface that is of the application A and that is displayed in a side-facing orientation is updated to be displayed in the tiled form, and a dual split-screen interface of the window interface of the application B and the window interface of the application A may be displayed in the primary display region.

FIG. 4A to FIG. 6D-1, FIG. 6D-2, and FIG. 6D-3 describe scenarios of window interface switching between a plurality of applications. In some other possible scenarios of window interface switching, window interface switching may be triggered based on a multi-application scenario, a single-application and multi-instance scenario, or a combination scenario of single-application and multi-instance, and multi-application. For the multi-application scenario, refer to the content described in FIG. 4A to FIG. 6D-1, FIG. 6D-2, and FIG. 6D-3. Refer to the interface 401 shown in FIG. 4A. In the single-application and multi-instance scenario, the application A shown in FIG. 4A may correspond to, for example, an instance 1 (which may also be referred to as an "application A1" for short in this embodiment of this application) in the application A, and the application C shown in FIG. 4A may correspond to, for example, an instance 3 (which may also be referred to as an "application A3" for short in this embodiment of this application) in the application A. It may be understood that, in this scenario, the task center shown in FIG. 4A may display an instance associated with the application A1, for example, may display all or a part of instances included in the application A.

FIG. 7A, FIG. 7B, and FIG. 7C are a yet further diagram of an interface for triggering window interface switching according to an embodiment of this application. An interface 700 in FIG. 7A shows a window interface of the application A1. The tablet computer or the foldable mobile phone in the unfolded state detects a sixth operation on the interface 700 and displays an interface 701 in response to the sixth operation. The sixth operation is used to trigger display of a floating window interface. The sixth operation may be, for example, a two-finger pinch operation on the interface 700. A specific manner of the sixth operation is not limited in this application.

As shown in the interface 701 in FIG. 7A, the tablet computer or the foldable mobile phone in the unfolded state may display a floating window interface of the application A, and the tablet computer or the foldable mobile phone in the unfolded state detects a seventh operation on the interface 701 and displays an interface 702 in response to the seventh operation. The seventh operation is used to trigger display of a task center of the application A. The seventh operation may be, for example, a touch and hold operation on the top, or a downward sliding operation after a touch and hold operation on the top. A specific manner of the seventh operation is not limited in this application.

As shown in the interface 702 in FIG. 7B, the task center of the application A may display, in the spatial window form, a plurality of window interfaces related to the application A. For example, the task center may display one or more started instance interfaces of the application A, or may display a split-screen interface including an instance of the application A, for example, a split-screen interface 7021 shown in the interface 702. The split-screen interface 7021 is a combined interface of an application A2 and the application B. With reference to the spatial window forms shown in the interface 701 and the interface 702, it may be understood that the window interface of the application A1 displayed on the top of the interface 701 and a plurality of window interfaces residing in a background are oriented to be perpendicular to a screen direction, and other sides of the window interfaces are flipped toward a back of the screen by using an upper side of the window interface of the application A1 as a central axis. In other words, it may be understood that the window interfaces are flipped toward an inner side of the screen of the tablet computer or the foldable mobile phone in the unfolded state.

It should be noted that a quantity of applications related to a split-screen interface including an instance of the application A is not limited in this application. For example, the split-screen interface may alternatively be obtained by using two instances of a same application, for example, may be a split-screen interface including an application A5 and an application A6, or may be obtained by using two instances of different applications, for example, may be the split-screen interface 7021 shown in the interface 702.

The tablet computer or the foldable mobile phone in the unfolded state displays an interface 703 in response to an eighth operation on the split-screen interface 7021. The eighth operation is used to trigger display of the split-screen interface 7021 on the screen. The eighth operation may be, for example, a tap operation. A specific manner of the eighth operation is not limited in this application.

In addition, in the split-screen interface shown in the interface 703, the tablet computer or the foldable mobile phone in the unfolded state may further display an interface 704 in response to a ninth operation on a window interface of the application A2 included in the split-screen interface. The ninth operation is used to trigger display of the task center of the application A at a display location of the window interface of the application A2. The ninth operation may be, for example, a touch and hold operation on the top or a downward sliding operation after a touch and hold operation on the top. A specific manner of the ninth operation is not limited in this application.

As shown in the interface 704, the application A1, the application A2, the application A3, and an application A4 that are included in the application A, and a plurality of window interfaces used to create window interfaces may be displayed in the spatial window form at a left display location, and the window interface of the application B is still displayed at a right display location. With reference to the spatial window forms shown in the interface 703 and the interface 704, it may be understood that the window interface of the application A2 displayed on the top of a left side of the interface 703 and a plurality of window interfaces residing in the background are oriented to be perpendicular to the screen direction, and other sides of the window interfaces are flipped toward the back of the screen by using an upper side of the window interface of the application A2 as a central axis. In other words, it may be understood that the window interfaces are flipped toward the inner side of the screen of the tablet computer or the foldable mobile phone in the unfolded state.

In this way, different split-screen interfaces can be formed, thereby improving diversity and operation convenience of screen splitting. For example, in the interface 704, the tablet computer or the foldable mobile phone in the unfolded state may display an interface 705 in response to a tenth operation on the window interface of the application A1. The interface 705 is a split-screen interface including the application A1 and the application B. The tenth operation is used to switch between different window interfaces at the left display location, and may be, for example, a tap operation. A specific manner of the tenth operation is not limited in this application. It may be understood that, through the tenth operation shown in the interface 704, it can be seen, by comparing the interface 705 with the interface 703, that the interface 703 in which the window interface of the application A2 is displayed in a left split-screen is switched to the interface 705 in which the window interface of the application A1 is displayed in the left split-screen. In this way, switching processing can be performed on some window interfaces in a split-screen interface, so that service requirements in more split-screen scenarios can be met, and efficiency of window interface switching can be further improved.

### (2) A scenario in which a window size is adjusted based on a split-screen interface

The split-screen interface 403A obtained in FIG. 4A is used as an example. FIG. 8A and FIG. 8B are a diagram of an interface for adjusting a window size according to an embodiment of this application. This embodiment of this application provides three possible adjustment manners, including:
Manner 1: The tablet computer or the foldable mobile phone in the unfolded state may display an interface 801 in response to a leftward sliding operation on a split-screen control included in the interface 403A. As shown in the interface 801, the interface 801 may include a primary display region 801a and a secondary display region 801b. The primary display region 801a may be used to display the window interface of the application C, and the secondary display region 801b may be used to display the window interface of the application A in the spatial window form. In addition, a display size of the primary display region 801a is greater than a display size of the secondary display region 801b. In this way, the window interface of the application A is displayed in a side-facing orientation on a left side of the screen of the tablet computer or the foldable mobile phone in the unfolded state in the spatial window form, so that a three-dimensional sense of the window interface in space can be enhanced, and more content of the window interface can be displayed. In addition, residual attention on display content in the window interface of the application A can be further retained, thereby improving continuity of multi-task processing. It should be noted that, in this embodiment of this application, display of the interface 801 is not limited to be triggered by the leftward sliding operation, for example, may alternatively be triggered by a sliding operation performed after a touch and hold operation is performed on a left interface in the interface 403A, or another preset gesture operation.

In the interface 801, the tablet computer or the foldable mobile phone in the unfolded state may further display an interface 802 in response to a tap operation on the window interface of the application A. With reference to the interface 801 and the interface 802, it can be seen that different window interfaces may be switched and displayed in a primary display region. As shown in the interface 802, a primary display region 802a may be used to switch to display the window interface of the application A, and the window interface of the application C is automatically displayed in a secondary display region 802b in the spatial window form. It should be noted that, in this embodiment of this application, display of the interface 802 is not limited to be triggered by the tap operation, for example, may alternatively be triggered by a touch and hold operation on the window interface of the application A, or another preset gesture operation.

In Manner 1, a scenario in which a window size is adjusted is triggered based on the leftward sliding operation performed by the user. Therefore, a primary display region may be fixed on a right side of the screen, and different window interfaces may be switched and displayed in the primary display region by performing a tap operation on a window interface displayed in a secondary display region. In Manner 1, not only a primary/secondary relationship between display content on the screen can be improved and more attention of the user can be paid to display content in the primary display region, but also residual attention of the user on the secondary display region can be retained, thereby improving efficiency and continuity of multi-task processing.

Manner 2: The tablet computer or the foldable mobile phone in the unfolded state may display an interface 803 in response to a rightward sliding operation on a split-screen control included in the interface 403A. As shown in the interface 803, the interface 803 may include a primary display region 803a and a secondary display region 803b. The primary display region 803a may be used to display the window interface of the application A, and the secondary display region 803b may be used to display the window interface of the application C in the spatial window form. In addition, a display size of the primary display region 803a is greater than a display size of the secondary display region 803b. With reference to the spatial window forms shown in the interface 403A and the interface 803, it may be understood that the window interface of the application C displayed on a right side of the interface 403A is perpendicular to a screen direction, and the other side of the window interface is flipped toward the back of the screen by using a right side of the window interface of the application C as a central axis. In other words, it may be understood that the window interface is flipped toward the inner side of the screen of the tablet computer or the foldable mobile phone in the unfolded state.

In this way, the application C is displayed in a side-facing orientation on a right side of the screen of the tablet computer or the foldable mobile phone in the unfolded state in the spatial window form, so that a three-dimensional sense of the window interface in space can be enhanced, and more content of the window interface can be displayed. In addition, residual attention on display content in the window interface of the application C can be further retained, thereby improving continuity of multi-task processing. It should be noted that, in this embodiment of this application, display of the interface 803 is not limited to be triggered by the rightward sliding operation, for example, may alternatively be triggered by a sliding operation performed after a touch and hold operation is performed on a right interface in the interface 403A, or another preset gesture operation.

In the interface 803, the tablet computer or the foldable mobile phone in the unfolded state may further display an interface 804 in response to a tap operation on the window interface of the application C. With reference to the interface 803 and the interface 804, it can be seen that different window interfaces may be switched and displayed in a primary display region. As shown in the interface 804, the window interface of the application C may be switched to be displayed in a primary display region 804a, and the window interface of the application A is automatically displayed in a secondary display region 804b in the spatial window form. It should be noted that, in this embodiment of this application, display of the interface 804 is not limited to be triggered by the tap operation, for example, may alternatively be triggered by a touch and hold operation on the window interface of the application A, or another preset gesture operation.

In Manner 2, a scenario in which a window size is adjusted is triggered based on the rightward sliding operation performed by the user. Therefore, a primary display region may be fixed on a left side of the screen, and different window interfaces may be switched and displayed in the primary display region by performing a tap operation on a window interface displayed in a secondary display region. In Manner 2, not only a primary/secondary relationship between display content on the screen can be improved and more attention of the user can be paid to display content in the primary display region, but also residual attention of the user on the secondary display region can be retained, thereby improving efficiency and continuity of multi-task processing.

Manner 3: The tablet computer or the foldable mobile phone in the unfolded state may display an interface 805 in response to a rightward sliding operation on a split-screen control included in the interface 403A. The interface 805 is the same as the interface 803. Details are not described herein again. It should be noted that, in this embodiment of this application, display of the interface 805 is not limited to be triggered by the rightward sliding operation, for example, may alternatively be triggered by a sliding operation performed after a touch and hold operation is performed on a right interface in the interface 403A, or another preset gesture operation.

In the interface 805, the tablet computer or the foldable mobile phone in the unfolded state may further display an interface 806 in response to a tap operation on the window interface of the application C. With reference to the interface 805 and the interface 806, it can be seen that different window interfaces may be switched and displayed in a primary display region, and a display location of the primary display region may further correspond to a location of a to-be-displayed target window interface in a split-screen interface. As shown in the interface 806, a primary display region 806a may be used to display the window interface of the application C. Based on a relative location relationship in which the window interface of the application A is on the left and the window interface of the application C is on the right in the split-screen interface shown in the interface 403A, the primary display region 806a may be displayed on the right side of the screen, and the window interface of the application A is automatically displayed in a secondary display region 806b in the spatial window form and is displayed on the left side of the screen.

In Manner 3, a scenario in which a window size is adjusted is triggered based on the rightward sliding operation performed by the user, and when a window interface displayed in a primary display region is switched, a display location of the primary display region may be determined based on a relative location relationship of split-screen interfaces. In this way, in a window interface switching scenario, the user can retain a memory of the relative location relationship of the split-screen interfaces, thereby improving continuity and efficiency in a multi-task processing scenario.

The interface 503 obtained in FIG. 5A-3 is used as an example. FIG. 9A and FIG. 9B are another diagram of an interface for adjusting a window size according to an embodiment of this application. Similar to FIG. 8A and FIG. 8B, FIG. 9A and FIG. 9B may also include three possible adjustment manners, as follows:
Manner 1: The tablet computer or the foldable mobile phone in the unfolded state may display an interface 901 in response to a leftward sliding operation on a split-screen control included in the interface 503. As shown in the interface 901, the interface 901 may include a primary display region 901a and a secondary display region 901b. The primary display region 901a may be used to display the window interface of the application D, and the secondary display region 901b may be used to separately display the window interface of the application A and the window interface of the application B in the spatial window form. In addition, a display size of the primary display region 901a is greater than a display size of the secondary display region 901b. It should be noted that, in this embodiment of this application, display of the interface 901 is not limited to be triggered by the leftward sliding operation, for example, may alternatively be triggered by a sliding operation performed after a touch and hold operation is performed on a left interface in the interface 503, or another preset gesture operation.

In the interface 901, the tablet computer or the foldable mobile phone in the unfolded state may further display an interface 902 in response to a tap operation on the window interface of the application A. With reference to the interface 901 and the interface 902, it can be seen that different window interfaces may be switched and displayed in a primary display region. As shown in the interface 902, the window interface of the application A may be switched to be displayed in a primary display region 902a, and the window interface of the application B and the window interface of the application D are separately automatically displayed in a secondary display region 902b in the spatial window form. It should be noted that, in this embodiment of this application, display of the interface 902 is not limited to be triggered by the tap operation, for example, may alternatively be triggered by a touch and hold operation on the window interface of the application A, or another preset gesture operation.

In Manner 1, a scenario in which a window size is adjusted is triggered based on the leftward sliding operation performed by the user. Therefore, a primary display region may be fixed on a right side of the screen, and different window interfaces may be switched and displayed in the primary display region by performing a tap operation on a window interface displayed in a secondary display region. In Manner 1, not only a primary/secondary relationship between display content on the screen can be improved and more attention of the user can be paid to display content in the primary display region, but also residual attention of the user on the secondary display region can be retained, thereby improving efficiency and continuity of multi-task processing.

Manner 2: The tablet computer or the foldable mobile phone in the unfolded state may display an interface 903 in response to a rightward sliding operation on a split-screen control included in the interface 503. As shown in the interface 903, the interface 903 may include a primary display region 903a, a secondary display region 903b1, and a secondary display region 903b2. The primary display region 903a may be used to display the window interface of the application A, the secondary display region 903b1 may be used to display the window interface of the application D in the spatial window form, and the secondary display region 903b2 may be used to display the window interface of the application B in the spatial window form. In addition, a display size of the primary display region 903a is greater than a total display size of the secondary display region 903b1 and the secondary display region 903b2. In this way, the application D and the application B are displayed in a side-facing orientation on left and right sides of the screen of the tablet computer or the foldable mobile phone in the unfolded state in the spatial window form, so that a three-dimensional sense of the window interfaces in space can be enhanced, and more content of the window interfaces can be displayed. In addition, residual attention on display content in the window interface of the application B and the window interface of the application D can be further retained, thereby improving continuity of multi-task processing. It should be noted that, in this embodiment of this application, display of the interface 903 is not limited to be triggered by the rightward sliding operation, for example, may alternatively be triggered by a sliding operation performed after a touch and hold operation is performed on a right interface in the interface 503, or another preset gesture operation.

In the interface 903, the tablet computer or the foldable mobile phone in the unfolded state may further display an interface 904 in response to a tap operation on the window interface of the application B. With reference to the interface 903 and the interface 904, it can be seen that different window interfaces may be switched and displayed in a primary display region. As shown in the interface 904, a primary display region 904a may be used to switch to display the window interface of the application B, a secondary display region 904b2 automatically displays the window interface of the application B in the spatial window form, and the window interface of the application D is kept being displayed in a secondary display region 904b1 in the spatial window form. It should be noted that, in this embodiment of this application, display of the interface 904 is not limited to be triggered by the tap operation, for example, may alternatively be triggered by a touch and hold operation on the window interface of the application B, or another preset gesture operation.

In Manner 2, a scenario in which a window size is adjusted is triggered based on the rightward sliding operation performed by the user. Therefore, a primary display region may be fixed in the middle of the screen, two secondary display regions may be respectively fixed on the left and right sides of the screen, and different window interfaces may be switched and displayed in the primary display region by performing a tap operation on a window interface displayed in a secondary display region. In Manner 2, not only a primary/secondary relationship between display content on the screen can be improved and more attention of the user can be paid to display content in the primary display region, but also residual attention of the user on the secondary display region can be retained, thereby improving efficiency and continuity of multi-task processing.

Manner 3: Different from Manner 2 in which the interface 903 is switched to the interface 904 for display, the tablet computer or the foldable mobile phone in the unfolded state may further display an interface 905 in response to a tap operation on the window interface of the application B. It can be seen from the interface 904 and the interface 905 that different window interfaces may be switched and displayed in a primary display region, a display location of the primary display region is fixed, and an adjacent relationship between every two window interfaces may be fixed. When different window interfaces are switched, a display location of a window interface may be updated in a surrounding form. As shown in the interface 905, a primary display region 905a may be used to display the window interface of the application B. Based on the interface 503 in which the window interface of the application B is stacked below the window interface of the application A, the window interface of the application A may be displayed in a secondary display region 905b1. Based on the interface 503 in which the window interface of the application A is located on a left side of the window interface of the application D, since the secondary display region 905b1 has displayed the window interface of the application A, the window interface of the application D may be displayed in a secondary display region 905b2 in a surrounding form. It should be noted that, in this embodiment of this application, display of the interface 905 is not limited to be triggered by the tap operation, for example, may alternatively be triggered by a touch and hold operation on the window interface of the application B, or another preset gesture operation.

In Manner 3, a scenario in which a window size is adjusted is triggered based on the rightward sliding operation performed by the user, a display location of a primary display region is fixedly displayed in the middle of the screen, and a plurality of window interfaces included in an interface may be displayed in the primary display region and two secondary display regions in the surrounding form in response to a user operation. In this way, in a window interface switching scenario, the user can retain a memory of a relative location relationship between the plurality of window interfaces, and fixity of the primary display region can be maintained, thereby improving continuity and efficiency in a multi-task processing scenario.

Manner 4: Different from Manner 2 in which the interface 903 is switched to the interface 904 for display, the tablet computer or the foldable mobile phone in the unfolded state may further display an interface 906 in response to a tap operation on the window interface of the application B. It can be seen from the interface 503 and the interface 906 that different window interfaces may be switched and displayed in a primary display region, and a display location of the primary display region may further correspond to a location of a to-be-displayed target window interface in a plurality of window interfaces. As shown in the interface 906, a primary display region 906a may be used to display the window interface of the application B. Based on the interface 503 in which the window interface of the application B is stacked below the window interface of the application A, that is, it may be understood as a relative location relationship in which the window interface of the application B is on a leftmost side, the window interface of the application A is in the middle, and the window interface of the application D is on a rightmost side, the primary display region 906a may be displayed on a left side of the screen, and the window interface of the application A and the window interface of the application D are separately automatically displayed in a secondary display region 906b in the spatial window form, and are displayed on a right side of the screen. It should be noted that, in this embodiment of this application, display of the interface 906 is not limited to be triggered by the tap operation, for example, may alternatively be triggered by a touch and hold operation on the window interface of the application B, or another preset gesture operation.

In Manner 4, a scenario in which a window size is adjusted is triggered based on the rightward sliding operation performed by the user, and a display location of a primary display region may be determined based on a relative location relationship between a plurality of window interfaces. In this way, in a window interface switching scenario, the user can retain a memory of the relative location relationship between the plurality of window interfaces, thereby improving continuity and efficiency in a multi-task processing scenario.

FIG. 8A, FIG. 8B, FIG. 9A, and FIG. 9B show different primary/secondary split-screen effect that includes a primary display region and a secondary display region and that is obtained based on different operation directions of user operations. In some other possible scenarios, in this embodiment of this application, different primary/secondary split-screen effect may be further implemented by performing an operation on a preset control. For example, in the scenario shown in FIG. 8A and FIG. 8B, a preset control 1 indicating that a primary display region is displayed on the left and a secondary display region is displayed on the right (which may also be understood as "large left and small right") may be further included, and a preset control 2 indicating that a primary display region is displayed on the right and a secondary display region is displayed on the left (which may also be understood as "small left and large right") may be further included. It may be understood that the interface 801 or the interface 802 may be displayed by performing an operation the preset control 1 or the preset control 2 by the user. In addition, a window interface displayed in the primary display region may still be switched by performing an operation on the preset control 1 or the preset control 2. For details, refer to the switching manner shown in FIG. 8A and FIG. 8B. Details are not described herein again. For another example, in the scenario shown in FIG. 9A and FIG. 9B, a preset control 1 indicating that a primary display region is displayed on the left and a secondary display region is displayed on the right (which may also be understood as "large left and small right") may be further included, and a preset control 2 indicating that a primary display region is displayed on the right and a secondary display region is displayed on the left (which may also be understood as "small left and large right") may be further included, and a preset control 3 indicating that a primary display region is displayed in the middle and secondary display regions are displayed on the left and right sides (which may also be understood as "one large and two small") may be further included. It may be understood that the interface 901 may be displayed by performing an operation on the preset control 2 by the user, and the interface 902 may be displayed by performing an operation on the preset control 3 by the user. In addition, a window interface displayed in the primary display region may still be switched by performing an operation on the preset control 1, the preset control 2, or the preset control 3. For details, refer to the switching manner shown in FIG. 9A and FIG. 9B. Details are not described herein again.

It should be noted that, based on the scenarios shown in FIG. 8A, FIG. 8B, FIG. 9A, and FIG. 9B, in this embodiment of this application, an original interface may be further restored and displayed by using a preset gesture operation and/or a preset control. For example, a split-screen interface shown in the interface 403A shown in FIG. 8A and FIG. 8B may be restored, or a plurality of window interfaces shown in the interface 503 shown in FIG. 9A may be restored. For example, the preset gesture operation may be, for example, a two-finger pinch operation on a primary display region. The preset control may be, for example, a split-screen control shown in the interface 403A in FIG. 8A and FIG. 8B. It may be understood that the split-screen interface shown in the interface 403A shown in FIG. 8A and FIG. 8B may be restored by performing a sliding operation on the split-screen control. Alternatively, the preset control may be a floating control that indicates a split-screen such as a dual split-screen interface.

Different from the window size adjustment manner described in FIG. 9A and FIG. 9B, this embodiment of this application may further provide an implementation of adjusting a window interface based on a hotspot region.

For example, a size of a window interface may be adjusted by performing a drag operation on an associated control between two adjacent window interfaces. Optionally, the associated control may be used to adjust a size or the like when the two adjacent window interfaces are displayed in the tiled form. The associated control may be, for example, in a form of a split-screen bar, or may be in another form. This is not limited in this application.

For example, FIG. 10A is a diagram of a principle of an interface display method according to an embodiment of this application. For example, the screen may be divided into a left hotspot region, a middle hotspot region, and a right hotspot region. An associated control may be dragged to different hotspot regions by performing a drag operation on the associated control, so that a size of a window interface can be adjusted, and the window interface can be changed between being displayed in a side-facing orientation and being displayed in the tiled form. In FIG. 10A, an example in which the screen includes two window interfaces is used.

As shown in an interface 100A in FIG. 10A, two window interfaces are included. A left side includes a window interface that is displayed in a side-facing orientation, and a right side includes a window interface displayed in the tiled form. In addition, an associated control, for example, an associated control 1, may be included between the two adjacent window interfaces.

In the interface 100A, an interface 100B1 or an interface 100B2 may be displayed in response to a sliding operation 1 of dragging the associated control 1 from a left hotspot region to a middle hotspot region. Optionally, when a left window interface is a window interface displayed in a side-facing orientation and the split-screen form, the interface 100B1 may be displayed. Alternatively, optionally, when a left window interface is a window interface displayed in a side-facing orientation and the full-screen form, the interface 100B2 may be displayed. In addition, in FIG. 10A, an example in which a right window interface supports screen splitting is used. It may be understood that if the right window interface does not support screen splitting, a size of the right window interface may not change, but the right window interface is translated rightward, and finally a part of content is displayed at a display location on the right side of the screen.

It can be seen from the interface 100B1 or the interface 100B2 that the sliding operation 1 not only can adjust the right window interface from being displayed in the full-screen form to being displayed in the split-screen form, but also can switch the left window interface from being displayed in a side-facing orientation to being displayed in the tiled form. It may be understood that, because the size of the right window interface is adjusted, another window interface may be displayed at a display location of a desktop. Therefore, the left window interface adjacent to the right window interface may be switched from being displayed in a side-facing orientation to being displayed in the tiled form. In this way, more window interfaces can be displayed on the desktop in the tiled display form.

In the interface 100B1, an interface 100C1 may be displayed in response to a sliding operation 2 of dragging the associated control 1 from the middle hotspot region to a right hotspot region. It can be seen from the interface 100C1 that the sliding operation 2 not only can adjust the left window interface from being displayed in the split-screen form to being displayed in the full-screen form, but also can switch the right window interface from being displayed in the tiled form to being displayed in a side-facing orientation. In addition, it may be understood that the right window interface is displayed in a side-facing orientation and the split-screen form. It may be understood that, because a size of the left window interface is adjusted, the right window interface cannot continue to be displayed on the desktop. Therefore, the right window interface may be switched from being displayed in the tiled form to being displayed in a side-facing orientation, so that the left window interface with a larger size can be displayed on the desktop.

Alternatively, in the interface 100B2, an interface 100C2 may be displayed in response to a sliding operation 3 of dragging the associated control 1 from the middle hotspot region to a right hotspot region. It can be seen from the interface 100C2 that the sliding operation 3 may be used to translate the left window interface, to switch the left window interface from being partially displayed on the screen to being fully displayed on the screen, and may be further used to switch the right window interface from being displayed in the tiled form to being displayed in a side-facing orientation. In addition, it may be understood that the right window interface is displayed in a side-facing orientation and the split-screen form. It may be understood that, because a display size of the left window interface is adjusted, the right window interface cannot continue to be displayed on the desktop. Therefore, the right window interface may be switched from being displayed in the tiled form to being displayed in a side-facing orientation, so that the left window interface with a larger size can be displayed on the desktop.

For another example, FIG. 10B-1 and FIG. 10B-2 are a diagram of another principle of an interface display method according to an embodiment of this application. For example, the screen may be divided into a left hotspot region, a middle hotspot region, and a right hotspot region. An associated control may be dragged to different hotspot regions by performing a drag operation on the associated control, so that a size of a window interface can be adjusted, and the window interface can be changed between being displayed in a side-facing orientation and being displayed in the tiled form. In FIG. 10B-1 and FIG. 10B-2, an example in which the screen includes three window interfaces is used.

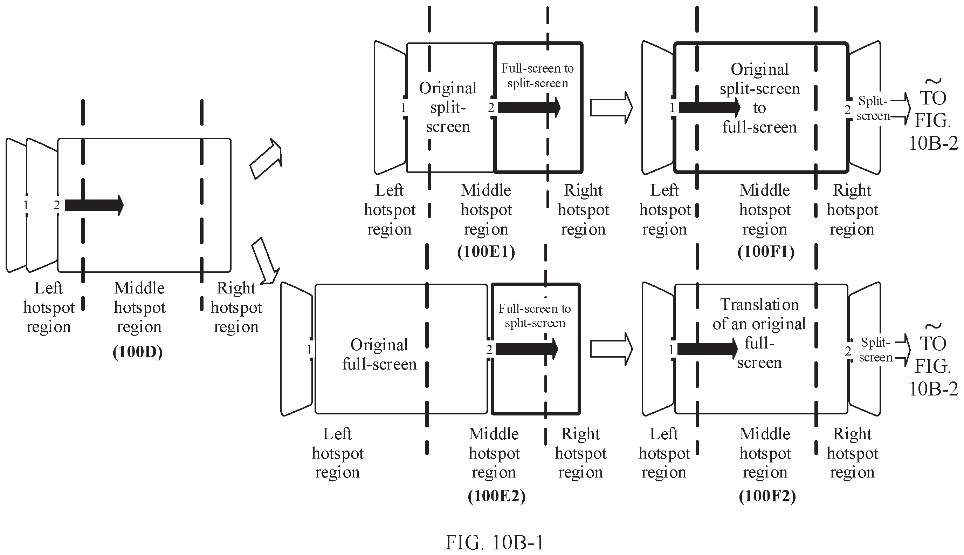

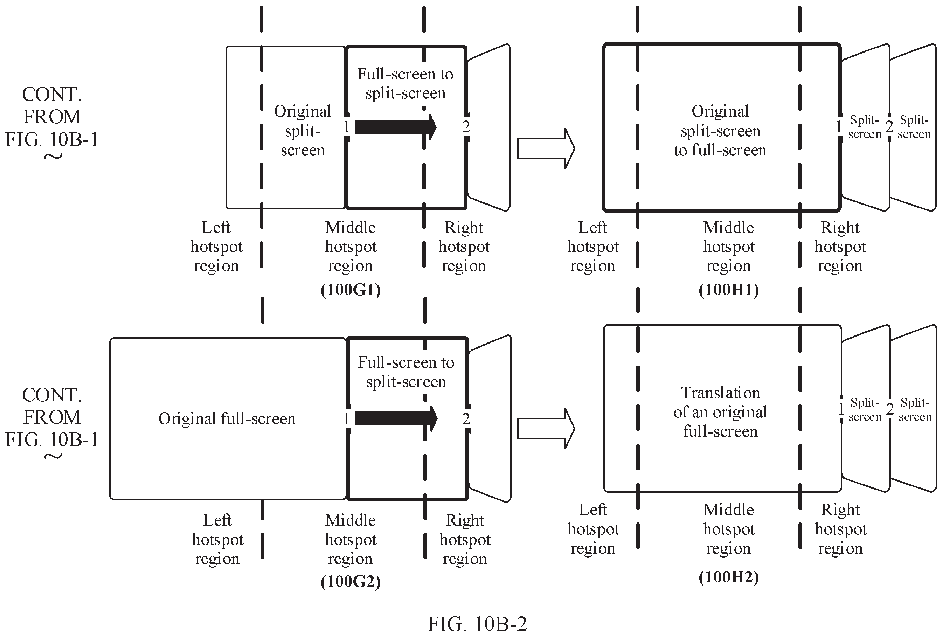

As shown in an interface 100D in FIG. 10B-1, three window interfaces are included. A left side includes two window interfaces displayed in a side-facing orientation, and a right side includes one window interface displayed in the tiled display form. In addition, associated controls, for example, an associated control 1 and an associated control 2, may be included between two adjacent window interfaces.

In the interface 100D, an interface 100E1 or an interface 100E2 may be displayed in response to a sliding operation 1 of dragging the associated control 2 from a left hotspot region to a middle hotspot region. Optionally, when a middle window interface is a window interface displayed in a side-facing orientation and the split-screen form, the interface 100E1 may be displayed. Alternatively, optionally, when a middle window interface is a window interface displayed in a side-facing orientation and the full-screen form, the interface 100E2 may be displayed.

It can be seen from the interface 100E1 or the interface 100E2 that the sliding operation 1 not only can adjust a right window interface from being displayed in the full-screen form to being displayed in the split-screen form, but also can switch the middle window interface from being displayed in a side-facing orientation to being displayed in the tiled form. It may be understood that, because a tiled display size of the right window interface is adjusted, another window interface may be displayed at a display location of a desktop. Therefore, the middle window interface adjacent to the right window interface may be switched from being displayed in a side-facing orientation to being displayed in the tiled form. In this way, more window interfaces can be displayed on the desktop in the tiled display form. The tiled display size may also be understood as maintaining the tiled display form and adjusting the size of the right window interface.

In the interface 100E1, an interface 100F1 may be displayed in response to a sliding operation 2 of dragging the associated control 2 from the middle hotspot region to a right hotspot region. It can be seen from the interface 100F1 that the sliding operation 2 not only can adjust the middle window interface from being displayed in the split-screen form to being displayed in the full-screen form, but also can switch the right window interface from being displayed in the tiled form to being displayed in a side-facing orientation. In addition, it may be understood that the right window interface is displayed in a side-facing orientation and the split-screen form. It may be understood that, because a tiled display size of the middle window interface is adjusted, the right window interface cannot continue to be displayed on the desktop. Therefore, the right window interface may be switched from being displayed in the tiled form to being displayed in a side-facing orientation, so that the middle window interface with a larger tiled display size can be displayed on the desktop.

Alternatively, in the interface 100E2, an interface 100F2 may be displayed in response to a sliding operation 3 of dragging the associated control 2 from the middle hotspot region to a right hotspot region. It can be seen from the interface 100F2 that the sliding operation 3 can adjust a tiled display area of the middle window interface, or may be understood as translating the middle window interface, to switch the middle window interface from being partially displayed on the screen to being fully displayed on the screen, and can also switch the right window interface from being displayed in the tiled form to being displayed in a side-facing orientation. In addition, it may be understood that the right window interface is displayed in a side-facing orientation and the split-screen form. It may be understood that, because a tiled display size of the middle window interface is adjusted, the right window interface cannot continue to be displayed on the desktop. Therefore, the right window interface may be switched from being displayed in the tiled form to being displayed in a side-facing orientation, so that the middle window interface with a larger tiled display size can be displayed on the desktop. The tiled display area may also be understood as maintaining the tiled display form and a size of the middle window interface, and adjusting a display area of the middle window interface on the screen.

In the interface 100F1, an interface 100G1 or an interface 100G2 may be displayed in response to a sliding operation 4 of dragging the associated control 1 from the left hotspot region to the middle hotspot region. Alternatively, in the interface 100F2, an interface 100G1 or an interface 100G2 may be displayed in response to a sliding operation 4 of dragging the associated control 1 from the left hotspot region to the middle hotspot region. It may be understood that the interface 100F 1 and the interface 100F2 are essentially a same interface.

It can be seen from the interface 100G1 or the interface 100G2 that the sliding operation 4 not only can adjust the middle window interface from being displayed in the full-screen form to being displayed in the split-screen form, but also can switch the left window interface from being displayed in a side-facing orientation to being displayed in the tiled form. It may be understood that, because a tiled display size of the middle window interface is adjusted, another window interface may be displayed at a display location of the desktop. Therefore, the left window interface may be switched from being displayed in a side-facing orientation to being display in the tiled form. In this way, more window interfaces can be displayed on the desktop in the tiled display form. A difference between the interface 100G1 and the interface 100G2 lies in that a left window interface in the interface 100G1 is displayed in the split-screen form, and a left window interface in the interface 100G2 is displayed in the full-screen form.

In the interface 100G1, an interface 100H1 may be displayed in response to a sliding operation 5 of dragging the associated control 1 from the middle hotspot region to a right hotspot region. It can be seen from the interface 100H1 that the sliding operation 5 not only can adjust the left window interface from being displayed in the split-screen form to being displayed in the full-screen form, but also can switch the middle window interface from being displayed in the tiled form to being displayed in a side-facing orientation. In addition, it may be understood that the middle window interface is displayed in a side-facing orientation and the split-screen form. It may be understood that, because a tiled display size of the left window interface is adjusted, the middle window interface cannot continue to be displayed on the desktop. Therefore, the middle window interface may be switched from being displayed in the tiled form to being displayed in a side-facing orientation, so that the middle window interface with a larger tiled display size can be displayed on the desktop. A difference between the interface 100H2 and the interface 100H1 lies in that a left window interface in the interface 100H1 is switched from the split-screen form to the full-screen form, and a left window interface in the interface 100H2 is switched from a window interface that is partially displayed in the full-screen form to a window interface that is fully displayed through translation.

Alternatively, in the interface 100G1, the interface 100H2 may be displayed in response to a sliding operation 6 of dragging the associated control 1 from the middle hotspot region to a right hotspot region. It can be seen from the interface 100H2 that the sliding operation 6 can adjust a tiled display area of the middle window interface, or may be understood as translating the left window interface, to switch the left window interface from being partially displayed on the screen to being fully displayed on the screen, or can switch the middle window interface from being displayed in the tiled form to being displayed in a side-facing orientation. In addition, it may be understood that the middle window interface is displayed in a side-facing orientation and the split-screen form. It may be understood that, because a tiled display size of the left window interface is adjusted, the middle window interface cannot continue to be displayed on the desktop. Therefore, the middle window interface may be switched from being displayed in the tiled form to being displayed in a side-facing orientation, so that the left window interface with a larger tiled display size can be displayed on the desktop.

It should be noted that FIG. 10B-1 and FIG. 10B-2 show only some possible examples, and three window interfaces and a dual split-screen display manner are used as an example. For another possible scenario, for example, a scenario of four window interfaces or more window interfaces or a scenario of a triple split-screen or multiple split-screens, refer to an implementation of FIG. 10B-1 and FIG. 10B-2. FIG. 10B-1 and FIG. 10B-2 are described from a perspective of a window interface. A window interface that can be actually displayed on the desktop of the electronic device may be determined based on a display size of the desktop. For a specific implementation, refer to content described in another embodiment.

In addition, it should be further noted that, in FIG. 10B-1 and FIG. 10B-2, division into three hotspot regions is merely used as an example. In this embodiment of this application, a quantity of hotspot regions obtained through division is not limited. For example, when the electronic device can support a triple split-screen, four hotspot regions or the like may be further divided. It may be understood that when the electronic device includes four hotspot regions, there may be two middle hotspot regions, and the rest may be deduced by analogy. When more hotspot regions are obtained through division, there may be more middle hotspot regions.

It may be understood that the following may be obtained from the content described in FIG. 10B-1 and FIG. 10B-2:
(1) Each sliding operation may adjust a tiled display size of at most one window interface, or may not adjust a tiled display size of a window interface, and may be used only for translation processing.

For example, if a window interface does not support screen splitting, only translation processing may be performed on the window interface through a sliding operation.

For another example, if a part of a window interface is originally displayed, the window interface may be first translated to be fully displayed through a sliding operation, for example, the middle window interface from the interface 100E2 to the interface 100F2.

In addition, it should be noted that, in FIG. 10B-1 and FIG10B-2, an example in which each sliding operation crosses one hotspot region is used. A quantity of hotspot regions that can be crossed by the sliding operation is not limited in this embodiment of this application. For example, the sliding operation shown in the interface 100D may be an operation of directly dragging the associated control 2 from the left hotspot region to the right hotspot region. In this case, the interface 100F 1 or the interface 100F2 may be displayed. It may be understood that, in this scenario, the sliding operation may adjust tiled display sizes of a maximum of two window interfaces, or may adjust a tiled display size of one window interface.

It can be seen from FIG. 10B-1 and FIG. 10B-2 that a tiled display size of a window interface filled with black is adjusted.

(2) A change between tiled display and display in a side-facing orientation does not affect a tiled display size of a window interface.

The interface 53A shown in FIG. 5E-3 is used as an example. Based on the principle described in FIG. 10B-1 and FIG. 10B-2, FIG. 10C is a diagram of a scenario of an interface display method according to an embodiment of this application. With reference to the interface 51A in FIG. 5E-1, the window interface of the application A in the interface 53A is displayed in the tiled form and the split-screen form before the window interface of the application A is displayed in a side-facing orientation. Therefore, the window interface of the application A in the interface 53A is a window interface in the split-screen form. In the interface 53A, an associated control between the application A and the application B is an associated control 3, and an associated control between the application B and the application C is an associated control 4.

In the interface 53A, an interface 1005A may be displayed in response to a sliding operation 7 of dragging the associated control 4 from a middle hotspot region to a right hotspot region. The interface 1005A includes: the window interface that is of the application A and that is displayed in a side-facing orientation and the split-screen form in a left secondary display region, the window interface that is of the application B and that is displayed in the tiled form and the full-screen form in a middle primary display region, and the window interface that is of the application C and that is displayed in a side-facing orientation and the split-screen form in a right secondary display region.

In the interface 1005A, an interface 1005B may be displayed in response to a sliding operation 8 of dragging the associated control 3 from a left hotspot region to the middle hotspot region. The interface 1005B includes a dual split-screen interface of the application A and the application B that are displayed in the tiled form in a primary display region on a left side, and the window interface that is of the application C and that is displayed in a side-facing orientation and the split-screen form in a secondary display region on a right side.

In the interface 1005B, an interface 1005C may be displayed in response to a sliding operation 9 of dragging the associated control 3 from the middle hotspot region to the right hotspot region. The interface 1005C includes: the window interface that is of the application A and that is displayed in the tiled form and the full-screen form in a primary display region on a left side, the window interface that is of the application B and that is displayed in a side-facing orientation and the split-screen form in a secondary display region on a right side, and the window interface that is of the application C and that cannot be not displayed on the screen and is displayed in a side-facing orientation and the split-screen form. In addition, the window interface of the application C is displayed in a hidden form.

It should be noted that FIG. 10C is merely a possible scenario. For another scenario, refer to the content described in FIG. 10B-1 and FIG. 10B-2. Details of the another scenario are not described in this application.

It should be further noted that a display location of an associated control is not limited in this embodiment of this application.

In an example, when two adjacent window interfaces are both displayed in the tiled form, an associated control is located between the two adjacent window interfaces. For example, there may be a gap between two window interfaces, and an associated control may be located in the middle of the gap.

In another example, one of two adjacent window interfaces is displayed in the tiled form, and the other is displayed in the spatial window form. In this case, an associated control is located at a location that is in one of the two adjacent window interfaces and that is close to the other window interface. Optionally, the associated control is located on the window interface displayed in the spatial window form, and is close to the window interface displayed in the tiled form. For example, the associated control may be displayed on the other window interface displayed in the spatial window form. Alternatively, the associated control may be displayed at a location adjacent to the window interface displayed in the tiled form. It may also be understood as that the associated control is displayed on an edge that is of the window interface displayed in the tiled form and that is adjacent to the window interface displayed in the spatial window form.

Optionally, a display location of an associated control may be set at a fixed interval from a window interface displayed in the tiled form. For example, when two adjacent window interfaces are both displayed in the tiled form, there may be a gap between the two window interfaces, and an associated control may be located in the middle of the gap. For another example, one of two adjacent window interfaces may be displayed in the tiled form, and the other is displayed in the spatial window form. In this case, an associated control may be displayed at a location at a fixed interval from the window interface displayed in the tiled form, for example, may be displayed on the other window interface displayed in the spatial window form. Alternatively, the associated control may be displayed at a location adjacent to the window interface displayed in the tiled form. It may also be understood as that the associated control may be displayed on an edge that is of the window interface displayed in the tiled form and that is adjacent to the window interface displayed in the spatial window form.

For another example, FIG. 10D is a diagram of another scenario of an interface display method according to an embodiment of this application. With reference to the interface 801 in FIG. 8A, a sliding operation may alternatively be an operation of dragging an associated control between the application A and the application C from a left hotspot region to a right hotspot region, to directly switch to display the interface 803. It may also be understood that a manner in which the application A is displayed in a side-facing orientation in a secondary display region on a left side and the application B is displayed in the tiled form in a primary display region on a right side is switched to a manner in which the application A is displayed in the tiled form in the primary display region on the left side and the application B is displayed in a side-facing orientation in the primary display region on the right side. For a specific implementation in FIG. 10D, refer to the foregoing descriptions of a sliding operation based on a hotspot region. Details are not described herein again.

It should be noted that, as shown in FIG. 10D, a quantity of hotspot regions that a drag operation on an associated control crosses is not limited in this embodiment of this application.

### (3) Window closing scenario based on multi-task processing

FIG. 11A is a diagram 1 of a scenario in which a window interface is closed according to an embodiment of this application. As shown in an interface 10A included in FIG. 11A, two window interfaces are included. A secondary display region on a left side includes the window interface that is of the application A and that is displayed in a side-facing orientation, and a primary display region on a right side includes the window interface that is of the application B and that is displayed in the tiled form. For example, an interface 10B may be displayed in response to a close operation on the window interface of the application B. It may be understood that, regardless of whether the window interface that is of the application A and that is displayed in a side-facing orientation is in the full-screen form or the split-screen form, because only the window interface of the application A remains after the window interface of the application B is closed, the window interface of the application A may be displayed on a desktop (or in a target display region) in the full-screen form.

FIG. 11B is a diagram 2 of a scenario in which a window interface is closed according to an embodiment of this application. As shown in an interface 11A included in FIG. 11B, three window interfaces are included. A secondary display region on a left side includes the window interface that is of the application B and that is displayed in a side-facing orientation, and a primary display region on a right side includes the window interface that is of the application D and that is displayed in the tiled form. In addition, on a left side of the window interface that is of the application B and that is displayed in a side-facing orientation, the window interface that is of the application A and that is displayed in a side-facing orientation is further included, but is not displayed on the screen. For example, both the window interface that is of the application A and that is displayed in a side-facing orientation and the window interface that is of the application B and that is displayed in a side-facing orientation are in the split-screen form. In response to a close operation on the window interface of the application D, an interface 11B may be displayed. It may be understood that, based on the closed window interface of the application D, display padding may be performed by using the window interface that is of the application A and that is displayed in a side-facing orientation and the window interface that is of the application B and that is displayed in a side-facing orientation. In addition, because both the window interface that is of the application A and that is displayed in a side-facing orientation and the window interface that is of the application B and that is displayed in a side-facing orientation are in the split-screen form, an interface obtained through display padding is a dual split-screen interface of the application A and the application B. Display padding may be understood as that a window interface is switched from being displayed in a side-facing orientation to being displayed in the tiled form.

It can be seen from FIG. 11B that, for example, display padding may also be performed by using the window interface that is of the application A shown in the interface 11A and that is not displayed on the screen.

FIG. 11C is a diagram 3 of a scenario in which a window interface is closed according to an embodiment of this application. As shown in an interface 12A included in FIG. 11C, three window interfaces are included. A secondary display region on a left side includes the window interface that is of the application B and that is displayed in a side-facing orientation, and a primary display region on a right side includes the window interface that is of the application D and that is displayed in the tiled form. In addition, on a left side of the window interface that is of the application B and that is displayed in a side-facing orientation, the window interface that is of the application A and that is displayed in a side-facing orientation is further included, but is not displayed on the screen. For example, the window interface that is of the application A and that is displayed in a side-facing orientation is in the full-screen form, and the window interface that is of the application B and that is displayed in a side-facing orientation is in the split-screen form. In response to a close operation on the window interface of the application D, an interface 12B may be displayed. It may be understood that, based on the closed window interface of the application D, display padding may be performed by using the window interface that is of the application B and that is displayed in a side-facing orientation. In addition, because the window interface that is of the application B and that is displayed in a side-facing orientation is in the split-screen form, and cannot occupy the entire screen, display padding may continue to be performed by using the window interface that is of the application A and that is displayed in a side-facing orientation. Therefore, an interface obtained through display padding is a dual split-screen interface of the window interface that is of the application A and that is displayed in the full-screen form and the window interface that is of the application B and that is displayed in the split-screen form. It may be understood that, because the window interface of the application A is in the full-screen form, only a part of content can be displayed.

FIG. 11D is a diagram 4 of a scenario in which a window interface is closed according to an embodiment of this application. As shown in an interface 13A included in FIG. 11D, three window interfaces are included. A secondary display region on a left side includes the window interface that is of the application B and that is displayed in a side-facing orientation, and a primary display region on a right side includes the window interface that is of the application D and that is displayed in the tiled form. In addition, on a left side of the window interface that is of the application B and that is displayed in a side-facing orientation, the window interface that is of the application A and that is displayed in a side-facing orientation is further included, but is not displayed on the screen. For example, the window interface that is of the application A and that is displayed in a side-facing orientation is in the split-screen form, and the window interface that is of the application B and that is displayed in a side-facing orientation is in the full-screen form. In response to a close operation on the window interface of the application D, an interface 13B may be displayed. It may be understood that, based on the closed window interface of the application D, display padding may be performed by using the window interface that is of the application B and that is displayed in a side-facing orientation. In addition, because the window interface that is of the application B and that is displayed in a side-facing orientation is in the full-screen form and can occupy the entire screen, the window interface that is of the application A and that is displayed in a side-facing orientation continues to be displayed in a side-facing orientation.

FIG. 11E is a diagram 5 of a scenario in which a window interface is closed according to an embodiment of this application. As shown in an interface 14A included in FIG. 11E, three window interfaces are included. A secondary display region on a left side includes the window interface that is of the application A and that is displayed in a side-facing orientation, a primary display region in the middle includes the window interface that is of the application B and that is displayed in the tiled form, and a secondary display region on a right side includes the window interface that is of the application C and that is displayed in a side-facing orientation. For example, both the window interface that is of the application A and that is displayed in a side-facing orientation and the window interface that is of the application B and that is displayed in a side-facing orientation are in the split-screen form. In response to a close operation on the window interface of the application B, an interface 14B may be displayed. It may be understood that, based on the closed window interface of the application B, display padding may be performed by using the window interface that is of the application A and that is displayed in a side-facing orientation and the window interface that is of the application C and that is displayed in a side-facing orientation. In addition, because both the window interface that is of the application A and that is displayed in a side-facing orientation and the window interface that is of the application C and that is displayed in a side-facing orientation are in the split-screen form, an interface obtained through display padding is a dual split-screen interface of the application A and the application C.

FIG. 11F is a diagram 6 of a scenario in which a window interface is closed according to an embodiment of this application. As shown in an interface 15A included in FIG. 11F, three window interfaces are included. A secondary display region on a left side includes the window interface that is of the application A and that is displayed in a side-facing orientation, a primary display region in the middle includes the window interface that is of the application B and that is displayed in the tiled form, and a secondary display region on a right side includes the window interface that is of the application C and that is displayed in a side-facing orientation. For example, the window interface that is of the application A and that is displayed in a side-facing orientation is in the split-screen form, and the window interface that is of the application B and that is displayed in a side-facing orientation is in the full-screen form. In response to a close operation on the window interface of the application B, an interface 15B1 or an interface 15B2 may be displayed. It may be understood that, based on the closed window interface of the application B, display padding may be performed by using the window interface that is of the application A and that is displayed in a side-facing orientation or the window interface that is of the application C and that is displayed in a side-facing orientation. Optionally, when display padding is performed by using the window interface that is of the application A and that is displayed in a side-facing orientation, the interface 15B1 may be displayed. It can be seen from the interface 15B1 that, because the window interface that is of the application A and that is displayed in a side-facing orientation is in the split-screen form and cannot occupy the entire screen after display padding, display padding may continue to be performed by using the window interface that is of the application C and that is displayed in a side-facing orientation. However, because the window interface of the application C is in the full-screen form, only a part of content can be displayed. Optionally, when display padding is performed by using the window interface that is of the application C and that is displayed in a side-facing orientation, the interface 15B2 may be displayed. Because the window interface that is of the application C and that is displayed in a side-facing orientation is in the full-screen form and can occupy the entire screen after display padding, the window interface that is of the application A and that is displayed in a side-facing orientation continues to be displayed in a side-facing orientation.

FIG. 11G is a diagram 7 of a scenario in which a window interface is closed according to an embodiment of this application. As shown in an interface 16A included in FIG. 11G, three window interfaces are included. A secondary display region on a left side includes the window interface that is of the application A and that is displayed in a side-facing orientation, and a primary display region on a right side includes a dual split-screen interface of the application B and the application C. For example, the window interface that is of the application A and that is displayed in a side-facing orientation is in the split-screen form. In response to a close operation on the window interface of the application B, an interface 16B may be displayed. It may be understood that, based on the closed window interface of the application C, display padding may be performed by using the window interface that is of the application A and that is displayed in a side-facing orientation. In addition, because the window interface that is of the application A and that is displayed in a side-facing orientation is in the split-screen form, an interface obtained through display padding is a dual split-screen interface of the application A and the application B.

FIG. 11H is a diagram 8 of a scenario in which a window interface is closed according to an embodiment of this application. As shown in an interface 17A included in FIG. 11H, three window interfaces are included. A secondary display region on a left side includes the window interface that is of the application A and that is displayed in a side-facing orientation, and a primary display region in the middle includes a dual split-screen interface of the application B and the application C. For example, the window interface that is of the application A and that is displayed in a side-facing orientation is in the split-screen form. In response to a close operation on the window interface of the application C, an interface 17B may be displayed. It may be understood that, based on the closed window interface of the application C, display padding may be performed by using the window interface that is of the application A and that is displayed in a side-facing orientation. In addition, because the window interface that is of the application A and that is displayed in a side-facing orientation is in the full-screen form, an interface obtained through display padding is a dual split-screen interface of the window interface that is of the application A and that is displayed in the full-screen form and the window interface that is of the application B and that is displayed in the split-screen form. It may be understood that, because the window interface of the application A is in the full-screen form, only a part of content can be displayed.

It should be noted that, it can be learned from the foregoing description content in FIG. 11A to FIG. 11H that, when a window interface in a primary display region is closed, display padding may be performed by using a window interface displayed in a side-facing orientation. For example, a display interface for display padding may be determined based on at least one of the following information:
(1) A priority of a window interface displayed in a side-facing orientation. For example, a priority of a window interface displayed in a side-facing orientation on the screen is higher than a priority of a window interface that is displayed in a side-facing orientation and that is not displayed on the screen. For another example, a priority of a window interface that is displayed in a side-facing orientation and that is adjacent to a closed window interface is higher than a priority of a window interface that is displayed in a side-facing orientation and that is not adjacent to the closed window interface.
(2) A form of a window interface displayed in a side-facing orientation may include, for example, the full-screen form, the dual split-screen form, or the triple split-screen form.
(3) Whether a display location on the screen is fully occupied. It may be understood that, when the display location on the screen is fully occupied, it indicates that display padding ends; or when the display location on the screen is not fully occupied, display padding may continue to be performed until the display location of the screen is fully occupied. In addition, when the display location on the screen is not fully occupied and there is no window interface that is displayed in a side-facing orientation and that is used for display padding, a size of a displayed window interface may be adjusted. For example, two triple split-screen window interfaces may be automatically adjusted to a dual split-screen window interface. For another example, a dual split-screen window interface may be automatically adjusted to a full-screen window interface, as shown in FIG. 11A.

In addition, in another possible scenario, other processing may be further performed on various possible display interfaces provided above. For example, in a multi-task processing process, a window interface may be fixed, and a display location, a display size, and a display form of the fixed window interface do not change. For example, the electronic device is a large-screen device such as a trifold mobile phone or a central control screen, and supports a triple split-screen. FIG. 12 is a diagram of a scenario in which a window interface is fixed according to an embodiment of this application.

An interface 1201 in FIG. 12 may include a primary display region and a secondary display region. The primary display region may be used to display a triple split-screen interface of the application A, the application B, and the application C, and the secondary display region may be used to display the window interface of the application D in the spatial window form.

In an example, the window interface of the application A is fixed. For example, the window interface of the application A may include a fixed control 1200. It should be noted that a display form of the fixed control 1200 is not limited in this embodiment of this application, for example, may be in a form of a pin (PIN) shown in the interface 1201. It may be understood that the fixed control 1200 may alternatively be in another form. For another example, the window interface of the application A may alternatively be indicated as a fixed interface in another display form, for example, by adding filling effect, shadow effect, or contour effect. A form that indicates the fixed window interface is not limited in this application.

In the interface 1201, the large-screen device such as the trifold mobile phone or the central control screen may display an interface 1203 through the interface 1202 in response to a leftward sliding operation on the window interface of the application C. The interface 1202 is an intermediate transition interface.

It can be seen from the interface 1201, the interface 1202, and the interface 1203 that the window interface of the application A is fixed at a left display location, and other window interfaces may be switched in response to a user operation.

It may be understood that, when there is a fixed window interface on the screen, display of the fixed window interface does not change, and a window interface at a display location other than a display location corresponding to the fixed window interface, for example, a middle display location and a right display location in FIG. 12, may be switched through a user operation. It should be noted that, although the window interfaces of the application B, the application C, and the application D shown in FIG. 12 are switched, when there is a fixed window interface on the screen, an interface display switching manner is not limited in this embodiment of this application. For example, for interface display, refer to the interface display manners described in the foregoing scenarios, for example, the scenario in which a window interface is added, the scenario in which a size of a window interface is adjusted, or the scenario in which a window interface is closed. For a specific implementation, refer to the foregoing description content. Details are not described herein again in this application.

It should be noted that the possible scenarios described above are merely intended to explain the method provided in embodiments of this application, and the foregoing scenarios are not limited during specific implementation. For example, different scenarios may be combined. For example, an idea of switching a display location of a window interface based on a leftward sliding operation shown in FIG. 12 is also applicable to a scenario in which a fixed window interface is not included. For another example, the fixed window interface shown in FIG. 12 is further applicable to a dual split-screen scenario.

Based on the foregoing content that describes, with reference to a plurality of scenarios, interface processing effect that can be achieved by using the method provided in this embodiment of this application, the following describes an implementation process of the interface display method provided in this application, to describe how to achieve the interface processing effect shown in FIG. 4A to FIG. 12 by using the method provided in this application, so that a new split-screen interaction manner can be provided, and efficiency and continuity of multi-task processing can be improved.

FIG. 13 is a schematic flowchart of an interface display method according to an embodiment of this application. A procedure may include the following steps:
Step 1301: Detect a first operation on a first interface, where the first interface includes M window interfaces, and M is a positive integer greater than 1.
   For example, the first interface may be, for example, the interface 403A shown in FIG. 8A and FIG. 8B or the interface 503 shown in FIG. 9A.
Step 1302: Display a second interface in response to the first operation, where the second interface includes a first primary display region and a first secondary display region, a size of the first primary display region is greater than a size of the first secondary display region, the first primary display region is used to display N1 window interfaces in the M window interfaces in a tiled form, and the first secondary display region is used to display all or a part of window interfaces in the M window interfaces other than the N1 window interfaces. Optionally, N1 is 1. Optionally, N1 is greater than 1, and the N1 window interfaces are displayed in the first primary display region in a split-screen form.

In the first secondary display region, all or a part of window interfaces other than a first window interface are displayed in a spatial window form, where the spatial window form is a form of flipping a window interface toward an inner side of a screen of an electronic device.

For example, the second interface may be, for example, the interface 801, the interface 803, or the interface 805 shown in FIG. 8A and FIG. 8B, or may be, for example, the interface 901 or the interface 903 shown in FIG. 9A.

For specific implementation processes of step 1301 and step 1302, refer to the foregoing embodiments. Details are not described again in this application.

Based on the foregoing embodiments, this application further provides an electronic device. The electronic device includes a plurality of functional modules, and the plurality of functional modules interact with each other, to implement functions performed by the electronic device in the methods described in embodiments of this application. The plurality of functional modules may be implemented based on software, hardware, or a combination of software and hardware, and the plurality of functional modules may be randomly combined or divided based on a specific implementation, for example, may perform steps 1301 and 1302 performed by the electronic device in the embodiment shown in FIG. 13.

Based on the foregoing embodiments, this application further provides an electronic device. The electronic device includes at least one processor and at least one memory, the at least one memory stores computer program instructions, and when the electronic device runs, the at least one processor performs functions performed by the electronic device in the methods described in embodiments of this application, for example, performs steps 1301 and 1302 performed by the electronic device in the embodiment shown in FIG. 13.

Based on the foregoing embodiments, this application further provides a computer program product. The computer program product includes a computer program (which may also be referred to as code or instructions), and when the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An interface display method, applied to an electronic device, and comprising:
detecting a first operation on a first interface, wherein the first interface comprises M window interfaces, and M is a positive integer greater than 1; and
displaying a second interface in response to the first operation, wherein the second interface comprises a first primary display region and a first secondary display region, a size of the first primary display region is greater than a size of the first secondary display region, the first primary display region is used to display N1 window interfaces in the M window interfaces in a tiled form, the first secondary display region is used to display all or a part of window interfaces in the M window interfaces other than the N1 window interfaces, and N1 is less than M, wherein
in the first secondary display region, all or a part of the window interfaces other than the N1 window interfaces are displayed in a spatial window form, wherein the spatial window form is a form of flipping a window interface toward an inner side of a screen of the electronic device.

2. The method according to claim 1, wherein N1 is 1.

3. The method according to claim 1, wherein N1 is greater than 1, and the N1 window interfaces are displayed in the first primary display region in a split-screen form.

4. The method according to any one of claims 1 to 3, wherein the second interface comprises L first secondary display regions, L is 1 or 2, a quantity of other window interfaces is greater than L, and one of the other window interfaces is displayed in each first secondary display region.

5. The method according to any one of claims 1 to 4, wherein
the M window interfaces in the first interface are displayed in the split-screen form; or
the first interface comprises a second primary display region and a second secondary display region, a size of the second primary display region is greater than a size of the second secondary display region, the second primary display region is used to display N2 window interfaces in the M window interfaces in the tiled form, the second secondary display region is used to display, in the spatial window form, all or a part of window interfaces in the M window interfaces other than the N2 window interfaces, N2 is less than M, and the N2 window interfaces are not completely the same as the N1 window interfaces.

6. The method according to any one of claims 1 to 5, wherein the first operation is a drag operation on a first control, the first control is a control associated with a first window interface and a second window interface, and the first window interface and the second window interface are adjacent window interfaces; and
displaying the second interface in response to the first operation comprises:
adjusting the first window interface in the first interface in one of the following manners:
adjusting a tiled display size of the first window interface, and
switching the first window interface from being displayed in the spatial window form to being displayed in the tiled form, wherein
the first window interface is one of the N1 window interfaces in the second interface; and
adjusting the second window interface in the first interface in one of the following manners:
switching the second window interface from being display in the tiled form to being displayed in the spatial window form, and
switching the second window interface from being displayed in the spatial window form to being displayed in the tiled form, wherein the second window interface is one of the N1 window interfaces in the second interface.

7. The method according to claim 6, wherein
the first control is located between the first window interface and the second window interface; or
the first control is located, on one of the first window interface and the second window interface, at a location near the other window interface.

8. The method according to claim 6 or 7, wherein a screen region of the electronic device comprises X hotspot regions, X is greater than 2, and the X hotspot regions comprise a left hotspot region, one or more middle hotspot regions, and a right hotspot region; and
the first window interface is located on a left side of the second window interface, and when the first control is dragged to the right hotspot region, the second window interface is switched from being displayed in the tiled form to being displayed in the spatial window form, and the second window interface is displayed in a right first secondary display region; or
the first window interface is located on a right side of the second window interface, and when the first control is dragged to the left hotspot region, the second window interface is switched from being displayed in the tiled form to being displayed in the spatial window form, and the second window interface is displayed in a left first secondary display region; or
the second window interface is displayed in the first interface in the spatial window form, and when the first control is dragged to the middle hotspot region, the second window interface and the first window interface are displayed in the split-screen form.

9. The method according to claim 8, wherein a maximum quantity of split screens supported by the electronic device is Y, and X is equal to Y plus 1.

10. The method according to any one of claims 1 to 9, wherein the method further comprises:
in response to a close operation on a third window interface in the N1 window interfaces, switching at least one window interface in the first secondary display region from being displayed in the spatial window form to being displayed in the tiled form.

11. The method according to any one of claims 1 to 10, wherein the method further comprises:
detecting a first selection operation on a fourth window interface in the first secondary display region, wherein the fourth window interface is one of the other window interfaces; and
displaying a third interface in response to the first selection operation, wherein the third interface comprises a third primary display region and a third secondary display region, a size of the third primary display region is greater than a size of the third secondary display region, the third primary display region is used to display N3 window interfaces in the M window interfaces in the tiled form, the N3 window interfaces comprise the fourth window interface, N3 is a positive integer, the third secondary display region is used to display all or a part of window interfaces in the M window interfaces other than the N3 window interfaces, and N3 is less than M, wherein
in the third secondary display region, all or a part of the window interfaces other than the N3 window interfaces are displayed in the spatial window form.

12. The method according to claim 11, wherein N3 is 1.

13. The method according to claim 11, wherein
the fourth window interface is displayed in the split-screen form before being displayed in the first secondary display region in the spatial window form, and after the first selection operation is performed, the fourth window interface is displayed in the third primary display region in the split-screen form, wherein N3 is greater than 1; or
the fourth window interface is displayed in a full-screen form before being displayed in the first secondary display region in the spatial window form, and after the first selection operation is performed, the fourth window interface is displayed in the third primary display region in the full-screen form, wherein N3 is 1.

14. The method according to claim 11, wherein N3 is greater than 1, and the first secondary display region is located on a first side of the screen; and
the N3 window interfaces displayed in the third primary display region are obtained in the following manner: translating, by using the fourth window interface as a start window interface, a window interface that is located on a second side and that is adjacent to the fourth window interface toward a direction of the second side, wherein
the first side and the second side are two opposite sides of the screen.

15. The method according to any one of claims 11 to 14, wherein
a display location of the third primary display region is the same as a display location of the first primary display region; or
a display location of the third primary display region is different from a display location of the first primary display region.

16. The method according to any one of claims 1 to 15, wherein
the display location of the first primary display region is preset; or
the display location of the first primary display region is determined based on the first operation.

17. The method according to claim 1 or 16, wherein
when the first operation is a rightward sliding operation, the first primary display region is located on a left side of the second interface, and the first secondary display region is located on a right side of the second interface; or
when the first operation is a leftward sliding operation, the first primary display region is located on a right side of the second interface, and the first secondary display region is located on a left side of the second interface.

18. The method according to claim 17, wherein M is 2, the first interface is a split-screen interface of a fifth window interface and a sixth window interface, and the fifth window interface is on a left side of the sixth window interface; and
when the first operation is the rightward sliding operation, the fifth window interface is displayed in the first primary display region, and the sixth window interface is displayed in the first secondary display region; or
when the first operation is the leftward sliding operation, the sixth window interface is displayed in the first primary display region, and the fifth window interface is displayed in the first secondary display region.

19. The method according to claim 1 or 16, wherein the M window interfaces are at least three window interfaces, the first interface comprises a first display region and a second display region, the first display region is used to display a seventh window interface, and the second display region is used to display, in a stacked form, window interfaces in the M window interfaces other than the seventh window interface; and
when the first operation is a rightward sliding operation, and the first display region is displayed on a left side, the display location of the first primary display region is located on a left side of the second interface, a display location of the first secondary display region is located on a right side of the second interface, and the N1 window interfaces are seventh window interfaces; and/or
when the first operation is the rightward sliding operation, and the second display region is displayed on a left side, the display location of the first primary display region is in the middle of the second interface, the second interface comprises two first secondary display regions, display locations of the two first secondary display regions are respectively located on the left side and the right side of the second interface, and the N1 window interfaces are window interfaces displayed at the top in the second display region; and/or
when the first operation is a leftward sliding operation, and the first display region is displayed on a right side, the display location of the first primary display region is located on the right side of the second interface, the display location of the first secondary display region is located on the left side of the second interface, and the N1 window interfaces are seventh window interfaces; and/or
when the first operation is the leftward sliding operation, and the second display region is displayed on a right side, the display location of the first primary display region is in the middle of the second interface, the second interface comprises two first secondary display regions, display locations of the two first secondary display regions are respectively located on the left side and the right side of the second interface, and the N1 window interfaces are window interfaces displayed at the top in the second display region.

20. The method according to claim 19, wherein the method further comprises:
performing a second operation in the second display region, to update the window interfaces in the second display region from being displayed in the stacked form to being displayed in the spatial window form.

21. The method according to claim 20, wherein
when the second display region is displayed on the left side, the second operation is the rightward sliding operation; or
when the second display region is displayed on the right side, the second operation is the leftward sliding operation.

22. The method according to any one of claims 19 to 21, wherein the method further comprises:
performing a third operation in the second display region, to update the window interfaces in the second display region from being displayed in a first stacking order to being displayed in a second stacking order, wherein
the first stacking order is that an eighth window interface is stacked and displayed on the top, and the second stacking order is that a ninth window interface is stacked and displayed on the top.

23. The method according to claim 22, wherein the third operation is a tap operation on the ninth window interface.

24. The method according to any one of claims 1 to 23, wherein the method further comprises:
detecting a fourth operation on the second interface, wherein the fourth operation is used to add a tenth window interface; and
displaying a fourth interface in response to the fourth operation, wherein the fourth interface comprises the M window interfaces and the tenth window interface.

25. The method according to claim 24, wherein
the fourth interface comprises a fourth primary display region and a fourth secondary display region, a size of the fourth primary display region is greater than a size of the fourth secondary display region, the fourth primary display region is used to display the tenth window interface in the tiled form, and the fourth secondary display region is used to display all or a part of the M window interfaces in the spatial window form.

26. The method according to any one of claims 1 to 25, wherein before detecting the first operation on the first interface, the method further comprises:
detecting a fifth operation on a fifth interface, and displaying a sixth interface in response to the fifth operation on the fifth interface, wherein the sixth interface comprises a fifth primary display region and a fifth secondary display region, a size of the fifth primary display region is greater than a size of the fifth secondary display region, the fifth primary display region is used to display, in the tiled form, a thumbnail of an alternative window interface and/or an alternative application icon, and the fifth secondary display region is used to display, in the spatial window form, at least one window interface comprised in the fifth interface; and
detecting a second selection operation in the fifth primary display region, and displaying the first interface in response to the second selection operation in the fifth primary display region, wherein the M window interfaces comprised in the first interface comprise the at least one window interface comprised in the fifth interface and an eleventh window interface, and the eleventh window interface is a window interface corresponding to a thumbnail of an alternative window interface selected by using the second selection operation, or the eleventh window interface is a window interface of an application corresponding to an alternative application icon selected by using the second selection operation.

27. The method according to claim 25, wherein
the fifth operation is a bottom two-finger pinch operation, and the second selection operation is a tap operation on the thumbnail or the alternative application icon corresponding to the eleventh window interface; and/or
the fifth operation is a drag operation on first display content in a twelfth window interface in the fifth interface, and the drag operation is used to drag the first display content and trigger gradual switching from the fifth interface to the sixth interface; and the second selection operation is an operation of dragging the first display content to the thumbnail or the alternative application icon corresponding to the eleventh window interface.

28. The method according to claim 26 or 27, wherein the at least one window interface comprised in the fifth interface corresponds to at least one application;
an application corresponding to the thumbnail of the alternative window interface is associated with the at least one application; and
an application corresponding to the alternative application icon is associated with the at least one application.

29. The method according to claim 28, wherein the application corresponding to the thumbnail of the alternative window interface is an application running in a background.

30. The method according to any one of claims 1 to 25, wherein before detecting the first operation on the first interface, the method further comprises:
detecting a fifth operation on a fifth interface, and displaying a sixth interface in response to the fifth operation on the fifth interface, wherein the sixth interface comprises a fifth primary display region and a fifth secondary display region, a size of the fifth primary display region is greater than a size of the fifth secondary display region, the fifth primary display region is used to display, in the tiled form, a thumbnail of an alternative window interface and/or an alternative application icon, the fifth secondary display region is used to display, in the spatial window form, all or a part of a plurality of window interfaces comprised in the fifth interface, and the plurality of window interfaces comprised in the fifth interface comprise a twelfth window interface; and
detecting a replacement operation in the fifth primary display region, and displaying the first interface in response to the replacement operation in the fifth primary display region, wherein the M window interfaces comprised in the first interface comprise an eleventh window interface and do not comprise the twelfth window interface, and the eleventh window interface is a window interface corresponding to a thumbnail of an alternative window interface selected by using the replacement operation, or the eleventh window interface is a window interface of an application corresponding to an alternative application icon selected by using the second selection operation.

31. The method according to any one of claims 1 to 30, wherein the first interface is a first split-screen interface obtained based on the M window interfaces.

32. The method according to claim 31, wherein the method further comprises:
displaying an eighth interface in response to a sixth operation on the first split-screen interface, wherein the sixth operation is used to add a thirteenth window interface; and
the eighth interface comprises a sixth primary display region and a sixth secondary display region, a size of the sixth primary display region is greater than a size of the sixth secondary display region, the sixth primary display region is used to display, in the tiled form, a second split-screen interface comprising the thirteenth window interface, and the sixth secondary display region is used to display all or a part of window interfaces that are in the M window interfaces and that do not belong to the second split-screen interface, wherein
in the sixth secondary display region, all or a part of the window interfaces that are in the first split-screen interface and that do not belong to the second split-screen interface are displayed in the spatial window form.

33. An electronic device, comprising at least one processor, wherein the at least one processor is coupled to at least one memory, and the at least one processor is configured to read a computer program stored in the at least one memory, to perform the method according to any one of claims 1 to 32.

34. A computer-readable storage medium, wherein the computer-readable storage medium stores instructions, and when the instructions are run on a computer, the computer is enabled to perform the method according to any one of claims 1 to 32.

35. A computer program product comprising instructions, wherein when the computer program product runs on a computer, the computer is enabled to perform the method according to any one of claims 1 to 32.
